(19) Europäisches Patentamt
European Patent Office
Office européen des brevets

(11) EP 2 052 044 B1

(12) **EUROPEAN PATENT SPECIFICATION**

(45) Date of publication and mention of the grant of the patent:
**06.02.2019 Bulletin 2019/06**

(21) Application number: **08765738.3**

(22) Date of filing: **12.06.2008**

(51) Int Cl.:
***C09D 11/38** (2014.01)* ***B41M 5/50** (2006.01)*
***B41M 5/52** (2006.01)* ***B41M 5/00** (2006.01)*
***B41J 2/01** (2006.01)*

(86) International application number:
**PCT/JP2008/061178**

(87) International publication number:
**WO 2008/153203 (18.12.2008 Gazette 2008/51)**

# (54) RECORDING INK, INK CARTRIDGE, INK MEDIA SET, INK- JET RECORDING METHOD AND INK-JET RECORDING APPARATUS

AUFZEICHNUNGSTINTE, TINTENPATRONE, TINTENMEDIENSATZ, TINTENSTRAHLAUFZEICHNUNGSVERFAHREN UND TINTENSTRAHLAUFZEICHNUNGSGERÄT

ENCRE D'IMPRESSION, CARTOUCHE D'ENCRE, ENSEMBLE DE MILIEUX D'ENCRE, PROCÉDÉ D'IMPRESSION PAR JET D'ENCRE ET APPAREIL D'IMPRESSION PAR JET D'ENCRE

(84) Designated Contracting States:
**DE ES FR GB IT NL**

(30) Priority: **12.06.2007 JP 2007155114**

(43) Date of publication of application:
**29.04.2009 Bulletin 2009/18**

(73) Proprietor: **Ricoh Company, Ltd.**
**Tokyo 143-8555 (JP)**

(72) Inventors:
- **GOTO, Hiroshi**
  **Atsugi-shi**
  **Kanagawa 243-0023 (JP)**
- **NAGAI, Kiyofumi**
  **Machida-shi**
  **Tokyo 194-0044 (JP)**
- **ARUGA, Tamotsu**
  **Mishima-shi**
  **Shizuoka 411-0802 (JP)**
- **KOYANO, Masayuki**
  **Zama-shi**
  **Kanagawa 228-0001 (JP)**

(74) Representative: **Held, Stephan et al**
**Meissner Bolte Patentanwälte**
**Rechtsanwälte Partnerschaft mbB**
**Widenmayerstraße 47**
**80538 München (DE)**

(56) References cited:
**WO-A1-2006/030978** **WO-A1-2007/049782**
**WO-A1-2007/072951** **WO-A1-2009/082000**
**JP-A- 09 111 166** **JP-A- 2000 095 983**
**JP-A- 2002 337 449** **JP-A- 2003 096 343**
**JP-A- 2006 016 412** **JP-A- 2006 096 932**
**JP-A- 2007 119 574** **JP-A- 2007 119 574**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 052 044 B1

**Description**

Technical Field

The present invention relates to a recording ink, an ink media set, an ink cartridge, an ink-jet recording method, an ink-jet recording apparatus and an ink recorded matter. Specifically, the present invention relates to an ink which is excellent in image quality to plain paper, in adaptability to high-speed printing, in storage stability and in ejection stability and is harmless to a maintenance device for an ink ejection device; an ink cartridge; and a recording method, a recording apparatus and an ink recorded matter which use the ink.

Background Art

Ink-jet printers have been rapidly becoming commonplace in recent years for the reasons that printing on plain paper is enabled, colorization can be facilitated, the ink-jet printers are compact and inexpensive, running costs are low, and so forth. The properties generally required for an ink-jet recording ink are exemplified by color tone, image density, bleeding, etc. for achieving high image quality; dissolution/dispersion stability, storage stability, ejection stability, etc. of a colorant in the ink for achieving reliability; water resistance, light resistance, etc. for securing storage stability of recorded images; and quick-drying properties of the ink for achieving a high-speed process. Accordingly, a variety of proposals have been put forward in attempts to satisfy these requirements.

As for colorants of ink-jet recording inks, dye inks were mainly used at an early stage in view of their favorable color-developing ability, high reliability, etc.; in recent years, however, note has also been taken of ink compositions using pigments such as carbon black because recorded images can thereby have light resistance and water resistance.

Also, for achievement of increase in printing quality and of high-speed printing, droplets of inks tend to be miniaturized these days, and thus the hole diameters of nozzles tend to be reduced as well.

Therefore, it is rather difficult to secure ejection stability in printers in which pigments are used as colorants and the hole diameters of nozzles are reduced; and despite many attempts to balance ejection stability and other properties of inks, sufficient measures have not been taken, as things stand.

Hitherto, for improvement in the reliability of printers, inks have been designed such that increase in viscosity can be restrained as much as possible. For instance, Patent Literature 1 discloses that by not allowing the viscosity and particle diameter of an ink to increase more than ten-fold and more than three-fold respectively when the ink is twice as concentrated, the ink is not restrained by flocculation of pigment from spreading and thus it is possible to prevent pinholes from arising; however, it is difficult for this ink to form high-quality images on plain paper. Patent Literature 2 discloses an ink wherein after volatile components in the ink have evaporated, the remainder is a liquid, and the viscosity of the remainder is equal to or less than ten times the initial viscosity; however, although this ink is a dye ink and is therefore highly reliable, it is inferior in image quality on plain paper. Patent Literature 3 discloses an ink characterized by gelating or solidifying when left to stand at a temperature of 25°C and a relative humidity of 50% until it does not substantially change in weight, and becoming a liquid when left to stand for 24hr at a temperature of 30°C and a relative humidity of 50%; however, although this ink is a dye ink and is therefore highly reliable, it is inferior in drying property and image quality on plain paper. Patent Literature 4 discloses a method of securing ejection stability by means of an ink using a sugar alcohol such as maltitol or lactitol; however, the sugar alcohol instanced is a solid, and it is hardly possible for the sugar alcohol-based ink to secure ejection stability sufficiently. Patent Literature 5 discloses an ink wherein the rate of increase in viscosity (mPa-s/%) caused by evaporation of moisture of an ink is 5.0 or less when the amount of evaporation of moisture is 30wt% or less to the total weight of the ink, and the rate of increase in viscosity attains a value of greater than 50 when the amount of evaporation of moisture is between 30% by weight and 45% by weight, and wherein when the rate of increase in viscosity stands at a value of greater than 50, the average particle diameter of a colorant in the ink is equal to or less than five times the initial average particle diameter and is 0.8μm or less. The ink of Patent Literature 5 has favorable drying properties and exhibits adaptability to high-speed printing and high printing quality on plain paper to be sure, but the ink dries so quickly as to be inferior in ejection stability, and further, causes troubles such as breakage of a maintenance device (a wiper cleaner, an ink sweeping portion, etc.) for an ink ejection device, which stems from adhesion of waste ink therein. As described above, in order to secure high-speed printing and high printing quality, it is necessary to use an ink having a high viscosity; however, it is difficult for the ink having a high viscosity to secure reliability and handleability, as things stand.

[Patent Literature 1] Japanese Patent Application Laid-Open (JP-A) No. 2002-337449
[Patent Literature 2] JP-A No. 2000-95983
[Patent Literature 3] JP-A No. 2007-39680
[Patent Literature 4] JP-A No. 2006-348125
[Patent Literature 5] JP-A No. 2006-16412

Disclosure of Invention

The present invention is aimed at solving the problems in related art and achieving the following object. Specifically, an object of the present invention is to provide an ink which is excellent in image quality to plain paper, in adaptability to high-speed printing, in storage stability and in ejection stability and is harmless to a maintenance device for an ink ejection device; an ink cartridge; and a recording method, a recording apparatus and an ink recorded matter which use the ink.

The ink of the present invention is characterized in that when 2.5g of the ink is weighed, placed in a glass Petri dish having a diameter of 33mm and stored for 24hr at a temperature of 50°C±0.5°C and a humidity of 12%±5%, the evaporation rate of a solvent with respect to the total weight of the ink is 50% by weight or more, and an ink residue has a viscosity of 20,000mPa·s or greater, and also characterized in that by storing the ink residue for 6hr at a temperature of 23°C±0.5°C and a high humidity of 95%±3% to allow it to absorb moisture, the amount of moisture contained in the ink residue becomes 30% by weight to 40% by weight, in which case the ink residue has a viscosity of less than 500mPa.s. Thus, the ink is thickened by evaporation of the solvent that occurs before the ink comes into contact with paper after ejected from a nozzle and at the time when it comes into contact with the paper, thereby enabling high-quality images to be formed at high speed on plain paper as well. Also, since the amount of moisture contained in the ink residue that has absorbed moisture is 30% by weight to 40% by weight, in which case the ink residue has a viscosity of less than 500mPa·s, it is possible to achieve securement of ejection stability, and prevention of breakage of a maintenance device for an ink ejection device caused by adhesion of waste ink in the maintenance device, which are included in the object of the present invention, and thus long-term reliability can be secured.

An ink used for obtaining an ink having the features of the present invention is mainly composed of a colorant, a wetting agent, a surfactant, a penetrant and a water-dispersible resin, and how these components are combined and the compounding ratios thereof are important. Further, addition of a particular pH adjuster as a pigment agglomeration preventing agent makes it possible to obtain a highly-reliable ink whereby higher-quality images can be produced.

The following explains one example of a method for producing "an ink wherein the evaporation rate of a solvent of the ink with respect to the total weight of the ink is 50% by weight or more, and an ink residue has a viscosity of 20,000mPa·s or greater (a state in which there is almost no fluidity), and wherein by leaving the ink residue to stand at high humidity to allow it to absorb moisture, the amount of moisture contained in the ink residue becomes 30% by weight to 40% by weight, in which case the ink residue has a viscosity of less than 500mPa·s" mentioned above. It is useful to prepare an appropriate amount of a wetting agent A (a polyhydric alcohol that has an equilibrium moisture content of 30% by weight or more at a temperature of 23°C and a relative humidity of 80%) which has a very high boiling point and viscosity in comparison with water and an appropriate amount of a wetting agent B which has a somewhat high boiling point and viscosity, and to mix water with these wetting agents (it goes without saying that this method merely represents one example for facilitating understanding of the present invention and that the present invention is not limited thereto). Besides, use of a compound which is high in coordinating ability, hydrogen-bonding ability and equilibrium moisture content in the liquid phase is effective, and it is desirable to consider the amount of the colorant added, the affinity between the colorant and dispersion medium components, effects caused by the addition of the surfactant and the penetrant, and the like.

Meanwhile, as to an ink wherein the evaporation rate of a solvent of the ink with respect to the total weight of the ink is 50% by weight or more, and an ink residue has a viscosity of 20,000mPa·s or greater (a state in which there is no fluidity), and wherein by leaving the ink residue to stand at high humidity to allow it to absorb moisture, the amount of moisture contained in the ink residue becomes 30% by weight to 40% by weight, in which case the ink residue has a viscosity of over 500mPa·s, the ink is inferior in ejection stability and may possibly cause, for example, breakage of a maintenance device for an ink ejection device, caused by adhesion of waste ink in the maintenance device.

Furthermore, the ink of the present invention causes less beading (nonuniformity of density), has superior drying properties and makes it possible to form high-quality images suitable for printing image quality, when general-purpose printing paper (a recording medium with low ink-absorbing ability, including a support, and a coating layer applied onto at least one surface of the support, in which the amount of purified water transferred to the recording medium at a contact period of 100ms measured by a dynamic scanning absorptometer is 2ml/m$^2$ to 35ml/m$^2$ and the amount of purified water transferred to the recording medium at a contact period of 400ms measured by the dynamic scanning absorptometer is 3ml/m$^2$ to 40ml/m$^2$) is used.

<1> An ink-jet recording ink including a colorant dispersible in water, a water-soluble organic solvent used as a wetting agent, a surfactant, a penetrant, a water-dispersible resin, and water, wherein when 2.5g of the ink is weighed, placed in a glass Petri dish having a diameter of 33mm and stored for 24hr at a temperature of 50°C±0.5°C and a humidity of 12%±5%, the evaporation rate of a solvent in the ink is 50% by weight or more, and an ink residue has a viscosity of 20,000mPa·s or greater, and wherein by storing the ink residue for 6hr at a temperature of 23°C±0.5°C and a high humidity of 95%±3% to allow it to absorb moisture, the amount of moisture contained in the ink residue

becomes 30% by weight to 40% by weight, in which case the ink residue has a viscosity of less than 500mPa·s; where the "evaporation rate of a solvent" (% by weight) is represented by the expression (1 - amount of ink residue / total weight of ink)×100, the solvent includes the water and the water-soluble organic solvent contained in the ink, and the "amount of moisture contained in the ink residue" (% by weight) is represented by the expression (amount of moisture absorbed / total amount of ink residue that has absorbed moisture)×100.

<2> The ink-jet recording ink according to <1>, wherein the wetting agent is at least one of polyhydric alcohols, each of which has an equilibrium moisture content of 30% by weight or more at a temperature of 23°C and a relative humidity of 80%.

<3> The ink-jet recording ink according to <2>, wherein the polyhydric alcohol is selected from the group consisting of glycerin and 1,3-butanediol.

<4> The ink-jet recording ink according to any one of <1> to <3>, wherein the colorant dispersible in water is a pigment which can be stably dispersed in water in the absence of a dispersant by bonding at least one hydrophilic group to a surface of the colorant directly or via other atomic group.

<5> The ink-jet recording ink according to any one of <1> to <3>, wherein the colorant dispersible in water is a polymer fine particle containing one of a water-insoluble coloring material and a water-sparingly-soluble coloring material.

<6> The ink-jet recording ink according to any one of <1> to <3>, wherein the colorant dispersible in water contains a pigment, a pigment dispersant and a polymeric dispersion stabilizer.

<7> The ink-jet recording ink according to any one of <1> to <6>, wherein the surfactant contains at least one of a silicone-based surfactant and a fluorine-based surfactant.

<8> The ink-jet recording ink according to < 7>, wherein the silicone-based surfactant contains a polyether-modified silicone-based surfactant.

<9> The ink-jet recording ink according to <7>, wherein the fluorine-based surfactant contains at least a compound represented by the following Structural Formula (I),

$$CF_3CF_2(CF_2CF_2)_m\text{-}CH_2CH_2O(CH_2CH_2O)_nH \qquad \text{Structural Formula (I)}$$

where "m" denotes an integer of 0 to 10, and "n" denotes an integer of 1 to 40.

<10> The ink-jet recording ink according to any one of <1> to <9>, wherein the penetrant contains at least one of a polyol compound having 8 to 11 carbon atoms and a glycol ether compound.

<11> The ink-jet recording ink according to <10>, wherein the polyol compound having 8 to 11 carbon atoms is at least one of 2-ethyl-1,3-hexanediol and 2,2,4-trimethyl-1,3-pentanediol.

<12> The ink-jet recording ink according to any one of <1> to <11>, wherein the water-dispersible resin is at least any one of a polyurethane resin, an acrylic-silicone resin, and a fluorine resin having a fluoroolefin unit, and the minimum film-forming temperature of the water-dispersible resin is 30°C or lower.

<13> The ink-jet recording ink according to any one of <1> to <12>, having a viscosity of 5mPa·s to 20mPa·s at 25°C and a static surface tension of 35mN/m or less at 25°C.

<14> The ink-jet recording ink according to any one of <1> to <13>, being at least one selected from a cyan ink, a magenta ink, a yellow ink and a black ink.

<15> An ink media set including the ink-jet recording ink according to any one of <1> to <14>, and a recording medium, wherein the recording medium includes a support, and a coating layer applied onto at least one surface of the support, the amount of purified water transferred to the recording medium at a contact period of 100ms measured by a dynamic scanning absorptometer is 2ml/$m^2$ to 35ml/$m^2$ and the amount of purified water transferred to the recording medium at a contact period of 400ms measured by the dynamic scanning absorptometer is 3ml/$m^2$ to 40ml/$m^2$.

<16> An ink cartridge including a container to house the ink-jet recording ink according to any one of <1> to <14>.

<17> An ink-jet recording method including jetting the ink-jet recording ink according to any one of <1> to <14> so as to form an image on a recording medium, by applying a stimulus to the ink-jet recording ink.

<18> The ink-jet recording method according to <17>, wherein the stimulus is at least one selected from heat, pressure, vibration and light.

<19> An ink-jet recording apparatus including an ink jetting unit configured to jet the ink-jet recording ink according to any one of <1> to <14> so as to form an image on a recording medium, by applying a stimulus to the ink-jet recording ink.

<20> The ink-jet recording apparatus according to <19>, wherein the stimulus is at least one selected from heat, pressure, vibration and light.

<21> The ink-jet recording apparatus according to any one of <19> and <20>, further including an ink-jet head, wherein the ink-jet head includes nozzles each having a hole diameter of 30μm or less.

<22> An ink recorded matter including an image formed on a recording medium, using the ink-jet recording ink

according to any one of <1> to <14>.

<23> An ink recorded matter including an image formed on a recording medium in the ink media set according to <15>, using the ink-jet recording ink in the ink media set.

As is evident from the following detailed and specific explanations, the present invention makes it possible to solve the problems in related art and provide an ink which is excellent in image quality to plain paper, in adaptability to high-speed printing, in storage stability and in ejection stability and is harmless to a maintenance device for an ink ejection device; an ink cartridge; and a recording method, a recording apparatus and an ink recorded matter which use the ink.

Specifically, the present invention provides an ink which makes it possible to obtain an image excellent in quality to plain paper, particularly in image density and image durability such as water resistance, light resistance, etc., more particularly in image density and drying property, which is superior in drying rate and adaptability to high-speed printing, which is excellent in storage stability and ejection stability and which is harmless to a maintenance device for an ink ejection device; and an ink cartridge, a recording method, a recording apparatus and an ink recorded matter which use the ink. The present invention thereby produces extremely superb effects.

Brief Description of Drawings

FIG. 1 is a schematic diagram exemplarily showing an ink cartridge of the present invention.

FIG. 2 is a schematic diagram exemplarily showing a modified example of the ink cartridge in FIG. 1.

FIG. 3 is a perspective view exemplarily showing an ink-jet recording apparatus when a cover provided at an ink cartridge loading section is open.

FIG. 4 is a cross-sectional view for explaining the overall structure of the ink-jet recording apparatus shown in FIG. 3.

FIG. 5 is a schematic enlarged view exemplarily showing an ink-jet head of the present invention.

FIG. 6 is a plan view for explaining main parts of an example of a subsystem including a maintenance device for an ejection device in the present invention.

FIG. 7 is a schematic structural diagram of the subsystem shown in FIG. 6.

FIG. 8 is a diagram for explaining the right side of the subsystem shown in FIG. 6.

FIG. 9 is a front cross-sectional view of an example of an idle ejection receiving section in a recording apparatus of the present invention.

FIG. 10 is a diagram for explaining a side of the example of the idle ejection receiving section shown in FIG. 9.

Best Mode for Carrying Out the Invention

The recording ink of the present invention includes water, a colorant, a water-soluble organic solvent (a wetting agent), a surfactant, a penetrant and a water-dispersible resin, and further includes other components in accordance with the necessity.

- Water-soluble Organic Solvent (Wetting Agent) -

The recording ink of the present invention includes at least one polyhydric alcohol that has an equilibrium moisture content of 30% by weight or more at a temperature of 23°C and a relative humidity of 80%. For instance, as described above, it is desirable for the recording ink to contain a wetting agent A which has a very high equilibrium moisture content and a very high boiling point (the wetting agent A has an equilibrium moisture content of 30% by weight or more at a temperature of 23°C and a relative humidity of 80% and has a boiling point of 250°C or higher, with the equilibrium moisture content preferably being 40% by weight or more) and a wetting agent B which has a high equilibrium moisture content but has a relatively low boiling point (the wetting agent B has an equilibrium moisture content of 30% by weight or more at a temperature of 23°C and a relative humidity of 80% and has a boiling point of 140°C to 250°C). Among polyhydric alcohols, examples of the wetting agent A that has a boiling point of over 250°C at normal pressure include 1,2,3-butanetriol (bp: 175°C / 33hPa, 38% by weight), 1,2,4-butanetriol (bp: 190°C to 191°C / 24hPa, 41% by weight), glycerin (bp: 290°C, 49% by weight), diglycerin (bp: 270°C / 20hPa, 38% by weight), triethylene glycol (bp: 285°C, 39% by weight) and tetraethylene glycol (bp: 324°C to 330°C, 37% by weight); and examples of the wetting agent B that has a boiling point of 140°C to 250°C include diethylene glycol (bp: 245°C, 43% by weight) and 1,3-butanediol (bp: 203°C to 204°C, 35% by weight). Each of these wetting agents A and B is a hygroscopic material which has an equilibrium moisture content of 30% by weight or more at a temperature of 23°C and a relative humidity of 80%, with the wetting agent B higher in evaporating ability than the wetting agent A. It is particularly desirable that the wetting

agent A be glycerin and the wetting agent B be 1,3-butanediol. When a combination of the wetting agent A and the wetting agent B is used, the amount ratio B/A (mass ratio) between the wetting agent A and the wetting agent B cannot be unequivocally determined because it substantially depends upon the amount of an after-mentioned extra wetting agent C and the type and amount of other additives such as a penetrant; however, the amount ratio B/A is preferably in the range of 10/90 to 90/10, for instance.

The equilibrium moisture content in the present invention is calculated as follows: a saturated potassium chloride aqueous solution is used, the temperature and relative humidity in a desiccator are kept at 23°C±1°C and 80%±3% respectively, Petri dishes each containing 1g of a water-soluble organic solvent weighed are stored inside this desiccator, and the saturated moisture content is calculated.

The saturated moisture content (%) is represented by the expression:

$$(\text{amount of moisture absorbed in organic solvent / amount of organic solvent + moisture absorbed in organic solvent}) \times 100.$$

Use of the polyhydric alcohol(s) by 50% by weight or more to the total content of wetting agents is advantageous in securing ejection stability and preventing adhesion of waste ink in a maintenance device for an ink ejection device.

For the recording ink of the present invention, besides the wetting agents A and B, an extra wetting agent C (typically, the extra wetting agent C has an equilibrium moisture content of less than 30% by weight at a temperature of 23°C and a relative humidity of 80%) may also be used instead of part of the wetting agents A and B or in addition to the wetting agents A and B in accordance with the necessity. Examples of the wetting agent C include polyhydric alcohols, polyhydric alcohol alkyl ethers, polyhydric alcohol aryl ethers, nitrogen-containing heterocyclic compounds, amides, amines, sulfur-containing compounds, propylene carbonate, ethylene carbonate and other wetting agents.

Examples of the polyhydric alcohols include dipropylene glycol (bp: 232°C), 1,5-pentanediol (bp: 242°C), 3-methyl-1,3-butanediol (bp: 203°C), propylene glycol (bp: 187°C), 2-methyl-2,4-pentanediol (bp: 197°C), ethylene glycol (bp: 196°C to 198°C), tripropylene glycol (bp: 267°C), hexylene glycol (bp: 197°C), polyethylene glycol (viscous liquid to solid), polypropylene glycol (bp: 187°C), 1,6-hexanediol (bp: 253°C to 260°C), 1,2,6-hexanetriol (bp: 178°C), trimethylol ethane (solid, mp: 199°C to 201°C) and trimethylol propane (solid, mp: 61°C).

Examples of the polyhydric alcohol alkyl ethers include ethylene glycol monoethyl ether (bp: 135°C), ethylene glycol monobutyl ether (bp: 171°C), diethylene glycol monomethyl ether (bp: 194°C), diethylene glycol monoethyl ether (bp: 197°C), diethylene glycol monobutyl ether (bp: 231°C), ethylene glycol mono-2-ethylhexyl ether (bp: 229°C) and propylene glycol monoethyl ether (bp: 132°C).

Examples of the polyhydric alcohol aryl ethers include ethylene glycol monophenyl ether (bp: 237°C) and ethylene glycol monobenzyl ether.

Examples of the nitrogen-containing heterocyclic compounds include 2-pyrrolidone (bp: 250°C, mp: 25.5°C, 47% by weight to 48% by weight), N-methyl-2-pyrrolidone (bp: 202°C), 1,3-dimethyl-2-imidazolidinone (bp: 226°C), ε-caprolactam (bp: 270°C) and γ-butyrolactone (bp: 204°C to 205°C).

Examples of the amides include formamide (bp: 210°C), N-methylformamide (bp: 199°C to 201°C), N,N-dimethylformamide (bp: 153°C) and N,N-diethylformamide (bp: 176°C to 177°C).

Examples of the amines include monoethanolamine (bp: 170°C), diethanolamine (bp: 268°C), triethanolamine (bp: 360°C), N,N-dimethylmonoethanolamine (bp: 139°C), N-methyldiethanolamine (bp: 243°C), N-methylethanolamine (bp: 159°C), N-phenylethanolamine (bp: 282°C to 287°C) and 3-aminopropyldiethylamine (bp: 169°C).

Examples of the sulfur-containing compounds include dimethyl sulfoxide (bp: 139°C), sulfolane (bp: 285°C) and thiodiglycol (bp: 282°C).

The above-mentioned other solid wetting agents are preferably sugars and the like. Examples of the sugars include monosaccharides, disaccharides, oligosaccharides (including trisaccharides and tetrasaccharides) and polysaccharides. Specific examples thereof include glucose, mannose, fructose, ribose, xylose, arabinose, galactose, maltose, cellobiose, lactose, sucrose, trehalose and maltotriose. Here, the polysaccharides denotes sugars in a broad sense, including substances that are widespread in the nature, such as α-cyclodextrin and cellulose. Additionally, examples of derivatives of the sugars include reducing sugars of the sugars, exemplified by sugar alcohols (represented by the general formula $HOCH_2(CHOH)_nCH_2OH$ (where "n" denotes an integer of 2 to 5)); oxidation sugars of the sugars, exemplified by aldonic acid and uronic acid; amino acid; and thio acid. Among these, sugar alcohols are preferable, and specific examples thereof include maltitol and sorbitol.

The mass ratio between a pigment and the wetting agents greatly affects the ejection stability of ink from a head, and further, affects prevention of adhesion of waste ink in the maintenance device for the ink ejection device. If the compounding amount of the wetting agents is small when there is a high pigment solid content, evaporation of moisture in the vicinity of an ink meniscus of a nozzle proceeds, thereby possibly leading to ejection failure. The amount

of the wetting agents contained in the recording ink is preferably 20% by mass to 50% by mass, more preferably 20% by mass to 40% by mass. When the amount is less than 20% by mass, there is a decrease in ejection stability, and adhesion of waste ink in the maintenance device becomes serious. When it is more than 50% by mass, the recording ink becomes inferior in drying property on paper, and further, the quality of letters/characters on plain paper may lower.

Also, in order to improve image quality on plain paper, a wetting agent C1 having a boiling point of less than 240°C and an equilibrium moisture content of less than 30% (the wetting agent C1 is any water-soluble organic solvent having an equilibrium moisture content of less than 30% by weight at a temperature of 23°C and a relative humidity of 80% and having a boiling point of less than 240°C among the compounds from which the wetting agent C is selected) is preferably added to constitute an appropriate proportion as a wetting agent besides the polyhydric alcohol(s) having an equilibrium moisture content of 30% by weight or more. It is desirable that the amount of the water-soluble organic solvent used be less than 50% by weight to the total amount of wetting agents used, in view of securing ejection stability and preventing adhesion of waste ink in the maintenance device for the ink ejection device.

- Colorant -

For the colorant, a pigment is mainly used in view of weatherability; however, a dye may also be added at the same time for the purpose of adjusting color tone, provided that the addition of the dye does not degrade weatherability. Also, the pigment is not particularly limited and may be suitably selected in accordance with the intended use. Examples of the pigment include pigments for black and pigments for color. Each of these may be used alone or in combination with two or more.

Examples of inorganic pigments include titanium oxide, iron oxide, calcium carbonate, barium sulfate, aluminum hydroxide, barium yellow, cadmium red and chrome yellow and also include carbon blacks produced by known methods such as contact method, furnace method and thermal method.

Examples of organic pigments include azo pigments (such as azo lakes, insoluble azo pigments, condensed azo pigments and chelate azo pigments), polycyclic pigments (such as phthalocyanine pigments, perylene pigments, perinone pigments, anthraquinone pigments, quinacridone pigments, dioxazine pigments, indigo pigments, thioindigo pigments, isoindolinone pigments and quinophthalone pigments), dye chelates (such as basic dye chelates and acid dye chelates), nitro pigments, nitroso pigments and aniline black. Among these pigments, particular preference is given to those which have great affinity with water.

Among the above-mentioned pigments, specific examples of pigments for black that are ideally used include carbon blacks (C. I. Pigment Black 7) such as furnace black, lamp black, acetylene black and channel black; metals such as copper, iron (C. I. Pigment Black 11) and titanium oxide; and organic pigments such as aniline black (C. I. Pigment Black 1).

Specific examples of pigments for color that are ideally used include C. I. Pigment Yellow 1, 3, 12, 13, 14, 17, 24, 34, 35, 37, 42 (yellow iron oxide), 53, 55, 74, 81, 83, 95, 97, 98, 100, 101, 104, 408, 109, 110, 117, 120, 128, 138, 150, 151, 153 and 183; C. I. Pigment Orange 5, 13, 16, 17, 36, 43 and 51; C. I. Pigment Red 1, 2, 3, 5, 17, 22, 23, 31, 38, 48:2, 48:2 (Permanent Red 2B (Ca)), 48:3, 48:4, 49:1, 52:2, 53:1, 57:1 (Brilliant Carmine 6B), 60:1, 63:1, 63:2, 64:1, 81, 83, 88, 101 (red ochre), 104, 105, 106, 108 (cadmium red), 112, 114, 122 (quinacridone magenta), 123, 146, 149, 166, 168, 170, 172, 177, 178, 179, 185, 190, 193, 209 and 219; C. I. Pigment Violet 1 (rhodamine lake), 3, 5:1, 16, 19, 23 and 38; C. I. Pigment Blue 1, 2, 15, 15:1, 15:2, 15:3 (phthalocyanine blue), 16, 17:1, 56, 60 and 63; and C. I. Pigment Green 1, 4, 7, 8, 10, 17, 18 and 36.

Particularly favorable embodiments in which the colorant is a pigment are exemplified by the following first to third embodiments.

(1) In a first embodiment, the colorant has at least one hydrophilic group on its surface and contains a pigment which exhibits water dispersibility in the absence of a dispersant (hereinafter the pigment is also referred to as "self-dispersible pigment").

(2) In a second embodiment, the colorant dispersible in water is a pigment dispersion containing a pigment, a pigment dispersant and a polymeric dispersion stabilizer, wherein the polymeric dispersion stabilizer is at least one selected from an $\alpha$-olefin-maleic anhydride copolymer represented by the following Structural Formula (II), a styrene-(meth)acrylic copolymer, a water-soluble polyurethane resin and a water-soluble polyester resin.

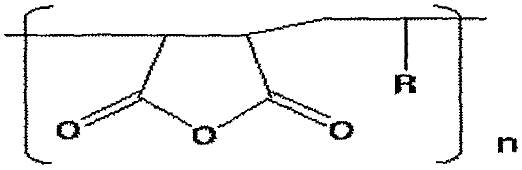

Structural Formula (II)

In Structural Formula (II), R denotes an alkyl group, and the alkyl group preferably has 6 to 25 carbon atoms, more preferably 6 to 22 carbon atoms. "n" denotes a number of 30 to 100.
(3) In a third embodiment, the colorant includes a polymer emulsion which is a polymer fine particle containing a water-insoluble or water-sparingly-soluble coloring material (the polymer emulsion is a water-dispersed material of a polymer fine particle containing a coloring material).

As to colors of the colorants, examples of the colorants for black include carbon blacks (C. I. Pigment Black 7) such as furnace black, lamp black, acetylene black and channel black; metals such as copper, iron (C. I. Pigment Black 11) and titanium oxide; and organic pigments such as aniline black (C. I. Pigment Black 1).

Examples of the colorants for color include C. I. Pigment Yellow 1, 3, 12, 13, 14, 17, 24, 34, 35, 37, 42 (yellow iron oxide), 53, 55, 74, 81, 83, 95, 97, 98, 100, 101, 104, 408, 109, 110, 117, 120, 128, 138, 150, 151, 153 and 183; C. I. Pigment Orange 5, 13, 16, 17, 36, 43 and 51; C. I. Pigment Red 1, 2, 3, 5, 17, 22, 23, 31, 38, 48:2, 48:2 (Permanent Red 2B (Ca)), 48:3, 48:4, 49:1, 52:2, 53:1, 57:1 (Brilliant Carmine 6B), 60:1, 63:1, 63:2, 64:1, 81, 83, 88, 101 (red ochre), 104, 105, 106, 108 (cadmium red), 112, 114, 122 (quinacridone magenta), 123, 146, 149, 166, 168, 170, 172, 177, 178, 179, 185, 190, 193, 209 and 219; C. I. Pigment Violet 1 (rhodamine lake), 3, 5:1, 16, 19, 23 and 38; C. I. Pigment Blue 1, 2, 15 (phthalocyanine blue), 15:1, 15:2, 15:3 (phthalocyanine blue), 16, 17:1, 56, 60 and 63; and C. I. Pigment Green 1, 4, 7, 8, 10, 17, 18 and 36.

The self-dispersible pigment in the first embodiment has its surface modified such that at least one hydrophilic group is bonded to the surface directly or via other atomic group. The surface of the pigment is modified, for example, by chemically bonding a particular functional group (a functional group such as sulfone group or carboxyl group) to the surface or subjecting the surface to wet oxidation with the use of at least either a hypohalous acid or a salt thereof. In particular, a form in which a carboxyl group is bonded to the surface of the pigment and the pigment is dispersed in water is favorable. Thus, since the surface of the pigment is modified such that a carboxyl group is bonded thereto, not only does dispersion stability improve, but also high printing quality can be obtained and the water resistance of a recording medium after printing improves further.

Moreover, superior in redispersibility after dried, an ink containing the self-dispersible pigment in the first embodiment does not cause clogging even when there is a long hiatus in printing and an ink moisture content in the vicinity of an ink-jet head nozzle evaporates, and thus the ink easily enables favorable printing with a simple cleaning operation.

The volume average particle diameter ($D_{50}$) of the self-dispersible pigment in the ink is preferably 0.01μm to 0.16μm.

For instance, as self-dispersible carbon blacks, ones having ionic properties are favorable, with anionically charged ones and cationically charged ones being particularly suitable.

Examples of anionic hydrophilic groups include -COOM, $-SO_3M$, $-PO_3HM$, $-PO_3M_2$, $-SO_2NH_2$ and $-SO_2NHCOR$ (M denotes a hydrogen atom, an alkali metal, ammonium or an organic ammonium. R denotes an alkyl group having 1 to 12 carbon atoms, a phenyl group that may have a substituent, or a naphthyl group that may have a substituent). Among these, use of -COOM and $-SO_3M$, each of which is bonded to the surface of a color pigment, is preferable.

Examples of "M" in the hydrophilic groups include lithium, sodium and potassium as alkali metals. Examples of the organic ammonium include monomethylammonium, trimethylammonium, monoethylammonium, triethylammonium, monomethanolammonium and trimethanolammonium. Examples of methods for obtaining an anionically charged color pigment include a method of oxidizing a color pigment with sodium hypochlorite, a method utilizing sulfonation and a method of making the color pigment and diazonium salt react together, as methods of introducing -COONa onto the surface of the color pigment.

Preferable examples of cationic hydrophilic groups include quaternary ammonium groups, more preferably the quaternary ammonium groups shown below. In the present invention, it is desirable that any one of these groups be bonded to a carbon black surface to constitute a coloring material.

$-NH_3^+$、 $-NR_3^+$、

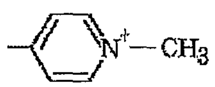
、
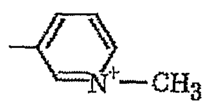

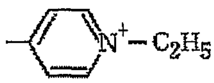,
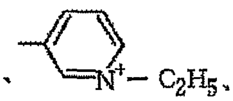,

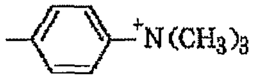,

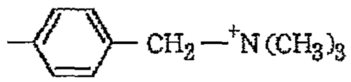,

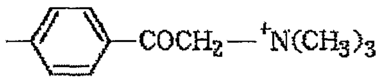,

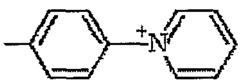,

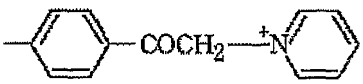

The method for producing a cationic self-dispersible carbon black to which any of the hydrophilic groups is bonded is not particularly limited and may be suitably selected in accordance with the intended use. Examples of methods of bonding the N-ethylpyridyl group represented by the following structural formula to a carbon black include a method of treating the carbon black with 3-amino-N-ethylpyridinium bromide.

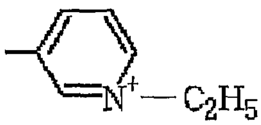

The hydrophilic groups may be bonded to the surface of the carbon black via other atomic groups. Examples of the other atomic groups include alkyl groups having 1 to 12 carbon atoms, phenyl groups that may have substituents, and naphthyl groups that may have substituents. Specific examples of the hydrophilic groups and the other atomic groups bonded to the surface of the carbon black include $-C_2H_4COOM$ (M denotes an alkali metal or quaternary ammonium), $-PhSO_3M$ (Ph denotes a phenyl group. M denotes an alkali metal or quaternary ammonium) and $-C_5H_{10}NH_3^+$.

In the second embodiment, the colorant is a pigment dispersion containing an inorganic pigment, an organic pigment, a pigment such as a complex pigment, a pigment dispersant and a polymeric dispersion stabilizer, wherein the polymeric dispersion stabilizer is at least one selected from an α-olefin-maleic anhydride copolymer represented by the following Structural Formula (II), a styrene-(meth)acrylic copolymer, a water-soluble polyurethane resin and a water-soluble polyester resin.

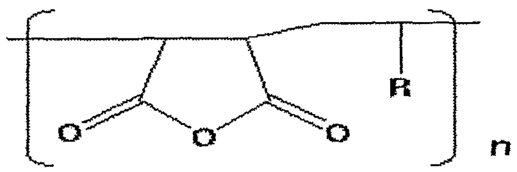

Structural Formula (II)

In Structural Formula (II), R denotes an alkyl group, and the alkyl group preferably has 6 to 25 carbon atoms, more preferably 6 to 22 carbon atoms. "n" denotes a number of 30 to 100.

The polymeric dispersion stabilizer is a material which is effective in stabilizing the dispersed state of the pigment dispersion finely dispersed in water in a uniform manner by the pigment dispersant. The α-olefin-maleic anhydride copolymer represented by Structural Formula (II), the styrene-(meth)acrylic copolymer, the water-soluble polyurethane

resin and the water-soluble polyester resin are solids at normal temperature and are hardly soluble in cold water. However, when dissolved in an alkaline solution or an alkaline aqueous solution having an alkalinity value that is equivalent to or greater than the acid value of the copolymers and the resins (preferably 1.0 to 1.5 times the acid value), the copolymers and the resins become effective as a polymeric dispersion stabilizer.

The copolymers and the resins can be easily dissolved in the alkaline solution or the alkaline aqueous solution by heating and stirring. When the olefin chain of the $\alpha$-olefin-maleic anhydride copolymer is long, it is relatively difficult for them to dissolve, and so there may be insoluble matter left; nevertheless, they can be made effective as a polymeric dispersion stabilizer by removing the insoluble matter with a certain filter or the like.

Examples of the base in the alkaline solution or the alkaline aqueous solution include hydroxides of alkali metals, such as sodium hydroxide, potassium hydroxide and lithium hydroxide; basic substances such as ammonia, triethylamine and morpholine; and alcohol amines such as triethanolamine, diethanolamine, N-methyldiethanolamine, 2-amino-2-ethyl-1,3-propanediol and choline.

For the $\alpha$-olefin-maleic anhydride copolymer represented by Structural Formula (II), a suitably synthesized compound may be used, or a commercially available product may be used. Examples of the commercially available product include T-YP112, T-YP115, T-YP114 and T-YP116 (all of which are produced by Seiko PMC Corporation).

For the styrene-(meth)acrylic copolymer, a suitably synthesized compound may be used, or a commercially available product may be used. Examples of the commercially available product include JC-05 (produced by Seiko PMC Corporation); and ARUFON UC-3900, ARUFON UC-3910 and ARUFON UC-3920 (produced by Toagosei Co., Ltd.).

For the water-soluble polyurethane resin, a suitably synthesized compound may be used, or a commercially available product may be used. Examples of the commercially available product include TAKELAC W-5025, TAKELAC W-6010 and TAKELAC W-5661 (produced by Mitsui Takeda Chemical Co.).

For the water-soluble polyester resin, a suitably synthesized compound may be used, or a commercially available product may be used. Examples of the commercially available product include NICHIGO POLYESTER W-0030, NICHIGO POLYESTER W-0005S30WO and NICHIGO POLYESTER WR-961 (produced by Nippon Synthetic Chemical Industry Co., Ltd.); and PESRESIN A-210 and PESRESIN A-520 (produced by Takamatsu Oil & Fat Co., Ltd.).

The acid value of the polymeric dispersion stabilizer is preferably 40mgKOH/g to 400mgKOH/g, more preferably 60mgKOH/g to 350mgKOH/g. When the acid value is less than 40mgKOH/g, the dissolving ability of the alkaline solution may become poor. When it is greater than 400mgKOH/g, the viscosity of the pigments becomes high, and thus ejection of ink may easily be degraded or the dispersion stability of the pigment dispersant may easily decrease.

The mass average molecular weight of the polymeric dispersion stabilizer is preferably 20,000 or less, more preferably 5,000 to 20,000. When the mass average molecular weight is less than 5,000, the dispersion stability of the pigment dispersant may decrease. When it is greater than 20,000, the dissolving ability of the alkaline solution may become poor or there may be an increase in viscosity.

The amount of the polymeric dispersion stabilizer contained is preferably 1 part by mass to 100 parts by mass (as the solid content equivalent), more preferably 5 parts by mass to 50 parts by mass, in relation to 100 parts by mass of the pigments. When the amount is less than 1 part by mass, there may be no effect of dispersion stabilization. When it is greater than 100 parts by mass, the ink viscosity increases, and thus the ability of the ink to eject from a nozzle may easily be degraded or there may be economic inferiority.

<Pigment Dispersant>

In the second embodiment, it is desirable that the colorant contain a pigment dispersant. For the pigment dispersant, either an anionic surfactant or a nonionic surfactant having an HLB value of 10 to 20 is suitable.

Examples of the anionic surfactant include polyoxyethylene alkyl ether acetates, alkylbenzene sulfonates (e.g. $NH_4$, Na and Ca), alkyl diphenyl ether disulfonates (e.g. $NH_4$, Na and Ca), dialkylsuccinate sodium sulfonates, naphthalenesulfonic acid formalin condensate sodium salts, polyoxyethylene polycyclic phenylether sulfate salts (e.g. $NH_4$ and Na), laurates, polyoxyethylene alkyl ether sulfate salts and oleates. Among these, dioctylsulfosuccinate sodium salts and polyoxyethylene styrenephenylether sulfonate $NH_4$ salts are particularly preferable.

Examples of the nonionic surfactant having an HLB value of 10 to 20 include polyoxyethylene alkyl ethers, polyoxyalkylene alkyl ethers, polyoxyethylene polycyclic phenylethers, sorbitan fatty esters, polyoxyethylene sorbitan fatty esters, polyoxyethylene alkylphenyl ethers, polyoxyethylene alkylamines, polyoxyethylene alkylamides and acetylene glycol. Among these, polyoxyethylene lauryl ether, polyoxyethylene $\beta$-naphthyl ether, polyoxyethylene sorbitan monooleate and polyoxyethylene styrenephenylether are particularly preferable.

The amount of the pigment dispersant contained is preferably 1 part by mass to 100 parts by mass, more preferably 10 parts by mass to 50 parts by mass, in relation to 100 parts by mass of the pigments. When the amount of the pigment dispersant contained is small, the pigments cannot be sufficiently micronized. When it is too large, excessive dispersant components not adsorbed onto the pigments have an adverse effect on ink properties, thereby leading to image bleeding and degradation of water resistance and friction resistance.

The pigment dispersion finely dispersed in water in a uniform manner by the pigment dispersant can be produced as follows: the pigment dispersant is dissolved in an aqueous medium; subsequently, the pigments are added for sufficient wetness, then the pigment dispersion is stirred at high speed by a homogenizer and dispersed by a dispersing machine using a ball such as a bead mill or ball mill, a kneading and dispersing machine utilizing shearing force such as a roll mill, an ultrasonic dispersing machine, etc. It should be noted that after such a kneading and dispersing step, the pigment dispersion often includes coarse particles, which cause clogging of an ink-jet nozzle and a supply path. Therefore, it is necessary to remove particles which are 1μm or greater in diameter, using a filter or a centrifugal separator.

The average particle diameter ($D_{50}$) of the pigment dispersant in the ink is preferably 150nm or less, more preferably 100nm or less. When the average particle diameter ($D_{50}$) is greater than 150nm, there is a dramatic decrease in ejection stability, and thus nozzle clogging and deviation of ink ejection are liable to arise. When it is 100nm or less, ejection stability improves, and image color saturation improves as well.

For the water-dispersible colorant of the third embodiment, use of a polymer emulsion in which polymer fine particles contain a pigment is favorable as well as use of any of the above-mentioned pigments. The polymer emulsion in which polymer fine particles contain a pigment means either a polymer emulsion in which a pigment is encapsulated in polymer fine particles or a polymer emulsion in which a pigment is adsorbed onto surfaces of polymer fine particles. In this case, it is not that all of the pigment needs to be encapsulated or adsorbed but that the pigment may be dispersed in the emulsion to such an extent that the effects of the present invention are not impaired. Examples of the polymer constituting the polymer emulsion (the polymer of the polymer fine particles) include vinyl polymers, polyester polymers and polyurethane polymers. Among these, particular preference is given to vinyl polymers and polyester polymers, or more specifically, the polymers disclosed in Japanese Patent Application Laid-Open (JP-A) Nos. 2000-53897 and 2001-139849.

The amount of the colorant contained in the recording ink is preferably 2% by mass to 15% by mass, more preferably 3% by mass to 12% by mass, as a solid content. When the amount is less than 2% by mass, the color-developing ability of the ink and image density may decrease. When it is greater than 15% by mass, the ink thickens, and thus the ability of the ink to eject may degrade, which is unfavorable from an economical viewpoint as well.

- Surfactant -

For the surfactant, what is preferable is a surfactant which is low in surface tension and high in penetrability and leveling ability and does not impair dispersion stability regardless of the type of the colorant or the combination of the wetting agents. And for the surfactant, at least one selected from an anionic surfactant, a nonionic surfactant, a silicone-based surfactant and a fluorine-based surfactant is suitable. Among these, a silicone-based surfactant and a fluorine-based surfactant are particularly preferable.

Each of these surfactants may be used alone or in combination with two or more.

The fluorine-based surfactant is preferably a fluorine-substituted compound having 2 to 16 carbon atoms, more preferably a fluorine-substituted compound having 4 to 16 carbon atoms. When the fluorine-substituted compound has less than two carbon atoms, effects of the fluorine may not be obtained. When it has more than 16 carbon atoms, there may be problems with ink storage stability, etc.

Examples of the fluorine-based surfactant include perfluoroalkyl sulfonic acid compounds, perfluoroalkyl carboxylic compounds, perfluoroalkyl phosphoric acid ester compounds, perfluoroalkyl ethylene oxide adducts, and polyoxyalkylene ether polymer compounds having perfluoroalkylether groups in side chains. Among these, polyoxyalkylene ether polymer compounds having perfluoroalkylether groups in side chains are particularly preferable because they have low foaming properties.

Fluorine-based surfactants represented by the following Structural Formula (III) are ideal.

$$CF_3CF_2(CF_2CF_2)_m\text{-}CH_2CH_2O(CH_2CH_2O)_nH \qquad \text{Structural Formula (III)}$$

In Structural Formula (III), "m" denotes an integer of 0 to 10, and "n" denotes an integer of 1 to 40.

Examples of the perfluoroalkyl sulfonic acid compounds include perfluoroalkyl sulfonic acids and perfluoroalkyl sulfonates.

Examples of the perfluoroalkyl carboxylic compounds include perfluoroalkyl carboxylic acids and perfluoroalkyl carboxylates.

Examples of the perfluoroalkyl phosphoric acid ester compounds include perfluoroalkyl phosphoric acid esters and salts of perfluoroalkyl phosphoric acid esters.

Examples of the polyoxyalkylene ether polymer compounds having perfluoroalkylether groups in side chains include polyoxyalkylene ether polymers having perfluoroalkylether groups in side chains, sulfuric acid ester salts of polyoxyalkylene ether polymers having perfluoroalkylether groups in side chains, and salts of polyoxyalkylene ether polymers having perfluoroalkylether groups in side chains.

Examples of counterions for salts in these fluorine-based surfactants include Li, Na, K, $NH_4$, $NH_3CH_2CH_2OH$, $NH_2(CH_2CH_2OH)_2$ and $NH(CH_2CH_2OH)_3$.

For the fluorine-based surfactants, suitably synthesized compounds may be used, or commercially available products may be used.

Examples of the commercially available products include SURFLON S-111, S-112, S-113, S-121, S-131, S-132, S-141 and S-145 (all of which are produced by Asahi Glass Co., Ltd.), FLUORAD FC-93, FC-95, FC-98, FC-129, FC-135, FC-170C, FC-430 and FC-431 (all of which are produced by Sumitomo 3M Limited), MEGAFAC F-470, F-1405 and F-474 (all of which are produced by Dainippon Ink And Chemicals, Incorporated), ZONYL TBS, FSP, FSA, FSN-100, FSN, FSO-100, FSO, FS-300 and UR (all of which are produced by E. I. du Pont de Nemours and Company), FT-110, FT-250, FT-251, FT-400S, FT-150 and FT-400SW (all of which are produced by Neos Company Limited), and POLYFOX PF-151N (produced by OMNOVA Solutions Inc.). Among these, FS-300 produced by E. I. du Pont de Nemours and Company, FT-110, FT-250, FT-251, FT-400S, FT-150 and FT-400SW produced by Neos Company Limited, and POLYFOX PF-151N produced by OMNOVA Solutions Inc. are particularly preferable in that printing quality, particularly color-developing ability and uniform dying ability to paper, improves remarkably.

Specific examples of the fluorine-based surfactant include compounds represented by the following structural formulae.

(1) Anionic Fluorine-based Surfactant

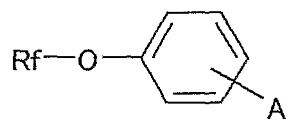

In the structural formula, Rf denotes a mixture of fluorine-containing hydrophobic groups represented by the following structural formulae. "A" denotes $-SO_3X$, -COOX or $-PO_3X$ (where X is a counter anion, specifically a hydrogen atom, Li, Na, K, $NH_4$, $NH_3CH_2CH_2OH$, $NH_2(CH_2CH_2OH)_2$ or $NH(CH_2CH_2OH)_3$).

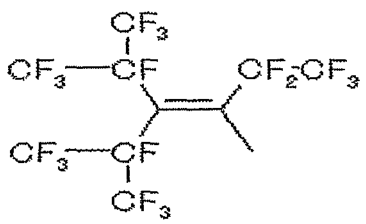

and

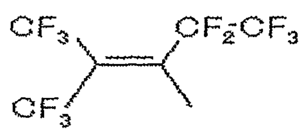

$$\left(Rf'-O\right)_n-PO-\left(O\cdot X\right)_m$$

In the structural formula, Rf' denotes a fluorine-containing group represented by the following structural formula. X denotes the same as defined above. "n" denotes an integer of 1 or 2, and "m" denotes 2-n.

$$F-\left(CF_2CF_2\right)_n-CH_2CH_2-$$

In the structural formula, "n" denotes an integer of 3 to 10.

$$Rf'-S-CH_2CH_2-COO\cdot X$$

In the structural formula, Rf' and X denote the same as defined above.

$Rf'-SO_3 \cdot X$

In the structural formula, Rf' and X denote the same as defined above.

(2) Nonionic Fluorine-based Surfactant

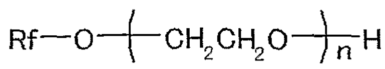

In the structural formula, Rf denotes the same as defined above. "n" denotes an integer of 5 to 20.

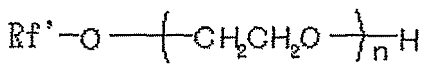

In the structural formula, Rf' denotes the same as defined above. "n" denotes an integer of 1 1o 40.

(3) Ampholytic Fluorine-based Surfactant

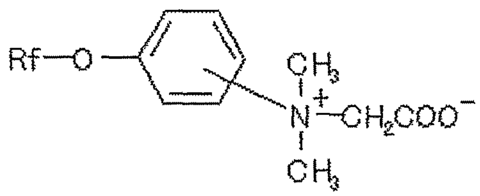

In the structural formula, Rf denotes the same as defined above.

(4) Oligomer-Type Fluorine-based Surfactant

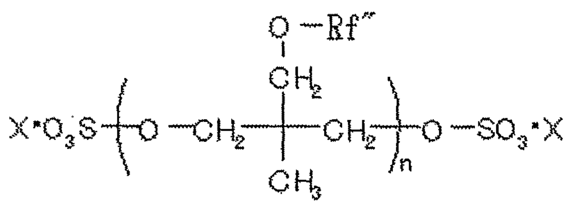

In the structural formula, Rf' denotes a fluorine-containing group represented by the following structural formula. "n" denotes an integer of 0 to 10. X denotes the same as defined above.

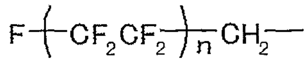

In the structural formula, "n" denotes an integer of 1 to 4.

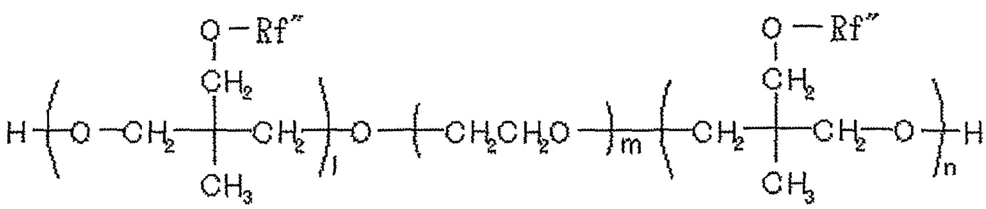

In the structural formula, Rf" denotes the same as defined above. "1" denotes an integer of 0 to 10, "m" denotes an integer of 0 to 10, and "n" denotes an integer of 0 to 10.

The silicone-based surfactant is not particularly limited and may be suitably selected in accordance with the intended use, with preference given to a compound which does not decompose even at high pH values. Examples thereof include side-chain-modified polydimethylsiloxane, both-end-modified polydimethylsiloxane, one-end-modified polydimethylsiloxane and side-chain-both-end-modified polydimethylsiloxane. Among these, polyether-modified silicone-based surfactants having polyoxyethylene groups or polyoxyethylenepolyoxypropylene groups as modifying groups are particularly preferable because they exhibit favorable properties as aqueous surfactants.

For such surfactants, suitably synthesized compounds may be used, or commercially available products may be used.

The commercially available products can be easily obtained from BYK-Chemie, Shin-Etsu Chemical Co., Ltd. and Dow Corning Toray Co., Ltd., for instance.

The polyether-modified silicone-based surfactants are not particularly limited and may be suitably selected in accordance with the intended use. Examples thereof include a compound represented by the following structural formula, that is prepared by introducing polyalkyleneoxide units into side chains of Si portions of a dimethylpolysiloxane.

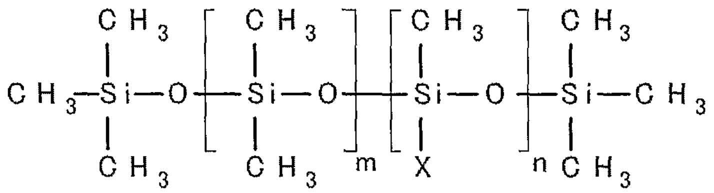

$$X = -R(C_2H_4O)a(C_3H_6O)bR'$$

In the structural formula, "m", "n", "a" and "b" each denote an integer. R and R' each denote an alkyl group or an alkylene group.

For the polyether-modified silicone-based surfactants, commercially available products can be used. Examples thereof include KF-618, KF-642 and KF-643 (all of which are produced by Shin-Etsu Chemical Co., Ltd.).

Examples of the anionic surfactant include polyoxyethylene alkyl ether acetates, dodecylbenzene sulfonates, laurates, and salts of polyoxyethylene alkyl ether sulfates. Examples of the nonionic surfactant include polyoxyethylene alkyl ethers, polyoxypropylene polyoxyethylene alkyl ethers, polyoxyethylene alkyl esters, polyoxyethylene sorbitan fatty esters, polyoxyethylene alkylphenyl ethers, polyoxyethylene alkylamines and polyoxyethylene alkylamides.

The amount of any of the surfactants contained in the recording ink is preferably 0.01% by mass to 3.0% by mass, more preferably 0.5% by mass to 2% by mass.

When the amount is less than 0.01% by mass, the addition of the surfactant may be ineffective. When it is greater than 3.0% by mass, the ink has more penetrability to a recording medium than necessary, and thus image density may decrease or ink strike-through may arise.

- Penetrant -

It is desirable for the recording ink of the present invention to contain as a penetrant at least a polyol compound having 8 to 11 carbon atoms, or a glycol ether compound. The penetrant is different from the wetting agents, and it is not that the penetrant has no wetting properties. However, having lower wetting properties than the wetting agents have, the penetrant can be referred to as a material having nonwetting properties. Here, the term "nonwetting properties" is defined as follows. The penetrant preferably has a solubility of 0.2% by mass to 5.0% by mass in water at 25°C. For the penetrant, 2-ethyl-1,3-hexanediol (solubility: 4.2% at 25°C) and 2,2,4-trimethyl-1,3-pentanediol (solubility: 2.0% at 25°C) are particularly suitable.

Other polyol compounds suitable for the penetrant, as aliphatic diols, are exemplified by 2-ethyl-2-methyl-1,3-propanediol, 3,3-dimethyl-1,2-butanediol, 2,2-diethyl-1,3-propanediol, 2-methyl-2-propyl-1,3-propanediol, 2,4-dimethyl-2,4-pentanediol, 2,5-dimethyl-2,5-hexanediol and 5-hexene-1,2-diol.

As for other penetrants able to be additionally used, they are not particularly limited and may be suitably selected in accordance with the intended use as long as they dissolve in the ink and can be adjusted to have desired properties. Examples thereof include alkyl and allyl ethers of polyhydric alcohols, such as diethylene glycol monophenyl ether, ethylene glycol monophenyl ether, ethylene glycol monoallylether, diethylene glycol monobutyl ether, propylene glycol monobutyl ether and tetraethylene glycol chlorophenyl ether; and lower alcohols such as ethanol.

The amount of the penetrant contained in the recording ink is preferably 0.1% by mass to 4.0% by mass. When the amount is less than 0.1% by mass, the ink does not have quick-drying properties and thus image bleeding may arise. When it is greater than 4.0% by mass, the dispersion stability of the colorant is impaired, and thus a nozzle becomes easily clogged; also, the ink has more penetrability to a recording medium than necessary, and thus image density may decrease or offset may arise.

- Water-dispersible Resin -

The water-dispersible resin is superior in film-forming property (image-forming property), has high water repellency, high water resistance and high weatherability and is useful for recording images with high water resistance and high density (high color-developing ability). Examples thereof include condensed synthetic resins, additional synthetic resins and natural polymer compounds.

Examples of the condensed synthetic resins include polyester resins, polyurethane resins, polyepoxy resins, polyamide resins, polyether resins, poly(meth)acrylic resins, acrylic-silicone resins and fluorine resins. Examples of the additional synthetic resins include polyolefin resins, polystyrene resins, polyvinyl alcohol resins, polyvinyl ester resins, polyacrylic resins and unsaturated carboxylic resins. Examples of the natural polymer compounds include celluloses, rosins and natural rubbers.

Among these, polyurethane resin fine particles, acrylic-silicone resin fine particles and fluorine resin fine particles are particularly preferable. Also, each of these water-dispersible resins can be used in combination with two or more without any problems.

For the fluorine resins, fluorine resin fine particles having fluoroolefin units are suitable. Among these, fluorine-containing vinyl ether resin fine particles composed of fluoroolefin units and vinyl ether units are particularly preferable.

The fluoroolefin units are not particularly limited and may be suitably selected in accordance with the intended use. Examples thereof include $-CF_2CF_2-$, $-CF_2CF(CF_3)-$ and $-CF_2CFCl-$.

The vinyl ether units are not particularly limited and may be suitably selected in accordance with the intended use. Examples thereof include the compounds represented by the following structural formulae.

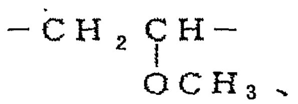 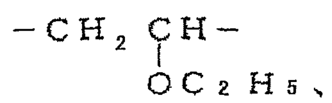 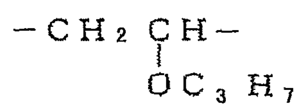

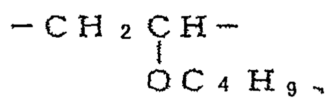 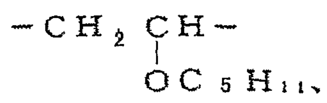 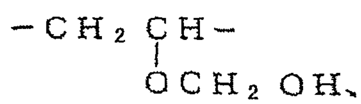

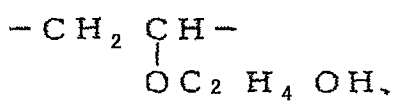 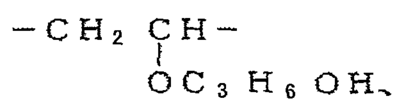

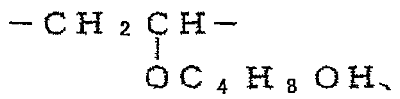 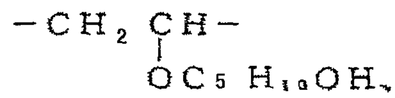

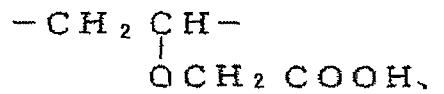 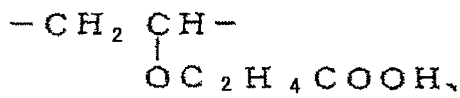

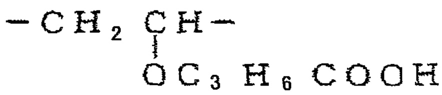、 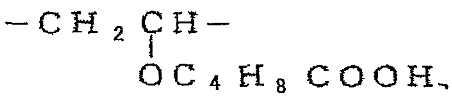、

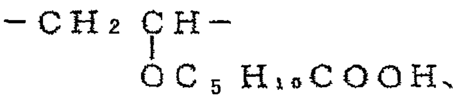、 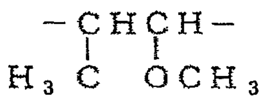、 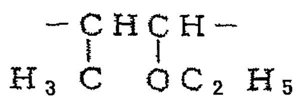、

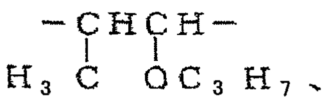、 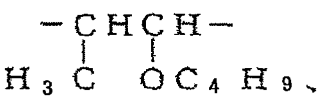、 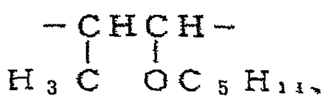、

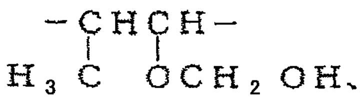、 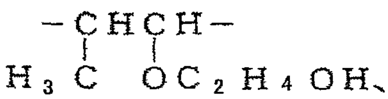、

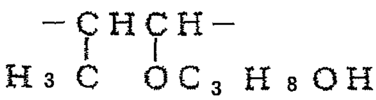、 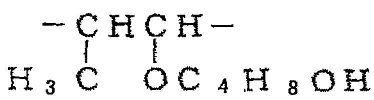、

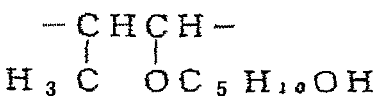、 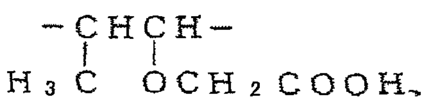、

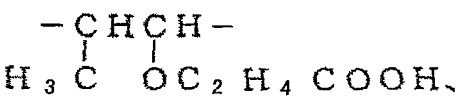、 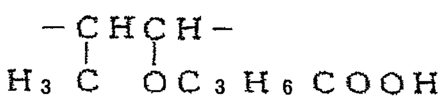、

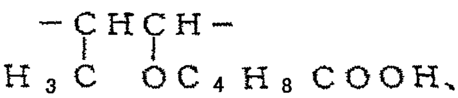、 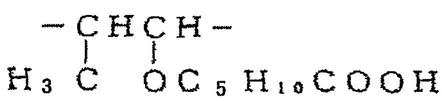、

For the fluorine-containing vinyl ether resin fine particles composed of fluoroolefin units and vinyl ether units, alternate copolymers are suitable in which the fluoroolefin units and the vinyl ether units are alternately copolymerized.

For such fluorine resin fine particles, suitably synthesized compounds may be used, or commercially available products may be used. Examples of the commercially available products include FLUONATE FEM-500, FEM-600, DICGUARD F-52S, F-90, F-90M, F-90N and AQUAFURAN TE-5A produced by Dainippon Ink And Chemicals, Incorporated; and LUMIFLON FE4300, FE4500, FE4400, ASAHIGUARD AG-7105, AG-950, AG-7600, AG-7000 and AG-1100 produced by Asahi Glass Co., Ltd.

The water-dispersible resin may be used as a homopolymer or may be subjected to copolymerization and used as a composite resin; and any one of a single-phase emulsion, a core-shell emulsion and a power feed emulsion can be used therefor.

For the water-dispersible resin, what can be used is a resin in which the resin itself has a hydrophilic group and self-dispersibility, or a resin in which the resin itself does not have dispersibility, but a surfactant or a resin having a hydrophilic group gives dispersibility. Among such resins, ionomers of polyester resins and polyurethane resins, and emulsions of resin particles obtained by emulsion polymerization and suspension polymerization of unsaturated monomers are ideal. In the case of emulsion polymerization of an unsaturated monomer, since a resin emulsion is obtained by a reaction using water to which the unsaturated monomer, a polymerization initiator, a surfactant, a chain transfer agent, a chelator, a pH adjuster and the like have been added, it is easily possible to obtain a water-dispersible resin and change the resinous structure, and thus desired properties can be easily created.

Examples of the unsaturated monomers include unsaturated carboxylic acids, monofunctional or multifunctional

(meth)acrylic acid ester monomers, (meth)acrylic acid amide monomers, aromatic vinyl monomers, vinyl cyano compound monomers, vinyl monomers, allyl compound monomers, olefin monomers, diene monomers and oligomers having unsaturated carbon. Each of these may be used alone or in combination. It is possible to improve properties flexibly by combining these monomers together, and it is also possible to improve the characteristics of the resin by producing polymerization reaction or graft reaction with the use of an oligomer-type polymerization initiator.

Examples of the unsaturated carboxylic acids include acrylic acid, methacrylic acid, itaconic acid, fumaric acid and maleic acid.

Examples of the monofunctional (meth)acrylic acid ester monomers include methyl methacrylate, ethyl methacrylate, isopropyl methacrylate, n-butyl methacrylate, isobutyl methacrylate, n-amyl methacrylate, isoamyl methacrylate, n-hexyl methacrylate, 2-ethylhexyl methacrylate, octyl methacrylate, decyl methacrylate, dodecyl methacrylate, octadecyl methacrylate, cyclohexyl methacrylate, phenyl methacrylate, benzyl methacrylate, glycidyl methacrylate, 2-hydroxyethyl methacrylate, 2-hydroxypropyl methacrylate, dimethylaminoethyl methacrylate, methacryloxyethyltrimethyl ammonium salts, 3-methacryloxypropyltrimethoxysilane, methyl acrylate, ethyl acrylate, isopropyl acrylate, n-butyl acrylate, isobutyl acrylate, n-amyl acrylate, isoamyl acrylate, n-hexyl acrylate, 2-ethylhexyl acrylate, octyl acrylate, decyl acrylate, dodecyl acrylate, octadecyl acrylate, cyclohexyl acrylate, phenyl acrylate, benzyl acrylate, glycidyl acrylate, 2-hydroxyethyl acrylate, 2-hydroxypropyl acrylate, dimethylaminoethyl acrylate and acryloxyethyltrimethyl ammonium salts.

Examples of the multifunctional (meth)acrylic acid ester monomers include ethylene glycol dimethacrylate, diethylene glycol dimethacrylate, triethylene glycol dimethacrylate, polyethylene glycol dimethacrylate, 1,3-butylene glycol dimethacrylate, 1,4-butylene glycol dimethacrylate, 1,6-hexanediol dimethacrylate, neopentyl glycol dimethacrylate, dipropylene glycol dimethacrylate, polypropylene glycol dimethacrylate, polybutylene glycol dimethacrylate, 2,2'-bis(4-methacryloxydiethoxyphenyl)propane, trimethylolpropane trimethacrylate, trimethylolethane trimethacrylate, polyethylene glycol diacrylate, triethylene glycol diacrylate, 1,3-butylene glycol diacrylate, 1,4-butylene glycol diacrylate, 1,6-hexanediol diacrylate, neopentyl glycol diacrylate, 1,9-nonanediol diacrylate, polypropylene glycol diacrylate, 2,2'-bis(4-acryloxypropyloxyphenyl)propane, 2,2'-bis(4-acryloxydiethoxyphenyl)propane trimethylolpropane triacrylate, trimethylolethane triacrylate, tetramethylolmethane triacrylate, ditrimethylol tetraacrylate, tetramethylolmethane tetraacrylate, pentaerythritol tetraacrylate and dipentaerythritol hexaacrylate.

Examples of the (meth)acrylic acid amide monomers include acrylamide, methacrylamide, N,N-dimethyl acrylamide, methylenebisacrylamide and 2-acrylamide-2-methylpropanesulfonic acid.

Examples of the aromatic vinyl monomers include styrene, $\alpha$-methylstyrene, vinyltoluene, 4-t-butylstyrene, chlorostyrene, vinylanisole, vinylnaphthalene and divinylbenzene.

Examples of the vinyl cyano compound monomers include acrylonitrile and methacrylonitrile.

Examples of the vinyl monomers include vinyl acetate, vinylidene chloride, vinyl chloride, vinyl ether, vinyl ketone, vinylpyrrolidone, vinyl sulfonic acid or salts thereof, vinyltrimethoxysilane and vinyltriethoxysilane.

Examples of the allyl compound monomers include allyl sulfonic acid or salts thereof, allylamine, allyl chloride, diallylamine and diallyldimethylammonium salts.

Examples of the olefin monomers include ethylene and propylene.

Examples of the diene monomers include butadiene and chloroprene.

Examples of the oligomers having unsaturated carbon include styrene oligomers having methacryloyl groups, styrene-acrylonitrile oligomers having methacryloyl groups, methyl methacrylate oligomers having methacryloyl groups, dimethylsiloxane oligomers having methacryloyl groups and polyester oligomers having acryloyl groups.

Since the water-dispersible resin has its molecular chains broken by dispersion destruction, hydrolysis or the like under strongly alkaline or acidic conditions, the pH thereof is preferably 4 to 12, more preferably 6 to 11 and even more preferably 7 to 9 especially in view of its miscibility with the water-dispersible colorant.

The average particle diameter ($D_{50}$) of the water-dispersible resin is related to the viscosity of dispersion solution. As to water-dispersible resins having the same composition, the smaller the average particle diameter is, the greater the viscosity is per the same solid content. In order to avoid excessively high ink viscosity when ink has been formed, it is desirable for the average particle diameter ($D_{50}$) of the water-dispersible resin to be 50nm or greater. Also, when the water-dispersible resin has a particle diameter that reaches up to several tens of micrometers, particles become larger in size than a nozzle orifice of the ink-jet head, and thus the water-dispersible resin is impossible to use. When particles which are smaller in size than the nozzle orifice but still large in diameter are present in the ink, the ability of the ink to eject is degraded. Accordingly, in order to prevent the ink ejection ability from being impaired, it is desirable for the average particle diameter ($D_{50}$) to be 200nm or less, more desirably 150nm or less.

The water-dispersible resin has a function of fixing the water-dispersible colorant onto paper and preferably forms into a coating at normal temperature so as to enhance coloring material fixing properties. For that reason, the minimum film-forming temperature (MFT) of the water-dispersible resin is preferably 30°C or lower. Also, when the water-dispersible resin has a glass transition temperature of -40°C or lower, the resin coating becomes highly viscous, and so printed matter becomes tacky; therefore, the water-dispersible resin preferably has a glass transition temperature of -30°C or higher.

The amount of the water-dispersible resin contained in the recording ink is preferably 1% by mass to 15% by mass, more preferably 2% by mass to 7% by mass, as a solid content.

Here, the amounts of the colorant, pigment in the colorant, and the water-dispersible resin contained in the ink as solid contents can be measured, for example, by separating only the colorant and the water-dispersible resin from the ink. When a pigment is used as the colorant, it is possible to measure the ratio between the colorant and the water-dispersible resin by evaluating the weight decrease rate according to thermogravimetric analysis. Also, when the molecular structure of the colorant is obvious, it is possible in the case of pigment and dye to determine the amount of the colorant as a solid content by means of NMR, and it is possible in the case of inorganic pigment, gold-containing organic pigment and gold-containing dye contained in heavy-metal atoms and molecular frameworks to determine the amount of the colorant as a solid content by means of fluorescent X-ray analysis.

As to the ink of the present invention, the moisture content is normally 50% by weight or more, and the total amount of resin and pigment is normally 3% by weight or more. Thus, the evaporation rate of a solvent is normally 50% by weight to 97% by weight.

- Other Components -

The above-mentioned other components are not particularly limited and may be suitably selected in accordance with the necessity. Examples thereof include a pH adjuster, an antiseptic/antifungal agent, a chelating reagent, an antirust agent, an antioxidant, a UV absorber, an oxygen absorber and a light stabilizer.

The pH adjuster is not particularly limited and may be suitably selected in accordance with the intended use, as long as it can adjust the pH to the range of 7 to 11 without having an adverse effect on a recording ink to be prepared. Examples thereof include alcohol amines, hydroxides of alkali metals, ammonium hydroxides, phosphonium hydroxides, and carbonates of alkali metals. When the pH is less than 7 or greater than 11, the ink-jet head and/or an ink supply unit are/is dissolved by large amounts, and thus troubles such as degradation or leakage of the ink and ejection failure may arise.

Examples of the alcohol amines include diethanolamine, triethanolamine and 2-amino-2-ethyl-1,3-propanediol.

Examples of the hydroxides of alkali metals include lithium hydroxide, sodium hydroxide and potassium hydroxide.

Examples of the ammonium hydroxides include ammonium hydroxide, quaternary ammonium hydroxides and quaternary phosphonium hydroxides.

Examples of the carbonates of alkali metals include lithium carbonate, sodium carbonate and potassium carbonate.

Examples of the antiseptic/antifungal agent include sodium dehydroacetate, sodium sorbate, sodium 2-pyridinethiol-1-oxide, sodium benzoate and sodium pentachlorophenol.

Examples of the chelating reagent include sodium ethylenediamine tetraacetate, sodium nitrilotriacetate, sodium hydroxyethylethylenediamine triacetate, sodium diethylenetriamine pentaacetate and sodium uramil diacetate.

Examples of the antirust agent include acid sulfites, sodium thiosulfate, ammonium thiodiglycolate, diisopropylammonium nitrate, pentaerythritol tetranitrate and dicyclohexylammonium nitrate.

Examples of the antioxidant include phenolic antioxidants (including hindered phenol antioxidants), amine antioxidants, sulfur antioxidants and phosphorus antioxidants.

Examples of the phenolic antioxidants (including hindered phenol antioxidants) include butylated hydroxyanisole, 2,6-di-tert-butyl-4-ethylphenol, stearyl-β-(3,5-di-tert-butyl-4-hydroxyphenyl)propionate, 2,2'-methylenebis(4-methyl-6-tert-butylphenol), 2,2'-methylenebis(4-ethyl-6-tert-butylphenol), 4,4'-butylidenebis(3-methyl-6-tert-butylphenol), 3,9-bis[1,1-dimethyl-2-[β-(3-tert-butyl-4-hydroxy-5-methyphenyl) propionyloxy]ethyl]-2,4,8,10-tetraoxaspiro[5.5]undecane, 1,1,3-tris(2-methyl-4-hydroxy-5-tert-butylphenyl)butane, 1,3,5-trimethyl-2,4,6-tris(3,5-di-tert-butyl-4-hydroxybenzyl)benz ene and tetrakis[methylene-3-(3',5'-di-tert-butyl-4'-hydroxyphenyl)propio nate]methane.

Examples of the amine antioxidants include phenyl-β-naphthylamine, α-naphthylamine, N,N'-di-sec-butyl-p-phenylenediamine, phenothiazine, N,N'-diphenyl-p-phenylenediamine, 2,6-di-tert-butyl-p-cresol, 2,6-di-tert-butylphenol, 2,4-dimethyl-6-tert-butyl-phenol, butyl hydroxyanisole, 2,2'-methylenebis(4-methyl-6-tert-butylphenol), 4,4'-butylidenebis(3-methyl-6-tert-butylphenol), 4,4'-thiobis(3-methyl-6-tert-butylphenol), tetrakis[methylene-3-(3,5-di-tert-butyl-4-dihydroxyphenyl)propi onate]methane and 1,1,3-tris(2-methyl-4-hydroxy-5-tert-butylphenyl)butane.

Examples of the sulfur antioxidants include dilauryl 3,3'-thiodipropionate, distearyl thiodipropionate, lauryl stearyl thiodipropionate, dimyristyl-3,3'-thiodipropionate, distearyl β,β'-thiodipropionate, 2-mercaptobenzimidazole and dilauryl sulfide.

Examples of the phosphorus antioxidants include triphenyl phosphite, octadecyl phosphite, triisodecyl phosphite, trilauryl trithiophosphite and trinonylphenyl phosphite.

Examples of the UV absorber include benzophenone UV absorbers, benzotriazole UV absorbers, salicylate UV absorbers, cyanoacrylate UV absorbers and nickel complex salt UV absorbers.

Examples of the benzophenone UV absorbers include 2-hydroxy-4-n-octoxybenzophenone, 2-hydroxy-4-n-dodecyloxybenzophenone, 2,4-dihydroxybenzophenone, 2-hydroxy-4-methoxybenzophenone and 2,2',4,4'-tetrahydroxybenzophenone.

Examples of the benzotriazole UV absorbers include 2-(2'-hydroxy-5'-tert-octylphenyl)benzotriazole, 2-(2'-hydroxy-5'-methylphenyl)benzotriazole, 2-(2'-hydroxy-4'-octoxyphenyl)benzotriazole and 2-(2'-hydroxy-3'-tert-butyl-5'-methylphenyl)-5-chlorobenzotriazol e.

Examples of the salicylate UV absorbers include phenyl salicylate, p-tert-butylphenyl salicylate and p-octylphenyl salicylate.

Examples of the cyanoacrylate UV absorbers include ethyl-2-cyano-3,3'-diphenyl acrylate, methyl-2-cyano-3-methyl-3-(p-methoxyphenyl) acrylate and butyl-2-cyano-3-methyl-3-(p-methoxyphenyl) acrylate.

Examples of the nickel complex salt UV absorbers include nickel bis(octylphenyl) sulfide, 2,2'-thiobis(4-tert-octylphelate)-n-butylamine nickel (II), 2,2'-thiobis(4-tert-octylphelate)-2-ethylhexylamine nickel (II) and 2,2'-thiobis(4-tert-octylphelate) triethanolamine nickel (II).

The recording ink of the present invention is produced by dispersing or dissolving in an aqueous medium a colorant, a water-soluble organic solvent (a wetting agent), a surfactant, a penetrant, a water-dispersible resin and water, with the addition of other components in accordance with the necessity, and stirring and mixing the ingredients if need be. The dispersion can be carried out, for example, by a sand mill, a homogenizer, a ball mill, a paint shaker, an ultrasonic dispersing machine, etc., and the stirring and mixing can be carried out, for example, by an ordinary stirrer using stirring blades, a magnetic stirrer, a high-speed dispersing machine, etc.

The properties of the recording ink of the present invention are not particularly limited and may be suitably selected in accordance with the intended use. For instance, it is desirable that the viscosity, surface tension and the like of the recording ink be in the following ranges.

The viscosity of the recording ink at 25°C is preferably 5mPa·s to 20mPa·s. By making the ink viscosity equal to or greater than 5mPa·s, it is possible to obtain the effects with which to increase printing density and the quality of letters/characters. By making it equal to or less than 20mPa·s, it is possible to secure ejection stability.

Here, the viscosity can be measured at 25°C, using a viscometer (RL-500, manufactured by Toki Sangyo Co., Ltd.), for instance.

The surface tension of the recording ink is preferably 35mN/m or less, more preferably 32mN/m or less, at 25°C. When the surface tension is greater than 35mN/m, leveling of the ink on a recording medium hardly takes place, and thus it may take a longer time for the ink to dry.

The coloring of the recording ink of the present invention is not particularly limited and may be suitably selected in accordance with the intended use. For instance, the recording ink is colored yellow, magenta, cyan or black. When recording is carried out using an ink set in which two or more of the colors are used together, it is possible to form a multicolor image, and when recording is carried out using an ink set in which all the colors are used together, it is possible to form a full-color image.

The recording ink of the present invention can be suitably used for printers equipped with ink-jet heads of any type, including the piezo type in which ink droplets are ejected by deforming a diaphragm that forms a wall surface of an ink flow path, with the use of a piezoelectric element as a pressure generating unit that pressurizes ink in the ink flow path, and thusly changing the volume of the ink flow path (refer to JP-A No. 02-51734); the thermal type in which bubbles are generated by heating ink in an ink flow path with the use of an exothermic resistive element (refer to JP-A No. 61-59911); and the electrostatic type in which ink droplets are ejected by placing a diaphragm and an electrode, which form a wall surface of an ink flow path, to face each other, then deforming the diaphragm by electrostatic force generated between the diaphragm and the electrode, and thusly changing the volume of the ink flow path (refer to JP-A No. 06-71882).

The recording ink of the present invention can be suitably used in a variety of fields such as ink-jet recording inks, fountain pens, ballpoint pens, markers and felt-tip pens, notably in image-forming apparatuses (printers, etc.) each employing an ink-jet recording method. For instance, the recording ink can be used in a printer which has a function of encouraging printing fixation by heating recording paper and the recording ink to a temperature of 50°C to 200°C during, before or after printing. The recording ink can be particularly suitably used in the ink media set, the ink cartridge, the ink-jet recording method, the ink-jet recording apparatus and the ink recorded matter of present invention described below.

(Ink Media Set)

The ink media set of the present invention is a combination of the recording ink of the present invention and a recording medium.

<Recording Medium>

The recording medium is not particularly limited and may be suitably selected in accordance with the intended use. Suitable examples thereof include plain paper, gloss paper, special paper, cloth, films, OHP sheets and general-purpose printing paper.

In order to obtain an exquisite ink recorded matter such as a printed image, what is used among these is a recording medium including a support, and a coating layer applied onto at least one surface of the support, in which the amount of purified water transferred to the recording medium at a contact period of 100ms measured by a dynamic scanning absorptometer is 2ml/$m^2$ to 35ml/$m^2$ and the amount of purified water transferred to the recording medium at a contact period of 400ms measured by the dynamic scanning absorptometer is 3ml/$m^2$ to 40ml/$m^2$.

The amount of purified water transferred to the recording medium at a contact period of 100ms measured by the dynamic scanning absorptometer is preferably 2ml/$m^2$ to 5ml/$m^2$ and the amount of purified water transferred to the recording medium at a contact period of 400ms measured by the dynamic scanning absorptometer is preferably 3ml/$m^2$ to 10ml/$m^2$.

When the amount of the ink and purified water transferred at the contact period of 100ms is too small, beading (nonuniformity of density) may easily arise. When it is too large, the ink dot diameter after recording may become far smaller than desired.

When the amount of the ink and purified water transferred at the contact period of 400ms is too small, sufficient drying properties cannot be obtained, and thus spur marks may easily appear. When it is too large, the glossiness of an image portion after dried may easily lower.

Here, the dynamic scanning absorptometer (DSA, Japan TAPPI Journal, vol. 48, May 1994, pp. 88-92, Shigenori Kuga) is an apparatus which can precisely measure the amount of liquid absorbed in a very short period of time. The dynamic scanning absorptometer automatically conducts the measurement by a method in which the rate of liquid absorption is directly read on the basis of the transfer of a meniscus in a capillary, a sample is shaped like a disc, a liquid absorption head is spirally moved for scanning on the sample, the scanning rate is automatically changed in accordance with a preset pattern, and measurement is repeated according to the required number of points per sample. A head for supplying liquid to a paper sample is connected to the capillary via a Teflon (trademark) tube, and the position of the meniscus in the capillary is automatically read by an optical sensor. Specifically, the amount of purified water transferred was measured using a dynamic scanning absorptometer (K350 series, Model D, manufactured by Kyowaseiko Corporation). The transfer amount at a contact period of 100ms and the transfer amount at a contact period of 400ms can be calculated by means of interpolation based upon the measurement values of the transfer amounts at contact periods close to the above-mentioned contact periods.

- Support -

The support is not particularly limited and may be suitably selected in accordance with the intended use. Examples thereof include paper made mainly from wood fiber, and sheet-like materials such as unwoven fabrics made mainly from wood fiber and synthetic fiber.

The paper is not particularly limited and may be suitably selected from known materials in accordance with the intended use. For instance, wood pulp or recycled pulp is used therefor. Examples of the wood pulp include leaf bleached kraft pulp (LBKP), needle bleached kraft pulp (NBKP), NBSP, LBSP, GP and TMP.

Examples of the raw material for the recycled pulp include articles shown in the "Used Paper Standard Quality Specification List" released by Paper Recycling Promotion Center, such as high-quality white paper, white paper with lines and marks, cream-colored paper, card, medium-quality white paper, low-quality white paper, simili paper, white-colored paper, Kent paper, white art paper, medium-quality colored paper, low-quality colored paper, newspaper and magazine. Specific examples thereof include used paperboards and used papers of the following papers: printer papers such as uncoated computer paper, thermosensitive paper and pressure-sensitive paper that are related to information; OA (office automation) related papers such as paper for PPC (plain paper copier); coated papers such as art paper, coated paper, finely coated paper and matte paper; and uncoated papers such as high-quality paper, high color quality paper, notebook, letter paper, packing paper, fancy paper, medium-quality paper, newspaper, woody paper, super wrapping paper, simili paper, pure white roll paper and milk carton. More specific examples thereof include chemical pulp paper and high-yield pulp-containing paper. Each of these may be used alone or in combination with two or more.

The recycled pulp is generally produced by a combination of the following four steps.

(1) Defibration: used paper is treated with mechanical force and chemicals using a pulper and thusly fiberized, and printing ink is separated from the fiber.

(2) Dust removal: foreign matter (plastic, etc.) and dust contained in the used paper is removed by a screen, a cleaner or the like.

(3) Ink removal: the printing ink that has been separated from the fiber using a surfactant is removed from the system by a flotation method or washing method.
(4) Bleaching: the whiteness of the fiber is enhanced utilizing oxidation or reduction.

When the recycled pulp is mixed with other pulp, it is desirable that the mixture ratio of the recycled pulp in the whole pulp be 40% or less so as to prevent curl after recording.

For an internally added filler used in the support, a conventionally known pigment as a white pigment is used, for instance. Examples of the white pigment include white inorganic pigments such as light calcium carbonate, heavy calcium carbonate, kaolin, clay, talc, calcium sulfate, barium sulfate, titanium dioxide, zinc oxide, zinc sulfide, zinc carbonate, satin white, aluminum silicate, diatomaceous earth, calcium silicate, magnesium silicate, synthetic silica, aluminum hydroxide, alumina, lithopone, zeolite, magnesium carbonate and magnesium hydroxide; and organic pigments such as styrene-based plastic pigments, acrylic plastic pigments, polyethylene, microcapsules, urea resins and melamine resins. Each of these may be used alone or in combination with two or more.

Examples of an internally added sizing agent used in producing the support include neutral rosin sizing agents used in neutral papermaking, alkenyl succinic anhydrides (ASA), alkyl ketene dimers (AKD) and petroleum resin sizing agents. Among these, neutral rosin sizing agents and alkenyl succinic anhydrides are particularly suitable. Although any of the alkyl ketene dimers only needs to be added in small amounts due to its strong sizing effect, it may be unfavorable in terms of conveyance at the time of ink-jet recording because the friction coefficient of a recording paper (medium) surface decreases and the surface easily becomes slippery.

The thickness of the support is not particularly limited and may be suitably selected in accordance with the intended use, with the range of 50μm to 300μm being preferable. The basis weight of the support is preferably $45g/m^2$ to $290g/m^2$.

- Coating Layer -

The coating layer includes a pigment and a binder, and further includes a surfactant and other components in accordance with the necessity.

For the pigment, an inorganic pigment or a combination of an inorganic pigment and an organic pigment can be used.

Examples of the inorganic pigment include kaolin, talc, heavy calcium carbonate, light calcium carbonate, calcium sulfite, amorphous silica, titanium white, magnesium carbonate, titanium dioxide, aluminum hydroxide, calcium hydroxide, magnesium hydroxide, zinc hydroxide and chlorites. Among these, kaolin is particularly preferable in that it is superior in gloss developing property and makes it possible to yield a texture which approximates that of paper for offset printing.

Examples of the kaolin include delaminated kaolin, calcined kaolin, and engineered kaolin produced by surface modification or the like. In view of gloss developing property, it is desirable that 50% by mass or more of the whole kaolin be occupied by kaolin having a particle size distribution in which 80% by mass or more of the particles are 2μm or less in diameter.

The amount of the kaolin added is preferably 50 parts by mass or more in relation to 100 parts by mass of the binder. When the amount is less than 50 parts by mass, sufficient effectiveness may not be obtained with respect to glossiness. Although the maximum value of the amount is not particularly limited, it is desirable in terms of coating suitability that the amount be 90 parts by mass or less, in view of the kaolin's fluidity, especially thickening properties in the presence of high shearing force.

Examples of the organic pigment include water-soluble dispersions containing styrene-acrylic copolymer particles, styrene-butadiene copolymer particles, polystyrene particles, polyethylene particles, etc. Each of these organic pigments may be used in combination with two or more.

The amount of the organic pigment added is preferably 2 parts by mass to 20 parts by mass in relation to 100 parts by mass of the whole pigment of the coating layer. The organic pigment is superior in gloss developing property and smaller in specific gravity than an inorganic pigment, thereby making it possible to obtain a coating layer which is bulky, highly glossy and excellent in surface coating property. When the amount is less than 2 parts by mass, such effects cannot be obtained. When it is greater than 20 parts by mass, the fluidity of a coating solution degrades, which leads to decrease in coating operationality and which is economically unfavorable as well.

Examples of the form of the organic pigment include dense type, hollow type and doughnut type. However, in light of a balance among the gloss developing property, the surface coating property, and the fluidity of the coating solution, it is desirable that the average particle diameter ($D_{50}$) be 0.2μm to 3.0μm, and it is further desirable to employ a hollow type with a void ratio of 40% or more.

For the binder, an aqueous resin is preferably used.

For the aqueous resin, at least either a water-soluble resin or a water-dispersible resin can be suitably used.

The water-soluble resin is not particularly limited and may be suitably selected in accordance with the intended use. Examples thereof include polyvinyl alcohol and modified products of polyvinyl alcohol such as anion-modified polyvinyl alcohol, cation-modified polyvinyl alcohol and acetal-modified polyvinyl alcohol; polyurethane; polyvinylpyrrolidone and modified products of polyvinylpyrrolidone such as copolymers of polyvinylpyrrolidone and vinyl acetate, copolymers of vinylpyrrolidone and dimethylaminoethyl methacrylate, copolymers of quaternized vinylpyrrolidone and dimethylaminoethyl methacrylate and copolymers of vinylpyrrolidone and methacrylamide propyl trimethyl ammonium chloride; celluloses such as carboxymethyl cellulose, hydroxyethyl cellulose and hydroxypropyl cellulose; modified products of cellulose such as cationated hydroxyethyl cellulose; synthetic resins such as polyester, polyacrylic acid (ester), melamine resins, modified products thereof, and copolymers of polyester and polyurethane; and poly(meth)acrylic acid, poly(meth)acrylamide, oxidized starch, phosphoric acid-esterified starch, self-modifying starch, cationated starch, various types of modified starch, polyethylene oxide, sodium polyacrylate and sodium alginate. Each of these may be used alone or in combination with two or more.

Among these, polyvinyl alcohol, cation-modified polyvinyl alcohol, acetal-modified polyvinyl alcohol, polyester, polyurethane, copolymers of polyester and polyurethane, and the like are particularly preferable in terms of ink absorption.

The water-dispersible resin is not particularly limited and may be suitably selected in accordance with the intended use. Examples thereof include polyvinyl acetate, ethylene-vinyl acetate copolymers, polystyrene, styrene-(meth)acrylic acid ester copolymers, (meth)acrylic acid ester polymers, vinyl acetate-(meth)acrylic acid (ester) copolymers, styrene-butadiene copolymers, ethylene-propylene copolymers, polyvinyl ethers and silicone-acrylic copolymers. Also, the water-dispersible resin may contain a crosslinking agent such as methylolated melamine, methylolated urea, methylolated hydroxypropylene urea or isocyanate or may be a copolymer with self-crosslinking ability that includes N-methylolacrylamide or other unit. A plurality of these aqueous resins can be used at the same time.

The amount of the aqueous resin added is preferably 2 parts by mass to 100 parts by mass, more preferably 3 parts by mass to 50 parts by mass, in relation to 100 parts by mass of the pigment. The amount of the aqueous resin added is determined such that the liquid absorption properties of the recording medium are within a desired range.

When a water-dispersible colorant is used as the colorant, a cationic organic compound is not necessarily required for the coating layer, and a cationic organic compound mixed into the coating layer is not particularly limited and may be suitably selected in accordance with the intended use. Examples of the cationic organic compound mixed into the coating layer include monomers, oligomers and polymers of primary to tertiary amines and quaternary ammonium salts, that form insoluble salts by reacting with functional groups such as sulfonic acid group, carboxyl group and amino group in direct dye or acid dye present in water-soluble ink. Among these, oligomers and polymers are preferable.

Examples of the cationic organic compound include dimethylamine-epichlorhydrin polycondensates, dimethylamine-ammonia-epichlorhydrin condensates, poly(trimethylaminoethyl methacrylate-methylsulfate), diallylamine hydrochloride-acrylamide copolymers, poly(diallylamine hydrochloride-sulfur dioxide), polyallylamine hydrochloride, poly(allylamine hydrochloride-diallylamine hydrochloride), acrylamide-diallylamine copolymers, polyvinylamine copolymers, dicyandiamide, dicyandiamide-ammonium chloride-urea-formaldehyde condensates, polyalkylene polyamine-dicyandiamide ammonium salt condensates, dimethyldiallylammonium chloride, polydiallylmethylamine hydrochloride, poly(diallyldimethylammonium chloride), poly(diallyldimethylammonium chloride-sulfur dioxide), poly(diallyldimethylammonium chloride-diallylamine hydrochloride derivatives), acrylamide-diallyldimethylammonium chloride copolymers, acrylate-acrylamide-diallylamine hydrochloride copolymers, polyethylenimine, ethylenimine derivatives such as acrylamine polymers, and modified products of polyethylenimine alkylene oxides. Each of these may be used alone or in combination with two or more.

Among these, any one of low-molecular cationic organic compounds such as dimethylamine-epichlorhydrin polycondensates and polyallylamine hydrochloride and any one of relatively high-molecular cationic organic compounds such as poly(diallyldimethylammonium chloride) are preferably combined together. The combination makes it possible to increase image density more than in the case of independent use and further reduce feathering.

The cation equivalent of the cationic organic compound measured in accordance with a colloid titration method (using potassium polyvinyl sulfate and toluidine blue) is preferably 3meq/g to 8meq/g. When the cation equivalent is in this range, a favorable result can be obtained with respect to the range of the amount of the cationic organic compound dried and attached.

Here, in the measurement of the cation equivalent in accordance with the colloid titration method, the cationic organic compound is diluted with distilled water such that the solid content stands at 0.1% by mass, and pH adjustment is not made.

The amount of the cationic organic compound dried and attached is preferably 0.3g/m$^2$ to 2.0g/m$^2$. When the amount of the cationic organic compound dried and attached is less than 0.3g/m$^2$, such effects as sufficient increase in image density and reduction in feathering may not be obtained.

The surfactant included in the coating layer in accordance with the necessity is not particularly limited and may be suitably selected in accordance with the intended use, and any one of an anionic surfactant, a cationic surfactant, an amphoteric surfactant and a nonionic surfactant can be used therefor. Among these, a nonionic surfactant is particularly

preferable. By addition of the surfactant, the water resistance of images improves, image density increases, and bleeding can be reduced.

Examples of the nonionic surfactant include higher alcohol ethylene oxide adducts, alkylphenol ethylene oxide adducts, fatty acid ethylene oxide adducts, polyhydric alcohol fatty acid ester ethylene oxide adducts, higher aliphatic amine ethylene oxide adducts, fatty acid amide ethylene oxide adducts, ethylene oxide adducts of fats, polypropylene glycol ethylene oxide adducts, fatty acid esters of glycerol, fatty acid esters of pentaerythritol, fatty acid esters of sorbitol and sorbitan, fatty acid esters of sucrose, alkyl ethers of polyhydric alcohols, and fatty acid amides of alkanolamines. Each of these may be used alone or in combination with two or more.

The polyhydric alcohols are not particularly limited and may be suitably selected in accordance with the intended use. Examples thereof include glycerol, trimethylolpropane, pentaerythrite, sorbitol and sucrose. As to the ethylene oxide adducts, ones in which an alkylene oxide, for example propylene oxide or butylene oxide, is substituted for part of ethylene oxide to such an extent that their water solubility can be maintained are also effective. The substitution ratio is preferably 50% or less. The HLB (hydrophile-lipophile balance) of the nonionic surfactant is preferably 4 to 15, more preferably 7 to 13.

The amount of the surfactant added is preferably 0 parts by mass to 10 parts by mass, more preferably 0.1 parts by mass to 1.0 part by mass, in relation to 100 parts by mass of the cationic organic compound.

Further, other components may be added to the coating layer in accordance with the necessity, to such an extent that the object and effects of the present invention are not impaired. Examples of the other components include additives such as alumina powder, a pH adjuster, an antiseptic agent and an antioxidant.

The method for forming the coating layer is not particularly limited and may be suitably selected in accordance with the intended use. For instance, a method in which the support is impregnated or coated with a coating layer solution can be employed. The method of impregnating or coating the support with the coating layer solution is not particularly limited and may be suitably selected in accordance with the intended use. For instance, the impregnation or the coating can be carried out using a coating machine such as a conventional size press, gate roll size press, film transfer size press, blade coater, rod coater, air knife coater, curtain coater or the like. Also, in view of cost, the support may be impregnated or coated with the coating layer solution using a conventional size press, gate roll size press, film transfer size press, etc. installed in a papermaking machine and may be finished using an on-machine coater.

The amount of the coating layer solution applied is not particularly limited and may be suitably selected in accordance with the intended use. It is preferably $0.5g/m^2$ to $20g/m^2$, more preferably $1g/m^2$ to $15g/m^2$, as a solid content.

If necessary, the coating layer solution may be dried after the impregnation or the coating, in which case the drying temperature is not particularly limited and may be suitably selected in accordance with the intended use, with the range of approximately 100°C to 250°C being preferable.

The recording medium may further include a back layer formed on the back surface of the support, and other layers formed between the support and the coating layer and between the support and the back layer. It is also possible to provide a protective layer on the coating layer. Each of these layers may be composed of a single layer or a plurality of layers.

For the recording medium, it is possible to use commercially available general-purpose printing paper, coated paper for offset printing, coated paper for gravure printing, etc. besides an ink-jet recording medium.

The commercially available coated paper for printing denotes coated paper such as cast-coated paper, so-called art paper (A0 size and A1 size), A2 size coated paper, A3 size coated paper, B2 size coated paper, lightweight coated paper or finely coated paper, used for commercial printing or publication printing, e.g. offset printing or gravure printing.

Specific examples thereof include AURORA COAT (produced by Nippon Paper Industries Co., Ltd.) and POD GLOSS COAT (produced by Oji Paper Company, Limited).

(Ink Cartridge)

The ink cartridge of the present invention includes a container to house the recording ink of the present invention, and further includes other members, etc. suitably selected in accordance with the necessity.

The container is not particularly limited, and the shape, structure, size, material and the like thereof may be suitably selected in accordance with the intended use. Suitable examples thereof include a container having an ink bag or the like formed of an aluminum laminated film, resin film, etc.

Next, the ink cartridge will be explained with reference to FIGS. 1 and 2. Here, FIG. 1 is a schematic diagram exemplarily showing the ink cartridge of the present invention, and FIG. 2 is a schematic diagram exemplarily showing a modified example of the ink cartridge in FIG. 1.

As shown in FIG. 1, the recording ink of the present invention is supplied from an ink inlet (242) into an ink bag (241), and the ink inlet (242) is closed by means of fusion bonding after air is discharged. When the ink cartridge is used, an ink ejection outlet (243) made of a rubber member is pricked with a needle of an ink-jet recording apparatus main

body (101) later described with reference to FIG. 3, and the ink is thus supplied to the apparatus main body (101).

The ink bag (241) is formed of an air-impermeable packing member such as an aluminum laminated film. As shown in FIG. 2, this ink bag (241) is normally housed in a plastic cartridge case (244) and detachably mounted on a variety of ink-jet recording apparatuses.

The ink cartridge (201) of the present invention houses the recording ink (ink set) of the present invention and can be detachably mounted on a variety of ink-jet recording apparatuses. It is particularly desirable that the ink cartridge (201) be detachably mounted on the after-mentioned ink-jet recording apparatus of the present invention.

(Ink-jet Recording Method and Ink-jet Recording Apparatus)

The ink-jet recording method of the present invention includes at least an ink jetting step, and further includes other steps suitably selected in accordance with the necessity, such as a stimulus generating step and a controlling step.

The ink-jet recording apparatus of the present invention includes at least an ink jetting unit, and further includes other units suitably selected in accordance with the necessity, such as a stimulus generating unit and a controlling unit.

The ink-jet recording method of the present invention can be suitably performed by the ink-jet recording apparatus of the present invention, and the ink jetting step can be suitably performed by the ink jetting unit. Also, the other steps can be suitably performed by the other units.

- Ink Jetting Step and Ink Jetting Unit -

The ink jetting step is a step of jetting the recording ink of the present invention so as to form an image on a recording medium, by applying a stimulus (energy) to the recording ink.

The ink jetting unit is a unit configured to jet the recording ink of the present invention so as to form an image on a recording medium, by applying a stimulus (energy) to the recording ink. The ink jetting unit is not particularly limited, and examples thereof include nozzles for ejecting ink.

In the present invention, at least part of a liquid chamber, a fluid resistance unit, a diaphragm and a nozzle member of the ink-jet head is preferably formed of a material containing at least either silicone or nickel.

Also, the diameter of the ink-jet nozzle is preferably 30μm or less, more preferably 1μm to 20μm.

The stimulus (energy) can, for example, be generated by the stimulus generating unit, and the stimulus is not particularly limited and may be suitably selected in accordance with the intended use. Examples thereof include heat (temperature), pressure, vibration and light. Each of these may be used alone or in combination with two or more. Among these, heat and pressure are suitable.

Examples of the stimulus generating unit include heaters, pressurizers, piezoelectric elements, vibration generators, ultrasonic oscillators and lights. Specific examples thereof include a piezoelectric actuator such as a piezoelectric element, a thermal actuator that uses a thermoelectric conversion element such as an exothermic resistive element and utilizes phase change caused by film boiling of a liquid, a shape-memory-alloy actuator that utilizes metal phase change caused by temperature change, and an electrostatic actuator that utilizes electrostatic force.

The aspect of the jetting of the recording ink is not particularly limited and varies according to the type or the like of the stimulus. In the case where the stimulus is "heat", there is, for example, a method in which thermal energy corresponding to a recording signal is given to the recording ink in a recording head, using a thermal head or the like, bubbles are generated in the recording ink by the thermal energy, and the recording ink is ejected as droplets from nozzle holes of the recording head by the pressure of the bubbles. Meanwhile, in the case where the stimulus is "pressure", there is, for example, a method in which by applying voltage to a piezoelectric element bonded to a site called a pressure chamber that lies in an ink flow path in a recording head, the piezoelectric element bends, the volume of the pressure chamber decreases, and thus the recording ink is ejected as droplets from nozzle holes of the recording head.

It is desirable that the recording ink droplets jetted be, for example, $3\times10^{-15}m^3$ to $40\times10^{-15}m^3$ (3pL to 40pL) in size, 5m/s to 20m/s in ejection velocity, 1kHz or greater in drive frequency and 300dpi or greater in resolution.

The controlling unit is not particularly limited and may be suitably selected in accordance with the intended use, as long as it can control operations of the aforementioned units. Examples thereof include apparatuses such as a sequencer and a computer.

Here, one aspect of performing the ink-jet recording method of the present invention by a serial-type ink-jet recording apparatus is explained with reference to the drawings. The ink-jet recording apparatus in FIG. 3 includes an apparatus main body (101), a paper feed tray (102) for feeding paper into the apparatus main body (101), a paper discharge tray (103) for storing paper which has been fed into the apparatus main body (101) and on which images have been formed (recorded), and an ink cartridge loading section (104). An operation unit (105) composed of operation keys, a display and the like is placed on the upper surface of the ink cartridge loading section (104). The ink cartridge loading section (104) has a front cover (245) capable of opening and closing to attach and detach the ink cartridge (201).

In the apparatus main body (101), as shown in FIGS. 4 and 5, a carriage (133) is freely slidably held in the

main scanning direction by a guide rod (246), which is a guide member laterally passed between left and right side plates (not depicted), and a stay (247); and the carriage (133) is moved for scanning in the arrow direction in FIG. 5 by a main scanning motor (not depicted).

A recording head (134) composed of four ink-jet recording heads which eject recording ink droplets of yellow (Y), cyan (C), magenta (M) and black (Bk) is installed in the carriage (133) such that a plurality of ink ejection outlets are aligned in the direction intersecting the main scanning direction and that the ink droplet ejection direction faces downward.

For each of the ink-jet recording heads composing the recording head (134), it is possible to use, for example, a head provided with any of the following actuators as a energy-generating unit for ejecting ink: a piezoelectric actuator such as a piezoelectric element, a thermal actuator that uses a thermoelectric conversion element such as an exothermic resistive element and utilizes phase change caused by film boiling of a liquid, a shape-memory-alloy actuator that utilizes metal phase change caused by temperature change, and an electrostatic actuator that utilizes electrostatic force.

Also, the carriage (133) incorporates sub-tanks (135) of each color for supplying the inks of each color to the recording head (134). Each sub-tank (135) is supplied and replenished with the recording ink of the present invention from the ink cartridge (201) of the present invention loaded into the ink cartridge loading section (104), via a recording ink supply tube (not depicted).

Meanwhile, as a paper feed unit for feeding sheets of paper (142) loaded on a paper loading section (pressure plate) (250) of the paper feed tray (102), there are provided a half-moon roller (paper feed roller 143) which feeds the sheets of paper (142) one by one from the paper loading section (250), and a separation pad (144) which faces the paper feed roller (143) and is formed of a material with a large friction coefficient. This separation pad (144) is biased toward the paper feed roller (143) side.

As a conveyance unit for conveying the paper (142), which has been fed from this paper feed unit, under the recording head (134), there are provided a conveyance belt (151) for conveying the paper (142) by means of electrostatic adsorption; a counter roller (152) for conveying the paper (142), which is sent from the paper feed unit via a guide (145), such that the paper (142) is sandwiched between the counter roller (152) and the conveyance belt (151); a conveyance guide (153) for making the paper (142), which is sent upward in the substantially vertical direction, change its direction by approximately 90° and thusly correspond with the conveyance belt (151); and an end pressurizing roller (155) biased toward the conveyance belt (151) side by a pressing member (154). Also, there is provided a charging roller (156) as a charging unit for charging the surface of the conveyance belt (151).

The conveyance belt (151) is an endless belt and is capable of moving in circles in the belt conveyance direction, passed between a conveyance roller (157) and a tension roller (158). The conveyance belt (151) has, for example, a surface layer serving as a paper adsorbing surface, that is formed of a resinous material such as an ethylene-tetrafluoroethylene copolymer (ETFE) having a thickness of approximately 40μm for which resistance control has not been conducted, and a back layer (intermediate resistance layer, ground layer) that is formed of the same material as this surface layer, for which resistance control has been conducted using carbon. On the back of the conveyance belt (151), a guide member (161) is placed correspondingly to a region where printing is carried out by the recording head (134). Additionally, as a paper discharge unit for discharging the paper (142) on which images or the like have been recorded by the recording head (134), there are provided a separation pawl (171) for separating the paper (142) from the conveyance belt (151), a paper discharge roller (172) and a paper discharge small roller (173), with the paper discharge tray (103) being placed below the paper discharge roller (172).

A double-sided paper feed unit (181) is mounted on a rear surface portion of the apparatus main body (101) in a freely detachable manner. The double-sided paper feed unit (181) takes in the paper (142) returned by rotation of the conveyance belt (151) in the opposite direction and reverses it, then refeeds it between the counter roller (152) and the conveyance belt (151). Additionally, a manual paper feed unit (182) is provided on an upper surface of the double-sided paper feed unit (181).

In this ink-jet recording apparatus, the sheets of paper (142) are fed one by one from the paper feed unit, and the paper (142) fed upward in the substantially vertical direction is guided by the guide (145) and conveyed between the conveyance belt (151) and the counter roller (152). Further, the conveyance direction of the paper (142) is changed by approximately 90°, as an end of the paper (142) is guided by the conveyance guide (153) and pressed onto the conveyance belt (151) by the end pressurizing roller (155).

On this occasion, the conveyance belt (151) is charged by the charging roller (156), and the paper (142) is electrostatically adsorbed onto the conveyance belt (151) and thusly conveyed. Here, by driving the recording head (134) according to an image signal while moving the carriage (133), ink droplets are ejected onto the paper (142) having stopped so as to carry out recording for one line, and after the paper (142) is conveyed by a predetermined distance, recording for the next line is carried out. On receipt of a recording completion signal or such a signal as indicates that the rear end of the paper (142) has reached the recording region, recording operation is finished, and the paper (142) is discharged onto the paper discharge tray (103).

Once the amount of recording ink remaining in the sub-tanks (135) has been detected as too small, a required

amount of recording ink is supplied from the ink cartridge (201) into the sub-tanks (135).

As to this ink-jet recording apparatus, when recording ink in the ink cartridge (201) of the present invention has been used up, it is possible to replace only the ink bag (241) inside the ink cartridge (201) by dismantling the housing of the ink cartridge (201). Also, even when the ink cartridge (201) is longitudinally placed and employs a front-loading structure, it is possible to supply recording ink stably. Therefore, even when the apparatus main body (101) is installed with little space over it, for example when the apparatus main body (101) is stored in a rack or when an object is placed over the apparatus main body (101), it is possible to replace the ink cartridge (201) with ease.

Here, a structural example of a subsystem (91) including the maintenance device for the ejection device according to the present invention is explained with reference to FIGS. 6 to 8. FIG. 6 is a plan view for explaining main parts of the subsystem (91), FIG. 7 is a schematic structural diagram of the subsystem (91), and FIG. 8 is a diagram for explaining the right side of the subsystem (91) in FIG. 6.

Two cap holders (112A) and (112B) serving as a cap holding mechanism, a wiper blade (93) serving as a wiping member including an elastic body as a cleaning unit, and a carriage lock (115) are held in a frame (maintenance device frame) (111) of this subsystem in such a manner as to be able to ascend and descend (move up and down). Additionally, an idle ejection receiver (94) is placed between the wiper blade (93) and the cap holder (112A), and a wiper cleaner (118) serving as a cleaner unit including a cleaner roller (96) that is a cleaning member for pressing the wiper blade (93) from outside the frame (111) toward a wiper cleaner (95), which is a cleaning member for the idle ejection receiver (94), is oscillatably held to clean the wiper blade (93).

The cap holders (112A) and (112B) (referred to as "cap holder (112)" when no distinction is made between these) hold two caps (92a) and (92b) and two caps (92c) and (92d) respectively, with nozzle surfaces of two recording heads being capped with the caps (92a) and (92b), and nozzle surfaces of other two recording heads being capped with the caps (92c) and (92d).

Here, a tubing pump (suction pump) (120) serving as a suction unit is connected to the cap (92a) held by the cap holder (112A) on the side closest to the printing region, via a flexible tube (119), whereas the tubing pump (120) is not connected to the other caps (92b), (92c) and (92d). Specifically, only the cap (92a) is designed as a cap for suction (restoration) and moisture retention (hereinafter simply referred to as "suction cap"), whereas the other caps (92b), (92c) and (92d) are designed simply as caps for moisture retention. Accordingly, when a restoration operation is carried out on a recording head, the recording head to be restored is selectively moved to a position where it can be capped with the suction cap (92a).

A cam shaft (121) that is freely rotatably supported by the frame (111) is placed below these cap holders (112A) and (112B), and this cam shaft (121) is provided with cap cams (122A) and (122B) for respectively allowing the cap holders (112A) and (112B) to ascend and descend, a wiper cam (124) for allowing the wiper blade (93) to ascend and descend, a carriage lock cam (125) for allowing the carriage lock (115) to ascend and descend by means of a carriage lock arm (117), a roller (126) as a rotating body that is an idle ejection target member to which droplets idly ejected are applied inside the idle ejection receiver (94), and a cleaner cam (128) for allowing the wiper cleaner (118) to oscillate.

Here, the cap (92) is made to ascend and descend by the cap cams (122A) and (122B). The wiper blade (93) is made to ascend and descend by the wiper cam (124). When the wiper blade (93) descends, the wiper cleaner (118) advances, and as the wiper blade (93) descends while sandwiched between the cleaner roller (96) of the wiper cleaner (118) and the wiper cleaner (95) of the idle ejection receiver (94), ink that is attached to the wiper blade (93) is swept into the idle ejection receiver (94).

The carriage lock (115) is biased upward (in the lock direction) by a compression spring (not depicted), and made to ascend and descend by means of the carriage lock arm (117) driven by the carriage lock cam (125).

As for rotation of a motor (131), in order to drive the tubing pump (120) and the cam shaft (121) rotationally, a motor gear (132) provided on a motor shaft (131a) engages with a pump gear (133) provided on a pump shaft (120a) of the tubing pump (120); an intermediate gear (248) that is integrally formed with this pump gear (133) engages with an intermediate gear (136) having a one-way clutch (137), via an intermediate gear (249); and an intermediate gear (138) that is coaxial with this intermediate gear (136) engages with a cam gear (140) fixed to the cam shaft (121), via an intermediate gear (139). Additionally, an intermediate shaft (141) that is a rotating shaft for the intermediate gear (138) and for the intermediate gear (136) having the clutch (137) is rotatably supported by the frame (111) .

The cam shaft (121) is provided with a home position sensor cam (142) for detecting home positions, a home position lever (not depicted) is operated by means of a home position sensor (not depicted) in the subsystem (91) when the cap (92) reaches the bottom, and thus the sensor is brought into an open state and detects the home position of the motor (131) (excluding the pump (120)). When the power is on, the sensor moves up and down (ascends and descends) regardless of the position of the cap (92) (the cap holder (112)), does not carry out position detection until it starts moving, and moves to the bottom by traveling a predetermined distance after having detected the home position of the cap (92) (in the midst of ascending). Thereafter, the carriage moves from side to side and then returns to a capping position after having carried out position detection, and the recording head (134) is subjected to capping.

Next, an idle ejection receiving section will be explained with reference to FIGS. 9 and 10. Note that FIG. 9 is

a front cross-sectional view for explaining an idle ejection receiving section, and FIG. 10 is a diagram for explaining a side of the idle ejection receiving section.

An idle ejection receiving section (200) includes the idle ejection receiver (94); a roller (203), which is an idle ejection target member, positioned on the lower side of the idle ejection receiver (94) and provided on the cam shaft (121); sweeping members (204A) and (204B) constituting a sweeping mechanism (204) for gathering recording solution attached to the inner surface of the wiper cleaner (95); and a sweeping member (205) for sweeping off recording solution attached to the roller (203) that is a rotating body. A waste solution tank (206) including an absorber (207) is placed below the idle ejection receiver (94).

Here, as to the sweeping mechanism (204) for gathering recording solution attached to the inner surface of the wiper cleaner (95) of the idle ejection receiver (94), the bottoms of the sweeping members (204A) and (204B) are oscillatably supported by a pair of support shafts (210) provided at the bottom of a holder (251), and the sweeping members (204A) and (204B) are joined together by a joining member (211) with some play allowed in each.

A pair of pin members (212) and (212) that can be brought into contact with the sweeping members (204A) and (204B) by rotation of the roller (203) are provided on a side face of the roller (203), which serves as a rotating body and is an idle ejection target member, provided on the cam shaft (121).

As to each of the sweeping members (204A) and (204B), an end portion (204a) thereof is inclined so as to correspond with the inclined surface of the wiper cleaner (95). Also, each of the sweeping members (204A) and (204B) is provided with a convex portion (204b), which is for reducing the contact area at the time of oscillation, on the side facing the inner wall surface of the idle ejection receiver (94).

Due to this configuration, when the wiper blade (93) is cleaned, recording solution removed from the wiper blade (93) is attached to the wiper cleaner (95).

Here, when the roller (203) is rotated in the direction of the arrow E in FIG. 10 by rotation of the cam shaft (121), the pin members (212) and (212) of the roller (203) come into contact with the sweeping members (204A) and (204B), and thus the sweeping members (204A) and (204B) move back and forth in the directions of the arrows F and G (between the positions indicated by solid lines and the positions indicated by broken lines) in FIG. 10. Due to this back-and-forth movement of the sweeping members (204A) and (204B), the recording solution attached to the wiper cleaner (95) is gathered (collected) in one or several places on the end portion (204a) of each of the sweeping members (204A) and (204B), then a mass of the recording solution enlarges, and the recording solution flows under its own weight along the inner wall surface of the idle ejection receiver (94) and falls into the waste solution tank (206) below.

In other words, in the case where a wiper cleaning mechanism is employed in which recording solution attached to the wiper blade (93) is pressed against the wiper cleaner (95) and thusly removed, simply pressing and moving the wiper blade (93) results in the recording solution remaining on an end of the wiper cleaner (95). Especially when the viscosity of the recording solution used is high, the recording solution remains on an end portion of the wiper cleaner (95), thereby possibly making it impossible to remove the recording solution attached to the wiper blade (93) the next time cleaning is carried out.

Accordingly, even in the case where a high-viscosity recording solution is used, since the volume of droplets of the recording solution with respect to the surface in contact with the wiper cleaner (95) can be increased by collecting (gathering) in one or several places the recording solution attached to the wiper cleaner (95), the droplets easily fall (flow) from the surface in contact with the wiper cleaner (95), which enables the wiper blade (93) to be subsequently cleaned in a purified state, and thus the ability to clean the wiper blade (93) improves.

According to an experiment, it was confirmed that when the viscosity of a recording solution was 5mPa·s or greater at 25°C, the recording solution was liable to remain on a cleaner end, and the ability to remove the recording solution from a blade decreased the next time cleaning was carried out. When the sweeping members (204A) and (204B) were provided in light of the foregoing, it was confirmed that the recording solution effectively flowed downward.

Moreover, the structure of the sweeping mechanism (204) can be simplified because the sweeping members (204A) and (204B) are operated by rotation of the roller (203), which is an idle ejection target member, provided on the cam shaft (121).

Also, since the idle ejection receiver (94) houses the roller (203), which is an idle ejection target member, rotated by the cam shaft (121), a mist of idly ejected droplets can be reduced in speed or attached to the roller (203) and thusly collected. This makes it possible to prevent the mist of the recording solution from dispersing.

Since the sweeping member (205) configured to sweep off recording solution attached to the roller (203) is provided, the recording solution attached to the roller (203) is swept off by the sweeping member (205) and falls under its own weight into the waste solution tank (206) below. As just described, a member configured to sweep off recording solution attached to the roller (203) is placed under the roller (203) and over a waste solution receiver (waste solution tank); by doing so, it becomes possible to remove the recording solution attached to the roller and dispose of it as a waste solution by a simple structure and at a low cost.

It should be noted that although the ink-jet recording method of the present invention has been explained referring to an example in which it is applied to a serial-type (shuttle-type) ink-jet recording apparatus where a carriage

performs scanning, the ink-jet recording method of the present invention can also be applied to line-type ink-jet recording apparatuses provided with line-type heads.

Also, the ink-jet recording apparatus and the ink-jet recording method of the present invention can be applied to a variety of types of recording based upon ink-jet recording systems. For example, they can be particularly suitably applied to ink-jet recording printers, facsimile apparatuses, copiers, printer/fax/copier complex machines, and so forth.

(Ink Recorded Matter)

The ink recorded matter of the present invention is a recorded matter recorded by the ink-jet recording apparatus and the ink-jet recording method of the present invention.

The ink recorded matter of the present invention includes an image formed on a recording medium, using the recording ink of the present invention.

Alto, the ink recorded matter of the present invention includes an image formed on a recording medium in the ink media set of the present invention, using a recording ink in the ink media set of the present invention.

The recording medium is not particularly limited and may be suitably selected in accordance with the intended use. Examples thereof include plain paper, gloss paper, special paper, cloth, films, OHP sheets and general-purpose printing paper. Each of these may be used alone or in combination with two or more.

The ink recorded matter is high in image quality, free of bleeding and superior in temporal stability and can be suitably used for a variety of purposes as a material on which letters/characters or images of any type are recorded, or the like.

Examples

The following explains Examples of the present invention; however, it should be noted that the present invention is not confined to these Examples in any way.

(Preparation Example 1)

- Preparation of Water-soluble Polymeric Compound Aqueous Solution A -

- α-olefin-maleic anhydride copolymer (T-YP112, olefin chain (R): 20 to 24 carbon atoms, 190mgKOH/g in acid value, weight average molecular weight =10,000, produced by Seiko PMC Corporation) represented by the following Structural Formula (II)
  10.0 parts by mass

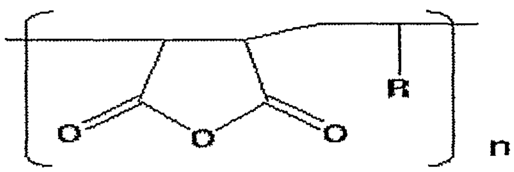

Structural Formula (II)

In Structural Formula (II), R denotes an alkyl group. "n" denotes an integer of 30 to 100.

| | |
|---|---|
| • normal LiOH aqueous solution (1.2 times the amount of the acid value of the α-olefin-maleic anhydride copolymer represented by Structural Formula (II)) | 17.34 parts by mass |
| • ion-exchange water | 72.66 parts by mass |

Next, the mixture was heated and stirred with a stirrer to dissolve the α-olefin-maleic anhydride copolymer represented by Structural Formula (II), and a tiny amount of insoluble matter was filtered out using a filter of 5μm in average pore diameter to prepare a water-soluble polymeric compound aqueous solution A.

(Preparation Example 2)

- Preparation of Surface-treated Black Pigment Dispersion Solution -

Into 3,000ml of 2.5 normal sodium sulfate solution, 90g of carbon black having a CTAB specific surface area of 150$m^2$/g and a DBP oil absorption of 100ml/100g was added, then the mixture was stirred at a temperature of 60°C and a rotational speed of 300rpm and subjected to reaction for 10hr, and the carbon black was thus oxidized. This reaction solution was filtered, then the carbon black which had been filtered out was neutralized with a sodium hydroxide solution and subjected to ultrafiltration.

The carbon black obtained was washed with water, dried and dispersed into purified water such that the solid content was 30% by mass, the mixture was sufficiently stirred, and a black pigment dispersion solution was thus obtained. The average particle diameter ($D_{50}$) of a pigment dispersion in this black pigment dispersion solution measured 103nm. Additionally, the average particle diameter ($D_{50}$) was measured using a particle size distribution measuring apparatus (NANOTRAC UPA-EX150, manufactured by Nikkiso Co., Ltd.).

(Preparation Example 3)

- Preparation of Magenta Pigment-containing Polymer Fine Particle Dispersion Solution -

<Preparation of Polymer Solution A>

Gases inside a 1L flask equipped with a mechanical stirrer, a thermometer, a nitrogen gas introducing tube, a reflux tube and a dripping funnel were sufficiently substituted with nitrogen gas, then 11.2g of styrene, 2.8g of acrylic acid, 12.0g of lauryl methacrylate, 4.0g of polyethylene glycol methacrylate, 4.0g of styrene macromer and 0.4g of mercaptoethanol were mixed together therein, and the temperature was raised to 65°C.

Subsequently, a mixed solution including 100.8g of styrene, 25.2g of acrylic acid, 108.0g of lauryl methacrylate, 36.0g of polyethylene glycol methacrylate, 60.0g of hydroxyethyl methacrylate, 36.0g of styrene macromer, 3.6g of mercaptoethanol, 2.4g of azobismethylvaleronitrile and 18g of methyl ethyl ketone was kept being applied dropwise into the flask for 2.5hr. Thereafter, a mixed solution including 0.8g of azobismethylvaleronitrile and 18g of methyl ethyl ketone was kept being applied dropwise into the flask for 0.5hr. The ingredients were aged at 65°C for 1hr, then 0.8g of azobismethylvaleronitrile was added, and further, the ingredients were aged for 1hr. After reaction had finished, 364g of methyl ethyl ketone was added into the flask, and 800g of a polymer solution A having a concentration of 50% by mass was thus obtained.

<Preparation of Pigment-containing Polymer Fine Particle Dispersion Solution>

After 28g of the polymer solution A, 42g of C. I. Pigment Red 122, 13.6g of 1mol/l potassium hydroxide aqueous solution, 20g of methyl ethyl ketone and 13.6g of ion-exchange water had been sufficiently stirred, they were kneaded using a roll mill. The paste obtained was put into 200g of purified water and sufficiently stirred, then the methyl ethyl ketone and the water were removed by distillation using an evaporator, this dispersion solution was filtered under pressure using a polyvinylidene fluoride membrane filter of 5.0μm in average pore diameter to remove coarse particles, and a magenta pigment-containing polymer fine particle dispersion solution incorporating a pigment by 15% by mass and having a solid content of 20% by mass was thus obtained. The average particle diameter ($D_{50}$) of polymer fine particles in the obtained magenta pigment-containing polymer fine particle dispersion solution measured 127nm. Additionally, the average particle diameter ($D_{50}$) was measured using a particle size distribution measuring apparatus (NANOTRAC UPA-EX150, manufactured by Nikkiso Co., Ltd.).

(Preparation Example 4)

- Preparation of Cyan Pigment-containing Polymer Fine Particle Dispersion Solution -

In Preparation Example 4, a cyan pigment-containing polymer fine particle dispersion solution was prepared similarly to the one in Preparation Example 3, except that the C. I. Pigment Red 122 as a pigment was changed to a phthalocyanine pigment (C. I. Pigment Blue 15:3).

The average particle diameter ($D_{50}$) of polymer fine particles in the obtained cyan pigment-containing polymer fine particle dispersion solution, measured using a particle size distribution measuring apparatus (NANOTRAC UPA-EX150, manufactured by Nikkiso Co., Ltd.), was 93nm.

(Preparation Example 5)

- Preparation of Yellow Pigment-containing Polymer Fine Particle Dispersion Solution -

In Preparation Example 5, a yellow pigment-containing polymer fine particle dispersion solution was prepared similarly to the one in Preparation Example 3, except that the C. I. Pigment Red 122 as a pigment was changed to a monoazo yellow pigment (C. I. Pigment Yellow 74).

The average particle diameter ($D_{50}$) of polymer fine particles in the obtained yellow pigment-containing polymer fine particle dispersion solution, measured using a particle size distribution measuring apparatus (NANOTRAC UPA-EX150, manufactured by Nikkiso Co., Ltd.), was 76nm.

(Preparation Example 6)

- Preparation of Carbon Black Pigment-containing Polymer Fine Particle Dispersion Solution -

In Preparation Example 6, a carbon black pigment-containing polymer fine particle dispersion solution was prepared similarly to the one in Preparation Example 3, except that the C. I. Pigment Red 122 as a pigment was changed to carbon black (FW100, produced by Degussa GmbH).

The average particle diameter ($D_{50}$) of polymer fine particles in the obtained carbon black pigment-containing polymer fine particle dispersion solution, measured using a particle size distribution measuring apparatus (NANOTRAC UPA-EX150, manufactured by Nikkiso Co., Ltd.), was 104nm.

(Preparation Example 7)

- Preparation of Yellow Pigment Surfactant Dispersion Solution -

| | |
|---|---|
| • monoazo yellow pigment (C. I. Pigment Yellow 74, produced by Dainichiseika Color & Chemicals Mfg. Co., Ltd.) | 30.0 parts by mass |
| • polyoxyethylene styrenephenylether (nonionic surfactant, NOIGEN EA-177, HLB value = 15.7, produced by Dai-ichi Kogyo Seiyaku Co., Ltd.) | 10.0 parts by mass |
| • ion-exchange water | 60.0 parts by mass |

Firstly, the surfactant was dissolved in the ion-exchange water, and the pigment was mixed in such that it was sufficiently wetted. Then zirconia beads having a diameter of 0.5mm were supplied to a wet dispersing machine (DYNO-MILL KDL Model A, manufactured by WAB (Willy A. Bachofen AG)) and dispersed at 2,000rpm for 2hr, and a primary pigment dispersion was thus obtained.

Secondly, 4.26 parts by mass of a water-soluble polyurethane resin (TAKELAC W-5661, active ingredient: 35.2% by mass, acid value: 40mgKOH/g, molecular weight: 18,000, produced by Mitsui Takeda Chemicals, Inc.) was added as a water-soluble polymeric compound aqueous solution to the primary pigment dispersion, the mixture was sufficiently stirred, and a yellow pigment surfactant dispersion solution was thus obtained. The average particle diameter ($D_{50}$) of a pigment dispersion in the obtained yellow pigment surfactant dispersion solution measured 62nm. Additionally, the average particle diameter ($D_{50}$) was measured using a particle size distribution measuring apparatus (NANOTRAC UPA-EX150, manufactured by Nikkiso Co., Ltd.).

(Preparation Example 8)

- Preparation of Magenta Pigment Surfactant Dispersion Solution -

| | |
|---|---|
| • quinacridone pigment (C. I. Pigment Red 122, produced by Dainichiseika Color & Chemicals Mfg. Co., Ltd.) | 30.0 parts by mass |
| • polyoxyethylene β-naphthyl ether (nonionic surfactant, RT-100, HLB value = 18.5, produced by Takemoto Oil & Fat Co., Ltd.) | 10.0 parts by mass |

(continued)

| | |
|---|---|
| • ion-exchange water | 60.0 parts by mass |

Firstly, the surfactant was dissolved in the ion-exchange water, and the pigment was mixed in such that it was sufficiently wetted. Then zirconia beads having a diameter of 0.5mm were supplied to a wet dispersing machine (DYNO-MILL KDL Model A, manufactured by WAB (Willy A. Bachofen AG)) and dispersed at 2,000rpm for 2hr, and a primary pigment dispersion was thus obtained.

Secondly, 7.14 parts by mass of a water-soluble styrene-(meth)acrylic copolymer (JC-05, active ingredient: 21% by mass, acid value: 170mgKOH/g, weight average molecular weight: 16,000, produced by Seiko PMC Corporation) was added to the primary pigment dispersion, the mixture was sufficiently stirred, and a magenta pigment surfactant dispersion solution was thus obtained. The average particle diameter ($D_{50}$) of a pigment dispersion in the obtained magenta pigment surfactant dispersion solution measured 83nm. Additionally, the average particle diameter ($D_{50}$) was measured using a particle size distribution measuring apparatus (NANOTRAC UPA-EX150, manufactured by Nikkiso Co., Ltd.).

(Preparation Example 9)

- Preparation of Cyan Pigment Surfactant Dispersion Solution A

| | |
|---|---|
| • phthalocyanine pigment (C. I. Pigment Blue 15:3, produced by Dainichiseika Color & Chemicals Mfg. Co., Ltd.) | 30.0 parts by mass |
| • polyoxyethylene styrenephenylether (nonionic surfactant, NOIGEN EA-177, HLB value = 15.7, produced by Dai-ichi Kogyo Seiyaku Co., Ltd.) | 10.0 parts by mass |
| • ion-exchange water | 60.0 parts by mass |

Firstly, the surfactant was dissolved in the ion-exchange water, and the pigment was mixed in such that it was sufficiently wetted. Then zirconia beads having a diameter of 0.5mm were supplied to a wet dispersing machine (DYNO-MILL KDL Model A, manufactured by WAB (Willy A. Bachofen AG)) and dispersed at 2,000rpm for 2hr, and a primary pigment dispersion was thus obtained.

Secondly, 7.51 parts by mass of the water-soluble polymeric compound aqueous solution A of Preparation Example 1 and 2.51 parts by mass of a water-soluble polyester resin (NICHIGO POLYESTER W-0030, active ingredient: 29.9% by mass, acid value: 100mgKOH/g, weight average molecular weight: 7,000, produced by Nippon Synthetic Chemical Industry Co., Ltd.) were added to the primary pigment dispersion, the mixture was sufficiently stirred, and a cyan pigment surfactant dispersion solution A was thus obtained. The average particle diameter ($D_{50}$) of a pigment dispersion in the obtained cyan pigment surfactant dispersion solution A measured 78nm. Additionally, the average particle diameter ($D_{50}$) was measured using a particle size distribution measuring apparatus (NANOTRAC UPA-EX150, manufactured by Nikkiso Co., Ltd.).

(Examples 1 to 11 and Comparative Examples 1 to 5)

- Production of Recording Ink -

Each recording ink was produced according to the following procedure. First of all, water-soluble organic solvents (wetting agents), a penetrant (or penetrants), a surfactant, an antifungal agent and water shown in Tables. 1-1 to 3-3 below were mixed together and then stirred for 1hr so as to be evenly mixed. A water-dispersible resin (or water-dispersible resins) was/were added to this mixed solution and the mixture was stirred for 1hr; subsequently, a pigment dispersion solution and an antifoaming agent were added, and the mixture was stirred for 1hr. This dispersion solution was filtered under pressure using a polyvinylidene fluoride membrane filter of 5.0μm in average pore diameter to remove coarse particles and dust, and each one of the recording inks of Examples 1 to 11 and Comparative Examples 1 to 5 was thus produced.

Table 1-1

| Ingredients (% by mass) | | Ex 1 | Ex 2 | Ex 3 | Ex 4 | Ex 5 | Ex 6 | Ex 7 |
|---|---|---|---|---|---|---|---|---|
| Pigment dispersion solution | Surface-treated black pigment dispersion solution (Preparation Example 2) | 30.0 | - | - | - | - | - | - |
| | Magenta pigment-containing polymer fine particle dispersion solution (Preparation Example 3) | - | 53.3 | - | - | - | - | - |
| | Cyan pigment-containing polymer fine particle dispersion solution (Preparation Example 4) | - | - | 33.3 | - | - | - | - |
| | Yellow pigment-containing polymer fine particle dispersion solution (Preparation Example 5) | - | - | - | 33.3 | - | - | - |
| | Black pigment-containing polymer fine particle dispersion solution (Preparation Example 6) | - | - | - | - | 53.3 | - | - |
| | Yellow pigment surfactant dispersion solution (Preparation Example 7) | - | - | - | - | - | 17.4 | - |

Table 1-2

| Ingredients (% by mass) | | Ex 1 | Ex 2 | Ex 3 | Ex 4 | Ex 5 | Ex 6 | Ex 7 |
|---|---|---|---|---|---|---|---|---|
| Pigment dispersion solution | Magenta pigment surfactant dispersion solution (Preparation Example 8) | - | - | - | - | - | - | 28.6 |
| | Cyan pigment surfactant dispersion solution (Preparation Example 9) | - | - | - | - | - | - | - |
| Water-dispersible resin | Fluorine resin emulsion A | - | - | - | - | 6.0 | - | - |
| | Fluorine resin emulsion B | 10.0 | - | - | - | - | 6.0 | 6.0 |
| | Acrylic-silicone resin emulsion | - | 5.4 | 12.1 | 6.7 | - | | - |
| | Polyurethane emulsion | - | - | - | - | - | 4.5 | - |
| | Acrylic resin emulsion | - | - | - | - | - | - | - |
| Wetting agent | Propylene glycol | - | - | - | - | - | - | - |
| | 1,2,4-butanetriol | - | - | - | - | 16.0 | 3.0 | - |
| | 1,3-butanediol | - | 10.0 | 15.0 | 13.0 | 8.0 | - | 10.0 |
| | 3-methyl-1,3-butanediol | 14.0 | 2.0 | 3.0 | 2.0 | - | 10.0 | 3.0 |
| | 2-pyrrolidone | 2.0 | - | - | - | - | - | - |
| | Glycerin | 14.0 | 20.0 | 15.0 | 20.0 | 8.0 | 20.0 | 17.0 |
| Penetrant | 2-ethyl-1, 3-hexanediol | 2.0 | 2.0 | 2.0 | 1.0 | 2.0 | - | 1.0 |
| | 2,2,4-trimethyl-1,3-pentanediol | - | - | - | 1.0 | - | 2.0 | 1.0 |

Table 1-3

| Ingredients (% by mass) | | Ex 1 | Ex 2 | Ex 3 | Ex 4 | Ex 5 | Ex 6 | Ex 7 |
|---|---|---|---|---|---|---|---|---|
| Surfactant | KF-643 | - | - | - | - | - | 1.0 | 1.0 |
| | ZONYL FS-300 | 2.5 | 2.5 | 2.5 | 2.5 | 2.5 | - | - |
| | SOFTANOL EP-7025 | - | - | - | - | - | - | - |
| Antifungal agent | Proxel GXL | 0.05 | 0.05 | 0.05 | 0.05 | 0.05 | 0.05 | 0.05 |
| Antifoaming agent | Silicone antifoaming agent KM-72F | 0.1 | 0.1 | 0.1 | 0.1 | 0.1 | 0.1 | 0.1 |
| Purified water | | Rest | Rest | Rest | Rest | Rest | Rest | Rest |
| Total (% by mass) | | 100 | 100 | 100 | 100 | 100 | 100 | 100 |

Table 2-1

| Ingredients (% by mass) | | Ex 8 | Ex 9 | Ex 10 | Ex 11 |
|---|---|---|---|---|---|
| Pigment dispersion solution | Surface-treated black pigment dispersion solution (Preparation Example 2) | - | 30 | 26.7 | 30 |
| | Magenta pigment-containing polymer fine particle dispersion solution (Preparation Example 3) | - | - | - | - |
| | Cyan pigment-containing polymer fine particle dispersion solution (Preparation Example 4) | - | - | - | - |
| | Yellow pigment-containing polymer fine particle dispersion solution (Preparation Example 5) | - | - | - | - |
| | Black pigment-containing polymer fine particle dispersion solution (Preparation Example 6) | - | - | - | - |
| | Yellow pigment surfactant dispersion solution (Preparation Example 7) | - | - | - | - |

Table 2-2

| Ingredients (% by mass) | | Ex 8 | Ex 9 | Ex 10 | Ex 11 |
|---|---|---|---|---|---|
| Pigment dispersion solution | Magenta pigment surfactant dispersion solution (Preparation Example 8) | - | - | - | - |
| | Cyan pigment surfactant dispersion solution (Preparation Example 9) | 16.5 | - | - | - |
| Water-dispersible resin | Fluorine resin emulsion A | - | - | - | - |
| | Fluorine resin emulsion B | - | - | - | 10.0 |
| | Acrylic-silicone resin emulsion | 8.1 | 5.4 | 8.1 | - |
| | Polyurethane emulsion | 6.7 | 4.4 | 6.7 | - |
| | Acrylic resin emulsion | - | - | - | - |

(continued)

| Ingredients (% by mass) | | Ex 8 | Ex 9 | Ex 10 | Ex 11 |
|---|---|---|---|---|---|
| Wetting agent | Propylene glycol | - | - | - | - |
| | 1,2,4-butanetriol | 8.0 | - | - | 15.0 |
| | 1,3-butanediol | 10.0 | - | 6.0 | - |
| | 3-methyl-1,3-butanediol | - | - | 5.0 | - |
| | 2-pyrrolidone | - | 2.0 | 2.0 | 2.0 |
| | Glycerin | 15.0 | 25.0 | 23.0 | 17.0 |
| Penetrant | 2-ethyl-1,3-hexanediol | 2.0 | 2.0 | 2.0 | - |
| | 2,2,4-trimethyl-1,3-pentanediol | - | - | - | 2.0 |

Table 2-3

| Ingredients (% by mass) | | Ex 8 | Ex 9 | Ex 10 | Ex 11 |
|---|---|---|---|---|---|
| Surfactant | KF-643 | 1.0 | - | - | - |
| | ZONYL FS-300 | - | 2.5 | 2.5 | - |
| | SOFTANOL EP-7025 | - | - | - | 1.0 |
| Antifungal agent | Proxel GXL | 0.05 | 0.05 | 0.05 | 0.05 |
| Antifoaming agent | Silicone antifoaming agent KM-72F | 0.1 | 0.1 | 0.1 | 0.1 |
| Purified water | | Rest | Rest | Rest | Rest |
| Total (% by mass) | | 100 | 100 | 100 | 100 |

Table 3-1

| % Ingredients (% by mass) | | Comp Ex 1 | Comp Ex 2 | Comp Ex 3 | Comp Ex 4 | Comp Ex 5 |
|---|---|---|---|---|---|---|
| Pigment dispersion solution | Surface-treated black pigment dispersion solution (Preparation Example 2) | 30.0 | 30.0 | 30.0 | 30.0 | 30.0 |
| | Magenta pigment-containing polymer fine particle dispersion solution (Preparation Example 3) | - | - | - | - | - |
| | Cyan pigment-containing polymer fine particle dispersion solution (Preparation Example 4) | - | - | - | - | - |
| | Yellow pigment-containing polymer fine particle dispersion solution (Preparation Example 5) | - | - | - | - | - |
| | Black pigment-containing polymer fine particle dispersion solution (Preparation Example 6) | - | - | - | - | - |
| | Yellow pigment surfactant dispersion solution (Preparation Example 7) | - | - | - | - | - |

Table 3-2

| % Ingredients (% by mass) | | Comp Ex 1 | Comp Ex 2 | Comp Ex 3 | Comp Ex 4 | Comp Ex 5 |
|---|---|---|---|---|---|---|
| Pigment dispersion solution | Magenta pigment surfactant dispersion solution (Preparation Example 8) | - | - | - | - | - |
| | Cyan pigment surfactant dispersion solution (Preparation Example 9) | - | - | - | - | - |
| Water-dispersible resin | Fluorine resin emulsion A | - | - | - | - | - |
| | Fluorine resin emulsion B | - | - | - | - | - |
| | Acrylic-silicone resin emulsion | - | - | - | - | 13.4 |
| | Polyurethane emulsion | - | - | - | - | - |
| | Acrylic resin emulsion | - | - | - | 4.4 | - |
| Wetting agent | Propylene glycol | 10.0 | - | 10.0 | 10.0 | - |
| | 1,2,4-butanetriol | - | - | 3.0 | 5.0 | - |
| | 1,3-butanediol | 10.0 | - | - | - | - |
| | 3-methyl-1,3-butanediol | - | 21.0 | 7.0 | 10.0 | 16.7 |
| | 2-pyrrolidone | 2.0 | 2.0 | 1.0 | 1.0 | 2.0 |
| | Glycerin | 20.0 | 7.0 | 5.0 | - | 8.3 |
| Penetrant | 2-ethyl-1,3-hexanediol | - | - | - | 1.0 | 2.0 |
| | 2,2,4-trimethyl-1,3-pentanediol | - | 2.0 | 1.0 | - | - |

Table 3-3

| Ingredients (% by mass) | | Comp Ex 1 | Comp Ex 2 | Comp Ex 3 | Comp Ex 4 | Comp Ex 5 |
|---|---|---|---|---|---|---|
| Surfactant | KF-643 | - | - | - | - | - |
| | ZONYL FS-300 | - | - | - | - | 2.5 |
| | SOFTANOL EP-7025 | - | 1.0 | 1.0 | 1.0 | - |
| Antifungal agent | Proxel GXL | 0.05 | 0.05 | 0.05 | 0.05 | 0.05 |
| Antifoaming agent | Silicone antifoaming agent KM-72F | 0.1 | 0.1 | 0.1 | 0.1 | 0.1 |
| Purified water | | Rest | Rest | Rest | Rest | Rest |
| Total (% by mass) | | 100 | 100 | 100 | 100 | 100 |

The word "Rest" used in the rows of "Purified water" in the Tables above denotes the amount calculated by subtracting the amounts of the other ingredients from 100.

The symbols, etc. in Tables 1-1 to 3-3 represent the following compounds, etc.

Fluorine resin emulsion A: LUMIFLON FE4300, solid content = 50% by mass, 145nm in average particle diameter, minimum film-forming temperature (MFT) = 30°C, produced by Asahi Glass Co., Ltd.

Fluorine resin emulsion B: LUMIFLON FE4500, solid content = 50% by mass, 136nm in average particle diameter, minimum film-forming temperature (MFT) = 28°C, produced by Asahi Glass Co., Ltd.

Acrylic-silicone resin emulsion: POLYSOL ROY6312, solid content = 37.2% by mass, 171nm in average particle diameter, minimum film-forming temperature (MFT) = 20°C, produced by Showa Highpolymer Co., Ltd.

Polyurethane emulsion: HYDRAN APX-101H, solid content = 45% by mass, 160nm in average particle diameter, minimum film-forming temperature (MFT) = 20°C, produced by DIC Corporation

Acrylic resin emulsion: XP8800, solid content concentration = 45.6% by mass, 68.5nm in average particle diameter, produced by Seiko PMC Corporation
KF-643: polyether-modified silicone-based compound (produced by Shin-Etsu Chemical Co., Ltd., ingredient: 100% by mass)
ZONYL FS-300: polyoxyethylene perfluoroalkylether (produced by E. I. du Pont de Nemours and Company, ingredient: 40% by mass)
SOFTANOL EP-7025: polyoxyalkylene alkyl ether (produced by Nippon Shokubai Co., Ltd., ingredient: 100% by mass)
Proxel GXL: antifungal agent including 1,2-benzisothiazolin-3-one as a main component (produced by Avecia Biologics Limited, ingredient: 20% by mass, with dipropylene glycol contained)
KM-72F: self-emulsifying silicone antifoaming agent (produced by Silicone Division of Shin-Etsu Chemical Co., Ltd., ingredient: 100% by mass)

Next, the recording inks of Examples 1 to 11 and Comparative Examples 1 to 5 were evaluated in accordance with the following evaluation methods. The results are shown in Tables 4 and 5.

<Solid Content of Ink>

The total amount of pigment and resin (emulsion + water-soluble resin) contained in each recording ink was calculated.

<Measurement of Ink Viscosity>

The viscosity of each ink was measured at 25°C using a viscometer (RE-80L, produced by Toki Sangyo Co., Ltd.).

<Measurement of Surface Tension of Ink>

The surface tension of each ink was measured at 25°C using an automatic surface tensiometer (CBVP-Z, produced by Kyowa Interface Science Co., Ltd.).

<Fluidity of Ink Residue>

[Dry Ink Residue]

In a glass Petri dish having a diameter of 33mm, 2.5g of each of the recording inks of Examples and Comparative Examples, measured using a precision electronic scale balance capable of measuring weight down to four places of decimals, was placed. Then it was stored for 24hr in an ETAC constant temperature bath (manufactured by Kusumoto Chemicals, Ltd.) having a temperature of 50°C±0.5°C and a humidity of 12%±5%. After the storage, the ink residue was weighed using a precision electronic scale balance before absorbing moisture, and the evaporation rate of a solvent was calculated by means of Equation 1. Subsequently, the viscosity of this ink residue was measured at 25°C using an RE-550L viscometer (manufactured by Toki Sangyo Co., Ltd.) cone rotor 3°×R14.
As to the ink of the present invention, as described above, the moisture content is normally 50% by weight or more, and the total amount of resin and pigment is normally 3% by weight or more. Thus, the evaporation rate of a solvent is normally 50% by weight to 97% by weight.

[Ink Residue after Moisture Absorption]

Subsequently, an ink residue placed in a glass Petri dish having a diameter of 33mm, which had been produced similarly to the aforementioned ink residue, was stored for 6hr in an ESPEC constant temperature bath (produced by ESPEC CORP.) having a temperature of 23°C±0.5°C and a high humidity of 95%±3%. After the storage, the ink residue having absorbed moisture was weighed using a precision electronic scale balance, and the amount of moisture contained in the ink residue was calculated by means of Equation 2. Subsequently, the viscosity of this ink residue was measured at 25°C using an RE-550L viscometer (manufactured by Toki Sangyo Co., Ltd.) cone rotor 3°×R14.
It goes without saying that when this ink residue has a low viscosity at 25°C, it has high fluidity and is therefore harmless to a maintenance device for an ink ejection device.

$$\text{Equation 1: evaporation rate of solvent (\% by weight)} = (1 - \text{amount of ink residue / total weight of ink}) \times 100$$

where the solvent denotes water and water-soluble organic solvent in the ink.

$$\text{Equation 2: amount of moisture contained in ink residue (\% by weight)} = (\text{amount of moisture absorbed / total amount of ink residue that has absorbed moisture}) \times 100$$

$$\text{Equation 3: equilibrium moisture content (\%)} = (\text{amount of moisture absorbed in organic solvent / amount of organic solvent + moisture absorbed in organic solvent}) \times 100$$

The reason why the testing method of [Dry Ink Residue] and [Ink Residue after Moisture Absorption] was employed is as follows. The test of [Dry Ink Residue] makes it possible to judge ink drying property on plain paper: an ink in which a dry ink residue has a viscosity of 20,000mPa·s or greater as described in claim 1 is superior in drying property on plain paper, whereas an ink in which a dry ink residue has a viscosity of less than 20,000mPa·s is inferior in drying property on plain paper. Meanwhile, the test of [Ink Residue after Moisture Absorption] makes it possible to judge ejection stability and waste ink adhesion in the maintenance device for the ink ejection device: an ink in which an ink residue has a viscosity of less than 500mPa·s after moisture absorption as described in claim 1 enables waste ink adhesion to be notably reduced in the maintenance device for the ink ejection device, whereas an ink in which an ink residue has a viscosity of greater than 500mPa·s after moisture absorption causes waste ink adhesion in many places in the maintenance device and thus breakage of the maintenance device. The present invention has been completed by employing the testing method of [Dry Ink Residue] and [Ink Residue after Moisture Absorption].

- Preparation I of Printing Evaluation -

In an adjusted environment where the temperature was 28°C±0.5°C and the relative humidity was 15%±5%, the drive voltage of a piezoelectric element was changed such that the amount of ink ejected became uniform, using an ink-jet printer (IPSIO G717, manufactured by Ricoh Company, Ltd.), and settings were made such that the same amount of ink was attached onto each recording medium.

<Ejection Stability>

A chart to be formed by painting 5% in area of A4 size paper with a solid image per color, produced using MICROSOFT WORD 2000, was printed onto sheets of TYPE 6200 (produced by NBS Ricoh Co., Ltd.) by five sets, each of which consisted of a succession of 200 charts; and evaluations were carried out based upon ejection nonuniformity of each nozzle after the printing. As for the printing mode, "Plain Paper - Standard Speed" mode was changed to "No Color Correction" mode in user settings for plain paper by using a driver that accompanied a printer.

[Evaluation Criteria]

A: there was no ejection nonuniformity
B: there was a little ejection nonuniformity
C: there was ejection nonuniformity or there were parts where no ejection took place

- Preparation II of Printing Evaluation -

In an adjusted environment where the temperature was 23°C±0.5°C and the relative humidity was 50%±5%, the drive voltage of a piezoelectric element was changed such that the amount of ink ejected became uniform, using an ink-jet printer (IPSIO G717, manufactured by Ricoh Company, Ltd.), and settings were made such that the same amount of ink was attached onto each recording medium.

<Image Density>

A chart including a 64-point character "■", produced using MICROSOFT WORD 2000, was printed onto sheets of TYPE 6200 (produced by NBS Ricoh Co., Ltd.), and the "■" portions on printing surfaces were measured for color by means of the densitometer X-Rite 938 and judged according to the following evaluation criteria. As for the printing mode, "Plain Paper - Standard Speed" mode was changed to "No Color Correction" mode in user settings for plain paper by using a driver that accompanied a printer.

[Evaluation Criteria]

A: 1.2 or greater with respect to black, 0.8 or greater with respect to yellow, 1.0 or greater with respect to magenta, 1.0 or greater with respect to cyan
B: 1.15 or greater and less than 1.2 with respect to black, 0.75 or greater and less than 0.8 with respect to yellow, 0.95 or greater and less than 1.0 with respect to magenta, 0.95 or greater and less than 1.0 with respect to cyan
C: less than 1.15 with respect to black, less than 0.75 with respect to yellow, less than 0.95 with respect to magenta, less than 0.95 with respect to cyan

<Water Resistance>

A chart was printed onto sheets of TYPE 6200 similarly to the case of printing density, and "■" portions printed on printing surfaces were dried for 24hr at a temperature of 23°C and a relative humidity of 50%. Subsequently, each chart was immersed for 1min in water having a temperature of 30°C and then carefully raised so as to undergo drying while standing still, and judgments were made according to the following evaluation criteria.

[Evaluation Criteria]

A: there was no color bleeding
B: there was color bleeding

<Light Resistance>

A chart was printed onto sheets of TYPE 6200 similarly to the case of image density, and "■" portions printed on printing surfaces were dried for 24hr at a temperature of 23°C and a relative humidity of 50%. These image portions were irradiated with xenon light approximating to outdoor sunlight at an irradiance of 0.35W/$m^2$ (340nm) for 24hr in an environment where the temperature was 70°C, the relative humidity was 50% and the black panel temperature was 89°C, using WEATHER-OMETER Ci35AW manufactured by Atlas Material Testing Technology LLC, and color fading and color change caused by the irradiation were judged according to the following evaluation criteria.

[Evaluation Criteria]

A: there was almost no change
B: there was change that could be accepted
C: there were great color fading and color change

<Drying Property>

A chart was printed onto sheets of TYPE 6200 similarly to the case of printing density, and filter paper was pressed against "■" portions printed on printing surfaces immediately after the printing so as to judge the presence/absence of transfer.

[Evaluation Criteria]

A: there was no transfer smear
B: there was a little transfer smear
C: there was transfer smear

<Ink Adhesion in Maintenance Device>

In an adjusted environment where the temperature was 28°C±0.5°C and the relative humidity was 15%±5%, the drive voltage of a piezoelectric element was changed such that the amount of ink ejected became uniform, using an ink-jet printer (IPSIO G717, manufactured by Ricoh Company, Ltd.). Thereafter, head cleaning operation was continuously conducted ten times every one hour, and this head cleaning operation was conducted a total of 100 times in 10hr, then ink adhesion in a wiper section and a wiper cleaner section of the maintenance device was judged by visual observation after left to stand for 12hr.

[Evaluation Criteria]

A: there was no ink adhesion

B: there was a little ink adhesion

C: there was ink adhesion

Table 4

| | Ink property | | Fluidity of ink residue | | | |
|---|---|---|---|---|---|---|
| | | | Dry ink residue | | Ink residue after moisture absorption | |
| | Viscosity (mPa·s) | Surface tension (mN/m) | Evaporation rate of solvent | Viscosity (mPa·s) | Moisture content | Viscosity (mPa·s) |
| Example 1 | 8.93 | 26.1 | 62.80% | 60,000< | 37.30% | 40 |
| Example 2 | 9.48 | 24.9 | 57.30% | 60,000< | 36.90% | 340 |
| Example 3 | 9.23 | 24.6 | 57.80% | 60,000< | 34.60% | 130 |
| Example 4 | 9.39 | 24.4 | 59.80% | 60,000< | 36.50% | 460 |
| Example 5 | 8.81 | 24.4 | 55.70% | 60,000< | 33.60% | 40 |
| Example 6 | 10.03 | 24.5 | 52.70% | 60,000< | 35.40% | 380 |
| Example 7 | 10.43 | 23.9 | 54.10% | 60,000< | 34.10% | 450 |
| Example 8 | 9.54 | 25.6 | 51.30% | 60,000< | 31.70% | 170 |
| Example 9 | 6.34 | 23.5 | 57.80% | 53,400 | 34.90% | 170 |
| Example 10 | 14.6 | 24.6 | 53.10% | 46,000 | 33.30% | 150 |

(continued)

| | Ink property | | Fluidity of ink residue | | | |
|---|---|---|---|---|---|---|
| | | | Dry ink residue | | Ink residue after moisture absorption | |
| | Viscosity (mPa·s) | Surface tension (mN/m) | Evaporation rate of solvent | Viscosity (mPa·s) | Moisture content | Viscosity (mPa·s) |
| Example 11 | 9.68 | 23.7 | 51.50% | 60,000< | 33.40% | 30 |
| Comparative Example 1 | 5.87 | 37.8 | 64.10% | 10,300 | 39.50% | 20 |
| Comparative Example 2 | 7.66 | 23.3 | 76.10% | 60,000< | 35.90% | 21 |
| Comparative Example 3 | 5.23 | 23.5 | 77.90% | 60,000< | 35.60% | 570 |
| Comparative Example 4 | 6.64 | 24.6 | 81.10% | 60,000< | 26.30% | 60,000< |
| Comparative Example 5 | 8.58 | 25.1 | 69.80% | 60,000< | 31.50% | 11,400 |

Table 5

| | Printer and Image Evaluation | | | | | |
|---|---|---|---|---|---|---|
| | Ejection stability | Ink adhesion in maintenance device | Image density | Water resistance | Light resistance | Drying property |
| Example 1 | A | A | A | A | A | A |
| Example 2 | A | A | A | A | A | A |
| Example 3 | A | A | A | A | A | A |
| Example 4 | A | A | A | A | A | A |
| Example 5 | A | A | A | A | A | A |
| Example 6 | A | A | A | A | A | A |
| Example 7 | A | A | A | A | A | A |
| Example 8 | A | A | A | A | A | A |
| Example 9 | A | A | A | A | A | A |
| Example 10 | A | A | A | A | A | B |
| Example 11 | A | A | A | A | A | A |
| Comparative Example 1 | A | A | C | B | A | C |
| Comparative Example 2 | A | B | B | B | A | A |
| Comparative Example 3 | B | B | B | B | A | B |
| Comparative Example 4 | c | C | B | A | B | A |
| Comparative Example 5 | B | C | A | A | A | A |

Next, the recording inks of Examples 1 to 4 were used on the following recording papers (1) to (4) respectively, and image quality evaluations were carried out in the following manner.

- Recording Paper (1) -

Commercially available paper (product name: AURORA COAT, basis weight = 104.7g/$m^2$, produced by Nippon Paper Industries Co., Ltd.)

- Recording Paper (2) -

POD GLOSS COAT 100g/$m^2$ paper, produced by Oji Paper Company, Limited

- Recording Paper (3) -

Commercially available ink-jet matte coated paper (product name: SUPER FINE PAPER, produced by Seiko Epson Corporation)

- Recording Paper (4) -

Transparent polyester film (product name: LUMIRROR U10, 100$\mu$m in thickness, produced by Toray Industries, Inc.)
The amount of purified water transferred was measured in the following manner, with respect to each of the recording papers (1) to (4). The results are shown in Table 6.

<Measurement of Transfer Amount of Purified Water by Dynamic Scanning Absorptometer>

The absorption curve of purified water was measured using a dynamic scanning absorptometer (Model: KS350D, manufactured by Kyowaseiko Corporation), with respect to each of the recording papers (1) to (4). The absorption curve was made as a straight line with a fixed inclination by plotting transfer amount (mL/$m^2$) against the square root of contact period (ms), and the values of the transfer amount after two different predetermined periods of time were measured by means of interpolation.

Table 6

| | Purified water | |
|---|---|---|
| | At contact period of 100ms | At contact period of 400ms |
| Recording paper (1) | 2.8 | 3.4 |
| Recording paper (2) | 3.1 | 3.5 |
| Recording paper (3) | 41.0 | 44.8 |
| Recording paper (4) | 0.1 | 0.1 |

<Image Quality Evaluation>

The recording inks of Examples 1 to 4 were used on the recording papers (1) to (4) respectively, and image quality evaluations were carried out in the following manner, using an ink-jet recording apparatus (IPSIO G7570, manufactured by Ricoh Company, Ltd.).

(1) Beading (Nonuniformity of density)

The extent of nonuniformity of density at each solid edge portion obtained was evaluated by visual observation. Evaluations with ranks were carried out using a classification sample (rank: 1.0 (poor) to 5.0 (excellent)).

(2) Spur mark

The extent of offset smear that spread from each red solid portion to each background portion obtained, which

was caused by a spur, was evaluated by visual observation. Evaluations with ranks were carried out according to the following criteria.

Rank 1: clearly visible
Rank 2: barely visible
Rank 3: none whatsoever

(3) Glossiness

The 60-degree glossiness of each cyan solid portion obtained was measured using a glossmeter (4501, manufactured by BYK-Gardner GmbH).

Table 7

| | Beading | Spur mark | Glossiness |
|---|---|---|---|
| Recording paper (1) | 4.5 | 2.0 | 33.0 |
| Recording paper (2) | 3.5 | 2.0 | 25.0 |
| Recording paper (3) | 5.0 | 3.0 | 2.0 |
| Recording paper (4) | 1.0 | 1.0 | Impossible to measure [1] |

[1] The glossiness of the recording paper (4) could not be measured because it did not dry.

Industrial Applicability

An object of the present invention is to provide a recording ink which makes it possible to obtain an image excellent in quality to plain paper, particularly in image density and image durability such as water resistance, light resistance, etc., which is superior in drying rate and adaptability to high-speed printing, which is excellent in storage stability and ejection stability and which is harmless to a maintenance device for an ink ejection device; and an ink cartridge, a recording method, a recording apparatus and an ink recorded matter which use the recording ink.

The recording ink is excellent in ejection stability from a nozzle, makes it possible to form high-quality images and can be suitably used for an ink cartridge, an ink recorded matter, an ink-jet recording apparatus and an ink-jet recording method.

Furthermore, the recording ink causes less beading (nonuniformity of density), has superior drying properties and makes it possible to form images of high quality such as printing image quality, when general-purpose printing paper (a recording medium with low ink-absorbing ability, including a support, and a coating layer applied onto at least one surface of the support, in which the amount of purified water transferred to the recording medium at a contact period of 100ms measured by a dynamic scanning absorptometer is 2ml/$m^2$ to 35ml/$m^2$ and the amount of purified water transferred to the recording medium at a contact period of 400ms measured by the dynamic scanning absorptometer is 3ml/$m^2$ to 40ml/$m^2$) is used.

The ink-jet recording apparatus and the ink-jet recording method of the present invention can be applied to a variety of types of recording based upon ink-jet recording systems. For example, they can be particularly suitably applied to ink-jet recording printers, facsimile apparatuses, copiers, printer/fax/copier complex machines, and so forth.

## Claims

**1.** An ink-jet recording method comprising:

jetting an ink-jet recording ink so as to form an image on a recording medium, by applying a stimulus to the ink-jet recording ink,
wherein the ink-jet recording ink comprises:

a colorant dispersible in water,
a water-soluble organic solvent, which is used as a wetting agent, wherein the wetting agent contains a wetting agent A and a wetting agent B, wherein the wetting agent A is at least one of 1,2,3-butanetriol, 1,2,4-butanetriol, glycerin, diglycerin, triethylene glycol and tetraethylene glycol, and wherein the wetting

agent B is at least one of diethylene glycol and 1,3-butanediol,
a surfactant,
a penetrant,
a water-dispersible resin, and
water,

wherein when 2.5g of the ink is weighed, placed in a glass Petri dish having a diameter of 33mm and stored for 24hr at a temperature of 50°C±0.5°C and a humidity of 12%±5%, the evaporation rate of a solvent in the ink is 50% by weight or more, and an ink residue has a viscosity of 20,000mPa·s or greater, and
wherein by storing the ink residue for 6hr at a temperature of 23°C±0.5°C and a high humidity of 95%±3% to allow it to absorb moisture, the amount of moisture contained in the ink residue becomes 30% by weight to 40% by weight, in which case the ink residue has a viscosity of less than 500mPa·s;
where the "evaporation rate of a solvent" is represented by the expression (1 - amount of ink residue / total weight of ink)×100, the solvent includes the water and the water-soluble organic solvent contained in the ink, and the "amount of moisture contained in the ink residue" is represented by the expression (amount of moisture absorbed / total amount of ink residue that has absorbed moisture)×100,
wherein the recording medium comprises a support, and a coating layer applied onto at least one surface of the support, the amount of purified water transferred to the recording medium at a contact period of 100ms measured by a dynamic scanning absorptometer is $2ml/m^2$ to $35ml/m^2$ and the amount of purified water transferred to the recording medium at a contact period of 400ms measured by the dynamic scanning absorptometer is $3ml/m^2$ to $40ml/m^2$.

**2.** The ink-jet recording method according to claim 1, wherein the colorant dispersible in water is a pigment which can be stably dispersed in water in the absence of a dispersant by bonding at least one hydrophilic group to a surface of the colorant directly or via other atomic group.

**3.** The ink-jet recording method according to any one of claims 1 to 2, wherein the surfactant comprises at least one of a silicone-based surfactant and a fluorine-based surfactant.

**4.** The ink-jet recording method according to any one of claims 1 to 3, wherein the penetrant contains at least one of a polyol compound having 8 to 11 carbon atoms and a glycol ether compound.

**5.** The ink-jet recording method according to any one of claims 1 to 4, wherein the water-dispersible resin is at least any one of a polyurethane resin, an acrylic-silicone resin, and a fluorine resin having a fluoroolefin unit, and the minimum film-forming temperature of the water-dispersible resin is 30°C or lower.

**6.** The ink-jet recording method according to any one of claims 1 to 5, wherein the ink-jet recording ink has a viscosity of 5mPa·s to 20mPa·s at 25°C and a static surface tension of 35mN/m or less at 25°C.

**7.** An ink-jet recording apparatus with an ink cartridge housing an ink-jet recording ink, comprising:

a recording medium, and
an ink jetting unit configured to jet the ink-jet recording ink so as to form an image on the recording medium, by applying a stimulus to the ink-jet recording ink,
wherein the ink-jet recording ink comprises:

a colorant dispersible in water,
a water-soluble organic solvent, which is used as a wetting agent, wherein the wetting agent contains a wetting agent A and a wetting agent B, wherein the wetting agent A is at least one of 1,2,3-butanetriol, 1,2,4-butanetriol, glycerin, diglycerin, triethylene glycol and tetraethylene glycol, and wherein the wetting agent B is at least one of diethylene glycol and 1,3-butanediol,
a surfactant,
a penetrant,
a water-dispersible resin, and
water,

wherein when 2.5g of the ink is weighed, placed in a glass Petri dish having a diameter of 33mm and stored for 24hr at a temperature of 50°C±0.5°C and a humidity of 12%±5%, the evaporation rate of a solvent in the

ink is 50% by weight or more, and an ink residue has a viscosity of 20,000mPa·s or greater, and wherein by storing the ink residue for 6hr at a temperature of 23°C±0.5°C and a high humidity of 95%±3% to allow it to absorb moisture, the amount of moisture contained in the ink residue becomes 30% by weight to 40% by weight, in which case the ink residue has a viscosity of less than 500mPa·s;
where the "evaporation rate of a solvent" is represented by the expression (1 - amount of ink residue / total weight of ink)×100, the solvent includes the water and the water-soluble organic solvent contained in the ink, and the "amount of moisture contained in the ink residue" is represented by the expression (amount of moisture absorbed / total amount of ink residue that has absorbed moisture)×100,
wherein the recording medium comprises a support, and a coating layer applied onto at least one surface of the support, the amount of purified water transferred to the recording medium at a contact period of 100ms measured by a dynamic scanning absorptometer is 2ml/$m^2$ to 35ml/$m^2$ and the amount of purified water transferred to the recording medium at a contact period of 400ms measured by the dynamic scanning absorptometer is 3ml/$m^2$ to 40ml/$m^2$.

**Patentansprüche**

**1.** Tintenstrahlaufzeichnungsverfahren, umfassend:

Ausstoßen einer Tintenstrahlaufzeichnungstinte, um ein Bild auf einem Aufzeichnungsmedium zu erzeugen, durch Anwenden eines Stimulus auf die Tintenstrahlaufzeichnungstinte,
wobei die Tintenstrahlaufzeichnungstinte folgendes umfasst:

ein in Wasser dispergierbares farbgebendes Mittel,
ein wasserlösliches organisches Lösungsmittel, das als ein Benetzungsmittel verwendet wird, wobei das Benetzungsmittel ein Benetzungsmittel A und ein Benetzungsmittel B enthält, wobei das Benetzungsmittel A mindestens eines von 1,2,3-Butantriol, 1,2,4-Butantriol, Glycerin, Diglycerin, Triethylenglycol und Tetraethylenglycol ist und wobei das Benetzungsmittel B mindestens eines von Diethylenglycol und 1,3-Butandiol ist,
ein Tensid,
ein Penetriermittel,
ein wasserdispergierbares Harz und
Wasser,

wobei, wenn 2,5 g der Tinte eingewogen, in eine Petrischale aus Glas mit einem Durchmesser von 33 mm platziert und für 24 h bei einer Temperatur von 50 °C ± 0,5 °C und einer Feuchtigkeit von 12% ± 5% gelagert werden, die Verdampfungsrate eines Lösungsmittels in der Tinte 50 Gewichts-% oder mehr beträgt und ein Tintenrückstand eine Viskosität von 20.000 mPa·s oder mehr aufweist, und
wobei durch Lagern des Tintenrückstands für 6 h bei einer Temperatur von 23 °C ± 0,5 °C und einer hohen Feuchtigkeit von 95% ± 3%, um ihm die Absorption von Feuchtigkeit zu ermöglichen, die Menge an Feuchtigkeit, die in dem Tintenrückstand enthalten ist, 30 Gewichts-% bis 40 Gewichts-% wird, in welchem Fall der Tintenrückstand eine Viskosität von weniger als 500 mPa·s aufweist,
wobei die "Verdampfungsrate eines Lösungsmittels" durch den Ausdruck (1 - Menge an Tintenrückstand / Gesamtgewicht der Tinte) × 100 ausgedrückt wird, das Lösungsmittel das Wasser und das wasserlösliche organische Lösungsmittel umfasst, die in der Tinte enthalten sind, und die "Menge an Feuchtigkeit, die in dem Tintenrückstand enthalten ist" durch den Ausdruck (Menge an absorbierter Feuchtigkeit / Gesamtmenge an Tintenrückstand, der Feuchtigkeit absorbiert hat) x 100 ausgedrückt wird,
wobei das Aufzeichnungsmedium einen Träger und eine Überzugsschicht, die auf mindestens einer Oberfläche des Trägers aufgebracht ist, umfasst, die Menge an gereinigtem Wasser, die bei einer Kontaktzeit von 100 ms auf das Aufzeichnungsmedium übertragen wird, gemessen mit einem dynamischen Scanning-Absorptometer, 2 ml/$m^2$ bis 35 ml/$m^2$ beträgt und die Menge an gereinigtem Wasser, die bei einer Kontaktzeit von 400 ms auf das Aufzeichnungsmedium übertragen wird, gemessen mit dem dynamischen Scanning-Absorptometer, 3 ml/$m^2$ bis 40 ml/$m^2$ beträgt.

**2.** Tintenstrahlaufzeichnungsverfahren nach Anspruch 1, wobei das in Wasser dispergierbare farbgebende Mittel ein Pigment ist, das in Abwesenheit eines Dispergiermittels in Wasser stabil dispergiert werden kann, indem mindestens eine hydrophile Gruppe an eine Oberfläche des farbgebenden Mittels direkt oder über eine andere Atomgruppe gebunden ist.

**3.** Tintenstrahlaufzeichnungsverfahren nach irgendeinem der Ansprüche 1 bis 2, wobei das Tensid mindestens eines von einem Tensid auf Siliconbasis und einem Tensid auf Fluorbasis umfasst.

**4.** Tintenstrahlaufzeichnungsverfahren nach irgendeinem der Ansprüche 1 bis 3, wobei das Penetriermittel mindestens eines von einer Polyolverbindung mit 8 bis 11 Kohlenstoffatomen und einer Glycoletherverbindung enthält.

**5.** Tintenstrahlaufzeichnungsverfahren nach irgendeinem der Ansprüche 1 bis 4, wobei das wasserdispergierbare Harz mindestens eines von einem Polyurethanharz, einem Acryl-Siliconharz und einem Fluorharz mit einer Fluorolefineinheit ist und die minimale Filmbildungstemperatur des wasserdispergierbaren Harzes 30 °C oder weniger beträgt.

**6.** Tintenstrahlaufzeichnungsverfahren nach irgendeinem der Ansprüche 1 bis 5, wobei die Tintenstrahlaufzeichnungstinte eine Viskosität von 5 mPa·s bis 20 mPa·s bei 25 °C und eine statische Oberflächenspannung von 35 mN/m oder weniger bei 25 °C aufweist.

**7.** Tintenstrahlaufzeichnungsgerät mit einer Tintenpatrone zum Aufnehmen einer Tintenstrahlaufzeichnungstinte, umfassend:

ein Aufzeichnungsmedium und
eine Tintenausstoßeinheit, die konfiguriert ist, um die Tintenstrahlaufzeichnungstinte auszustoßen, um ein Bild auf dem Aufzeichnungsmedium zu erzeugen, durch Anwenden eines Stimulus auf die Tintenstrahl-Aufzeichnungstinte,
wobei die Tintenstrahlaufzeichnungstinte folgendes umfasst:

ein in Wasser dispergierbares farbgebendes Mittel,
ein wasserlösliches organisches Lösungsmittel, das als ein Benetzungsmittel verwendet wird, wobei das Benetzungsmittel ein Benetzungsmittel A und ein Benetzungsmittel B enthält, wobei das Benetzungsmittel A mindestens eines von 1,2,3-Butantriol, 1,2,4-Butantriol, Glycerin, Diglycerin, Triethylenglycol und Tetraethylenglycol ist und wobei das Benetzungsmittel B mindestens eines von Diethylenglycol und 1,3-Butandiol ist,
ein Tensid,
ein Penetriermittel,
ein wasserdispergierbares Harz und
Wasser,

wobei, wenn 2,5 g der Tinte eingewogen, in eine Petrischale aus Glas mit einem Durchmesser von 33 mm platziert und für 24 h bei einer Temperatur von 50 °C ± 0,5 °C und einer Feuchtigkeit von 12% ± 5% gelagert werden, die Verdampfungsrate eines Lösungsmittels in der Tinte 50 Gewichts-% oder mehr beträgt und ein Tintenrückstand eine Viskosität von 20.000 mPa·s oder mehr aufweist, und
wobei durch Lagern des Tintenrückstands für 6 h bei einer Temperatur von 23 °C ± 0,5 °C und einer hohen Feuchtigkeit von 95% ± 3%, um ihm die Absorption von Feuchtigkeit zu ermöglichen, die Menge an Feuchtigkeit, die in dem Tintenrückstand enthalten ist, 30 Gewichts-% bis 40 Gewichts-% wird, in welchem Fall der Tintenrückstand eine Viskosität von weniger als 500 mPa·s aufweist,
wobei die "Verdampfungsrate eines Lösungsmittels" durch den Ausdruck (1 - Menge an Tintenrückstand / Gesamtgewicht der Tinte) × 100 ausgedrückt wird, das Lösungsmittel das Wasser und das wasserlösliche organische Lösungsmittel umfasst, die in der Tinte enthalten sind, und die "Menge an Feuchtigkeit, die in dem Tintenrückstand enthalten ist" durch den Ausdruck (Menge an absorbierter Feuchtigkeit / Gesamtmenge an Tintenrückstand, der Feuchtigkeit absorbiert hat) × 100 ausgedrückt ist,
wobei das Aufzeichnungsmedium einen Träger und eine Überzugsschicht, die auf mindestens einer Oberfläche des Trägers aufgebracht ist, umfasst, die Menge an gereinigtem Wasser, die bei einer Kontaktzeit von 100 ms auf das Aufzeichnungsmedium übertragen wird, gemessen mit einem dynamischen Scanning-Absorptometer, 2 $ml/m^2$ bis 35 $ml/m^2$ beträgt und die Menge an gereinigtem Wasser, die bei einer Kontaktzeit von 400 ms auf das Aufzeichnungsmedium übertragen wird, gemessen mit dem dynamischen Scanning-Absorptometer, 3 $ml/m^2$ bis 40 $ml/m^2$ beträgt.

## Revendications

1. Procédé d'enregistrement par jet d'encre comprenant :

l'éjection d'une encre d'enregistrement par jet d'encre afin de former une image sur un support d'enregistrement, par application d'un stimulus à l'encre d'enregistrement par jet d'encre,
dans lequel l'encre d'enregistrement par jet d'encre comprend :

un colorant dispersible dans l'eau,
un solvant organique soluble dans l'eau, qui est utilisé comme un agent mouillant, dans lequel l'agent mouillant contient un agent mouillant A et un agent mouillant B, dans lequel l'agent mouillant A est au moins un de 1,2,3-butanetriol, 1,2,4-butanetriol, glycérine, diglycérine, triéthylèneglycol et tétraéthylèneglycol, et dans lequel l'agent mouillant B est au moins un de diéthylèneglycol et 1,3-butanediol,
un tensioactif,
un pénétrant,
une résine dispersible dans l'eau, et
de l'eau,

dans lequel lorsque 2,5 g de l'encre sont pesés, disposés dans une boîte de Pétri en verre ayant un diamètre de 33 mm et stockés pendant 24 h à une température de 50°C ± 0,5°C et une humidité de 12 % ± 5 %, la vitesse d'évaporation d'un solvant dans l'encre est de 50 % en masse ou supérieure, et un résidu d'encre présente une viscosité de 20 000 mPa.s ou supérieure, et
dans lequel en stockant le résidu d'encre pendant 6 h à une température de 23°C ± 0,5°C et une humidité élevée de 95 % ± 3 % pour lui permettre d'absorber l'humidité, la quantité d'humidité contenue dans le résidu d'encre est de 30 % en masse à 40 % en masse, dans lequel cas le résidu d'encre présente une viscosité inférieure à 500 mPa.s ;
où la "vitesse d'évaporation d'un solvant" est représentée par l'expression (1 - quantité de résidu d'encre/masse totale d'encre) x 100, le solvant comprend l'eau et le solvant organique soluble dans l'eau contenu dans l'encre, et la "quantité d'humidité contenue dans le résidu d'encre" est représentée par l'expression (quantité d'humidité absorbée/quantité totale de résidu d'encre qui présente l'humidité absorbée) x 100,
dans lequel le support d'enregistrement comprend un support, et une couche de revêtement appliquée sur au moins une surface du support, la quantité d'eau purifiée transférée vers le support d'enregistrement sur une période de contact de 100 ms mesurée par un dispositif de mesure d'absorption à balayage dynamique est de 2 ml/$m^2$ à 35 ml/$m^2$ et la quantité d'eau purifiée transférée vers le support d'enregistrement sur une période de contact de 400 ms mesurée par le dispositif de mesure d'absorption à balayage dynamique est de 3 ml/$m^2$ à 40 ml/$m^2$.

2. Procédé d'enregistrement par jet d'encre selon la revendication 1, dans lequel le colorant dispersible dans l'eau est un pigment qui peut être dispersé de manière stable dans l'eau en l'absence d'un dispersant par liaison d'au moins un groupe hydrophile à une surface du colorant directement ou via un autre groupe atomique.

3. Procédé d'enregistrement par jet d'encre selon l'une quelconque des revendications 1 à 2, dans lequel le tensioactif comprend au moins un d'un tensioactif à base de silicone et d'un tensioactif à base de fluor.

4. Procédé d'enregistrement par jet d'encre selon l'une quelconque des revendications 1 à 3, dans lequel le pénétrant contient au moins un d'un composé de polyol ayant de 8 à 11 atomes de carbone et d'un composé de glycoléther.

5. Procédé d'enregistrement par jet d'encre selon l'une quelconque des revendications 1 à 4, dans lequel la résine dispersible dans l'eau est au moins une d'une résine de polyuréthane, d'une résine acrylique-silicone et d'une résine de fluor ayant une unité de fluorooléfine, et la température minimale de formation de film de la résine dispersible dans l'eau est de 30°C ou inférieure.

6. Procédé d'enregistrement par jet d'encre selon l'une quelconque des revendications 1 à 5, dans lequel l'encre d'enregistrement par jet d'encre présente une viscosité de 5 mPa.s à 20 mPa.s à 25°C et une tension de surface statique de 35 mN/m ou inférieure à 25°C.

7. Appareil d'enregistrement par jet d'encre avec une cartouche d'encre logeant une encre d'enregistrement par jet d'encre, comprenant :

un support d'enregistrement, et
une unité d'éjection d'encre configurée pour éjecter l'encre d'enregistrement par jet d'encre afin de former une image sur le support d'enregistrement, par application d'un stimulus à l'encre d'enregistrement par jet d'encre, dans lequel l'encre d'enregistrement par jet d'encre comprend :

un colorant dispersible dans l'eau,
un solvant organique soluble dans l'eau, qui est utilisé comme un agent mouillant, dans lequel l'agent mouillant contient un agent mouillant A et un agent mouillant B, dans lequel l'agent mouillant A est au moins un de 1,2,3-butanetriol, 1,2,4-butanetriol, glycérine, diglycérine, triéthylèneglycol et tétraéthylèneglycol, et dans lequel l'agent mouillant B est au moins un de diéthylèneglycol et 1,3-butanediol,
un tensioactif,
un pénétrant,
une résine dispersible dans l'eau, et
de l'eau,

dans lequel lorsque 2,5 g de l'encre sont pesés, disposés dans une boîte de Pétri en verre ayant un diamètre de 33 mm et stockés pendant 24 h à une température de 50°C $\pm$ 0,5°C et une humidité de 12 % $\pm$ 5 %, la vitesse d'évaporation d'un solvant dans l'encre est de 50 % en masse ou supérieure, et un résidu d'encre présente une viscosité de 20 000 mPa.s ou supérieure, et
dans lequel en stockant le résidu d'encre pendant 6 h à une température de 23°C $\pm$ 0,5°C et une humidité élevée de 95 % $\pm$ 3 % pour lui permettre d'absorber l'humidité, la quantité d'humidité contenue dans le résidu d'encre est de 30 % en masse à 40 % en masse, dans lequel cas le résidu d'encre présente une viscosité inférieure à 500 mPa.s ;
où la "vitesse d'évaporation d'un solvant" est représentée par l'expression (1 - quantité de résidu d'encre/masse totale d'encre) x 100, le solvant comprend l'eau et le solvant organique soluble dans l'eau contenu dans l'encre, et la "quantité d'humidité contenue dans le résidu d'encre" est représentée par l'expression (quantité d'humidité absorbée/quantité totale de résidu d'encre qui présente l'humidité absorbée) x 100,
dans lequel le support d'enregistrement comprend un support, et une couche de revêtement appliquée sur au moins une surface du support, la quantité d'eau purifiée transférée vers le support d'enregistrement sur une période de contact de 100 ms mesurée par un dispositif de mesure d'absorption à balayage dynamique est de 2 ml/$m^2$ à 35 ml/$m^2$ et la quantité d'eau purifiée transférée vers le support d'enregistrement sur une période de contact de 400 ms mesurée par le dispositif de mesure d'absorption à balayage dynamique est de 3 ml/$m^2$ à 40 ml/$m^2$.

FIG. 1

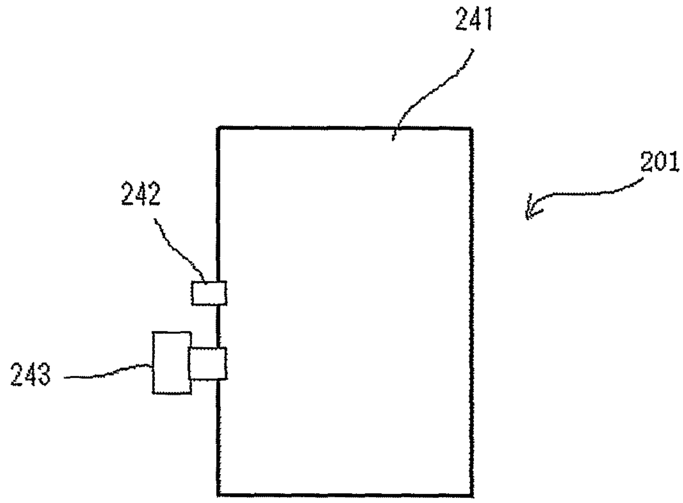


FIG. 2

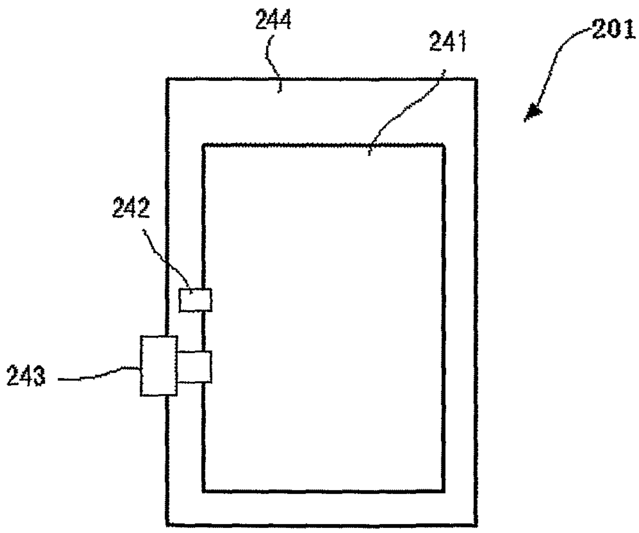

FIG. 3

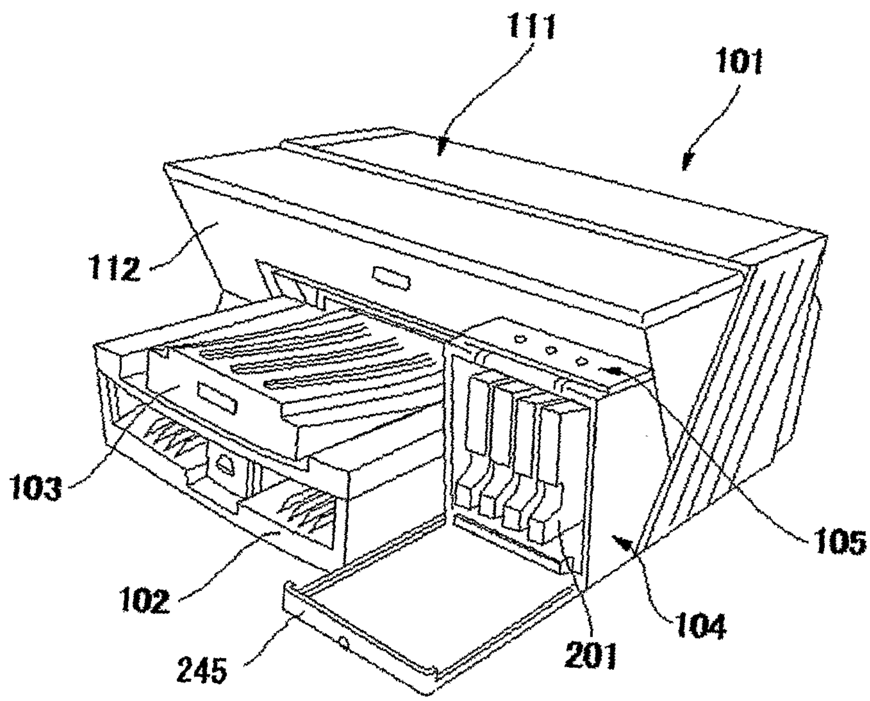

FIG. 4

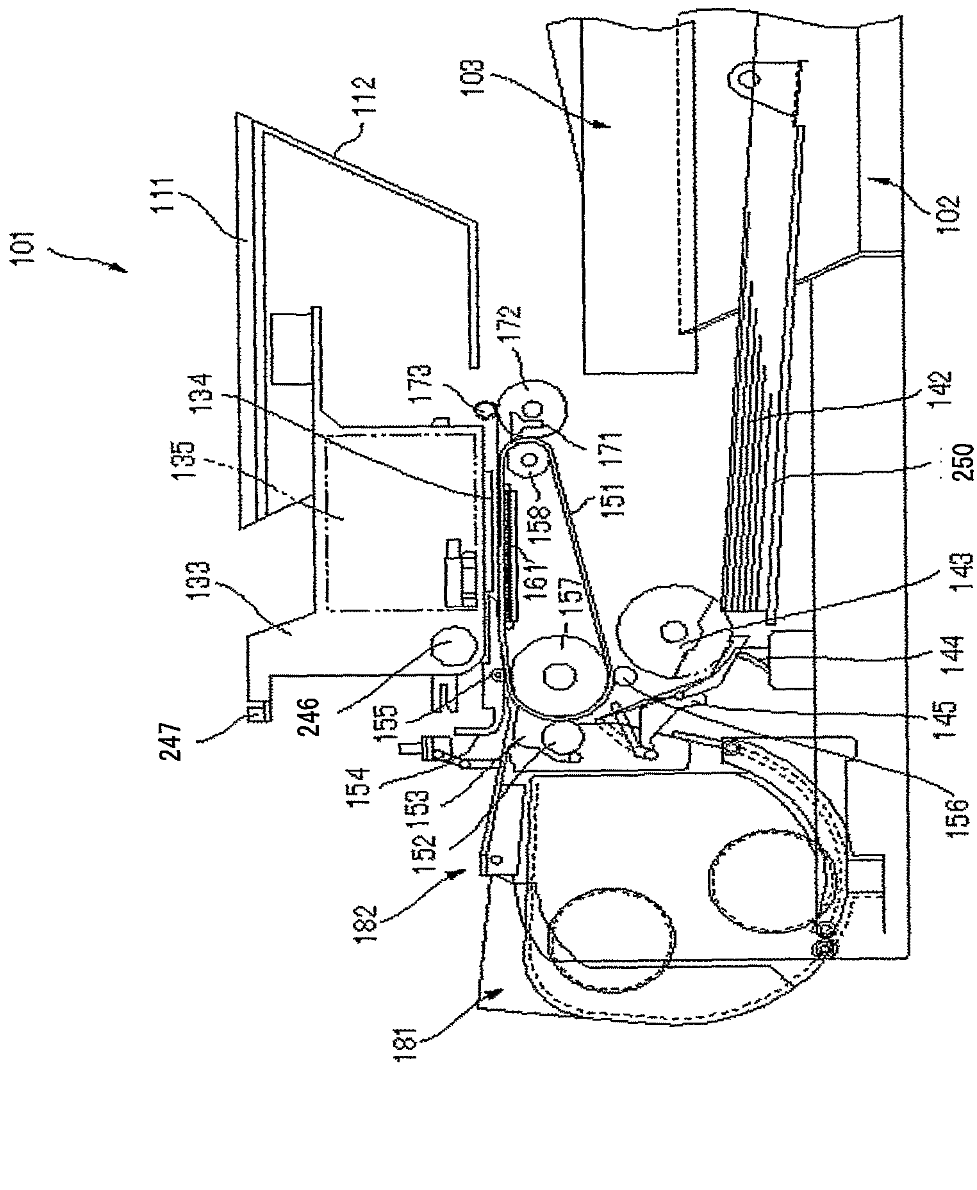
101
111
112
103
102
172
173
134
135
133
171
142
250
151
158
161
157
143
144
145
246
155
247
154
153
156
152
182
181

FIG. 5

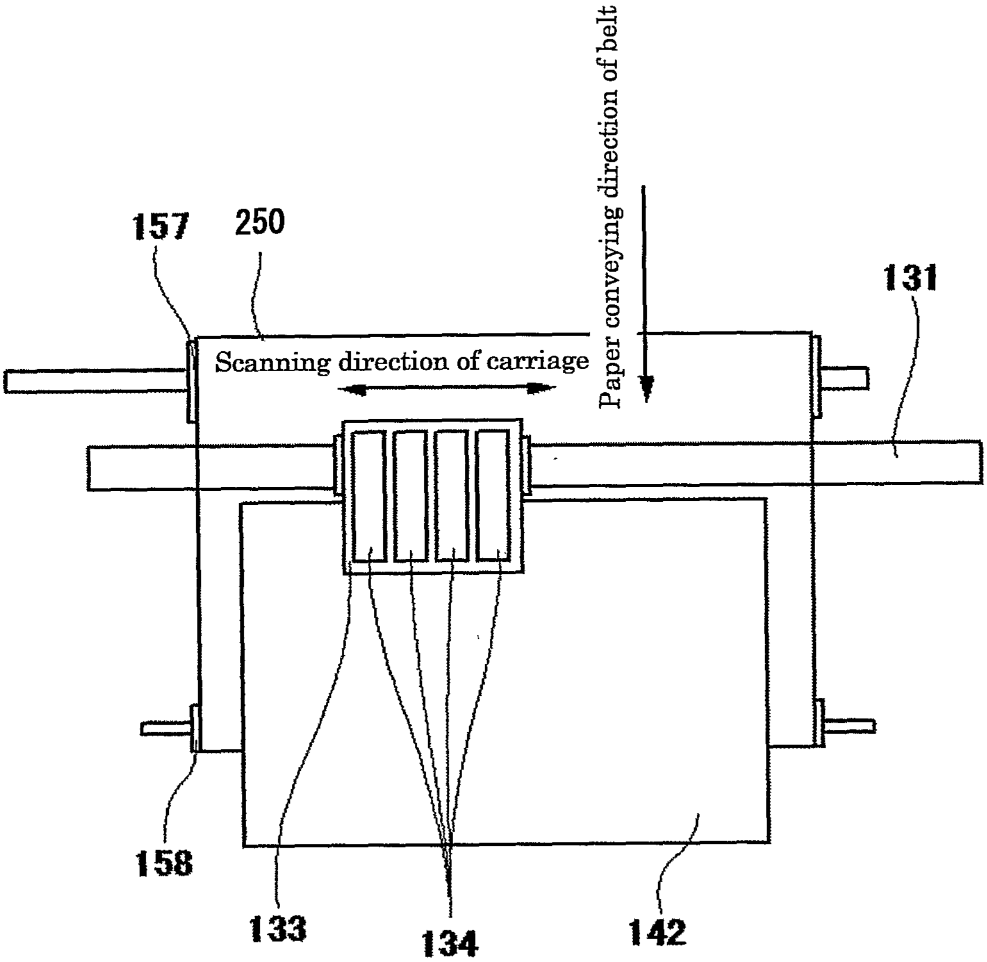

157
250
Scanning direction of carriage
Paper conveying direction of belt
131
158
133
134
142

FIG. 6

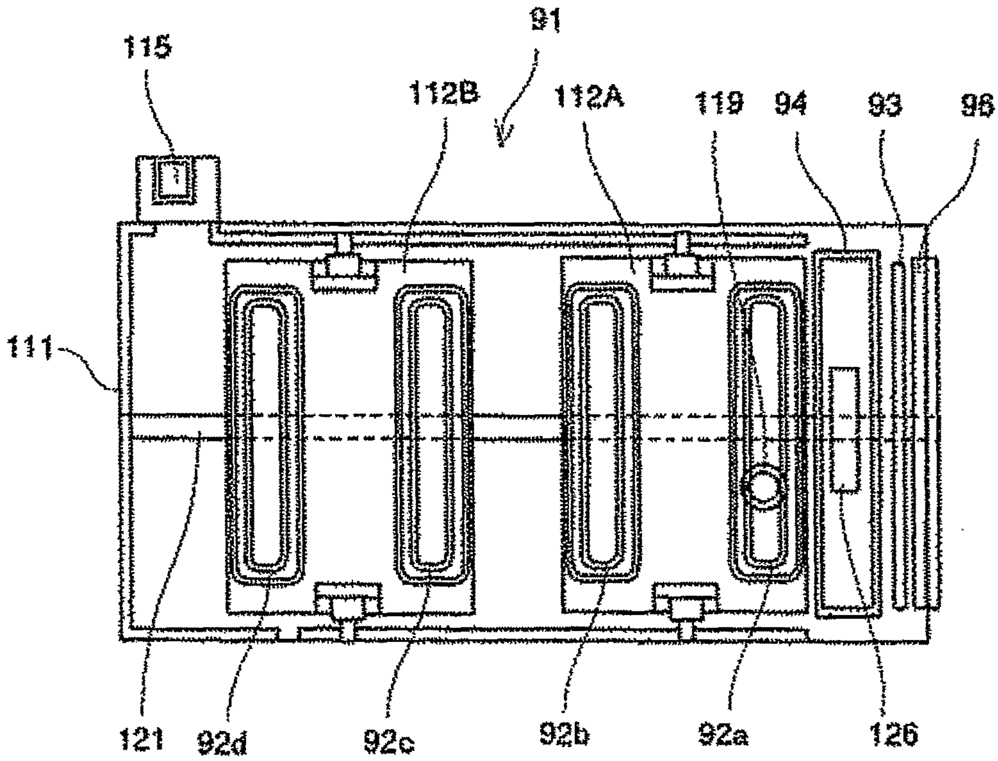

FIG. 7

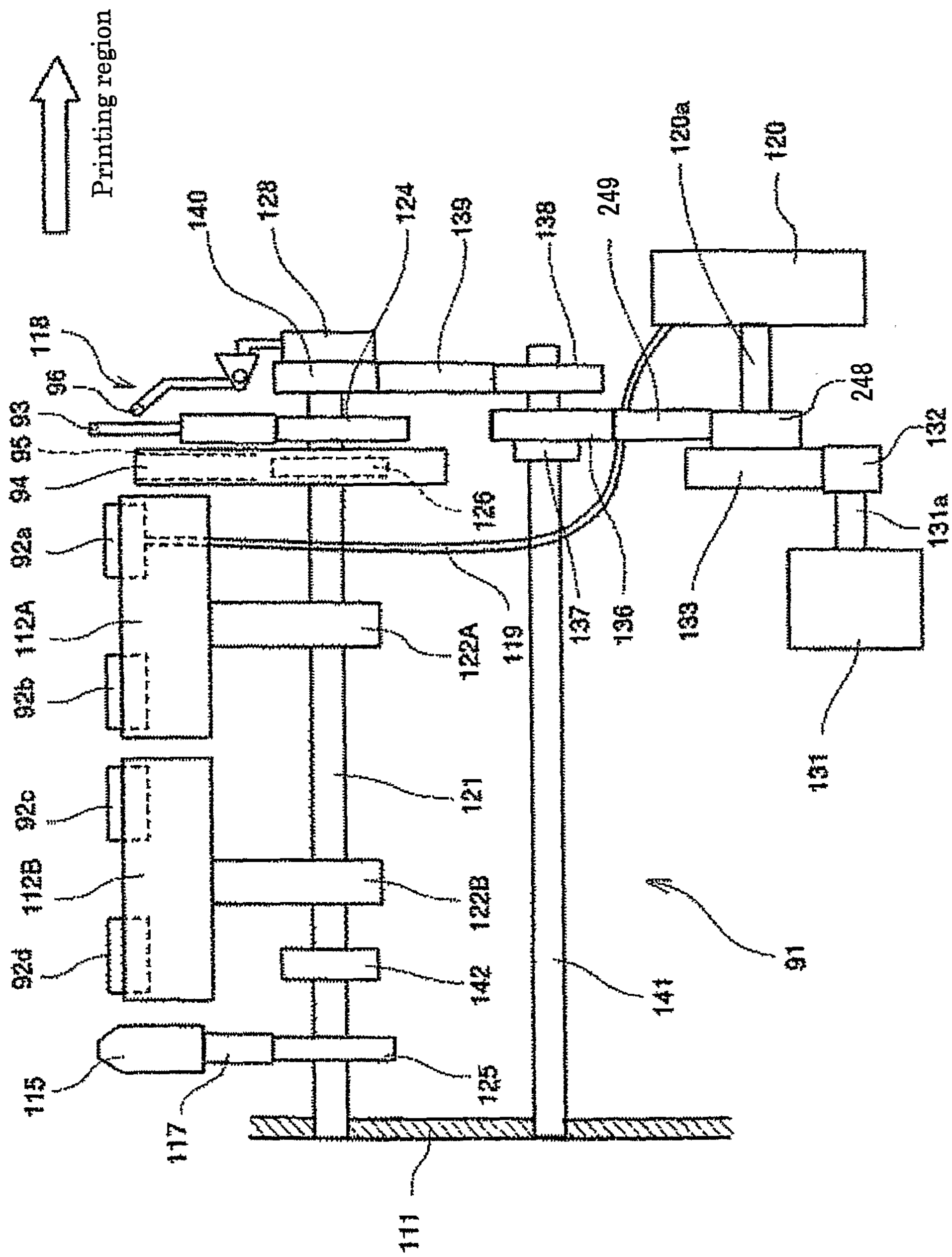
Printing region
140
128
124
139
138
249
120a
120
118
96
93
95
94
92a
112A
92b
92c
112B
92d
115
117
111
125
142
141
121
122B
122A
119
126
137
136
133
248
132
131a
131
91

FIG. 8

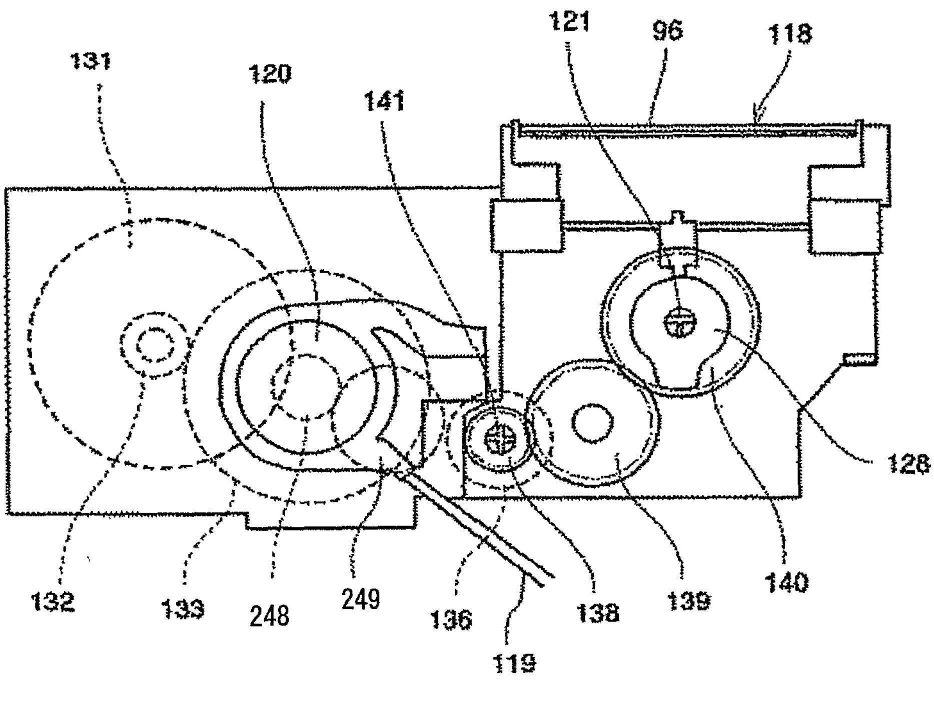

FIG. 9

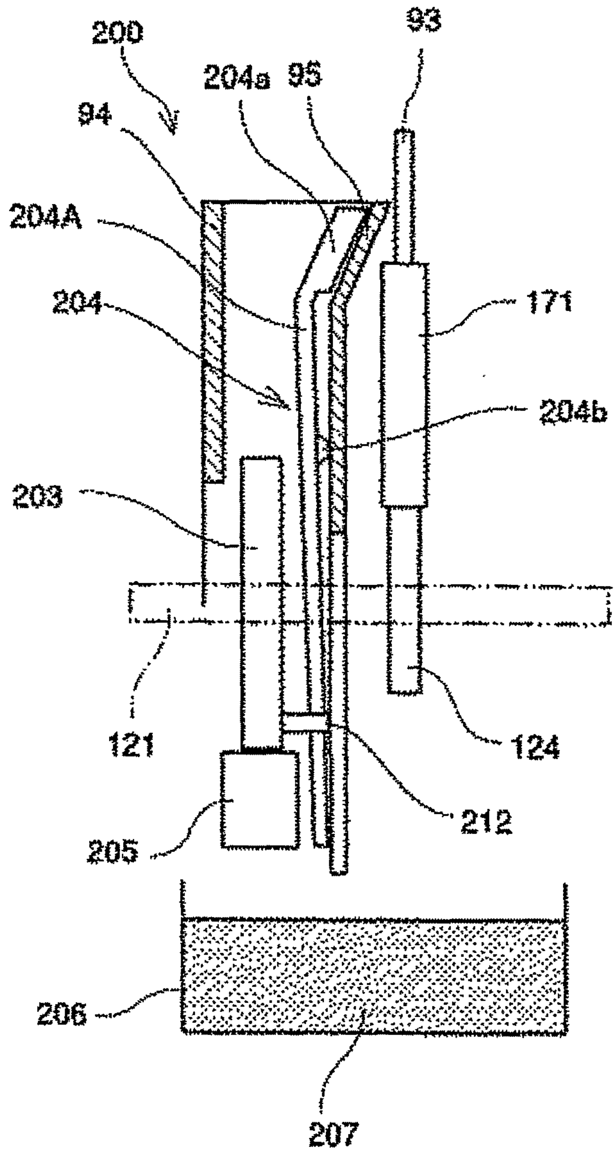

FIG. 10

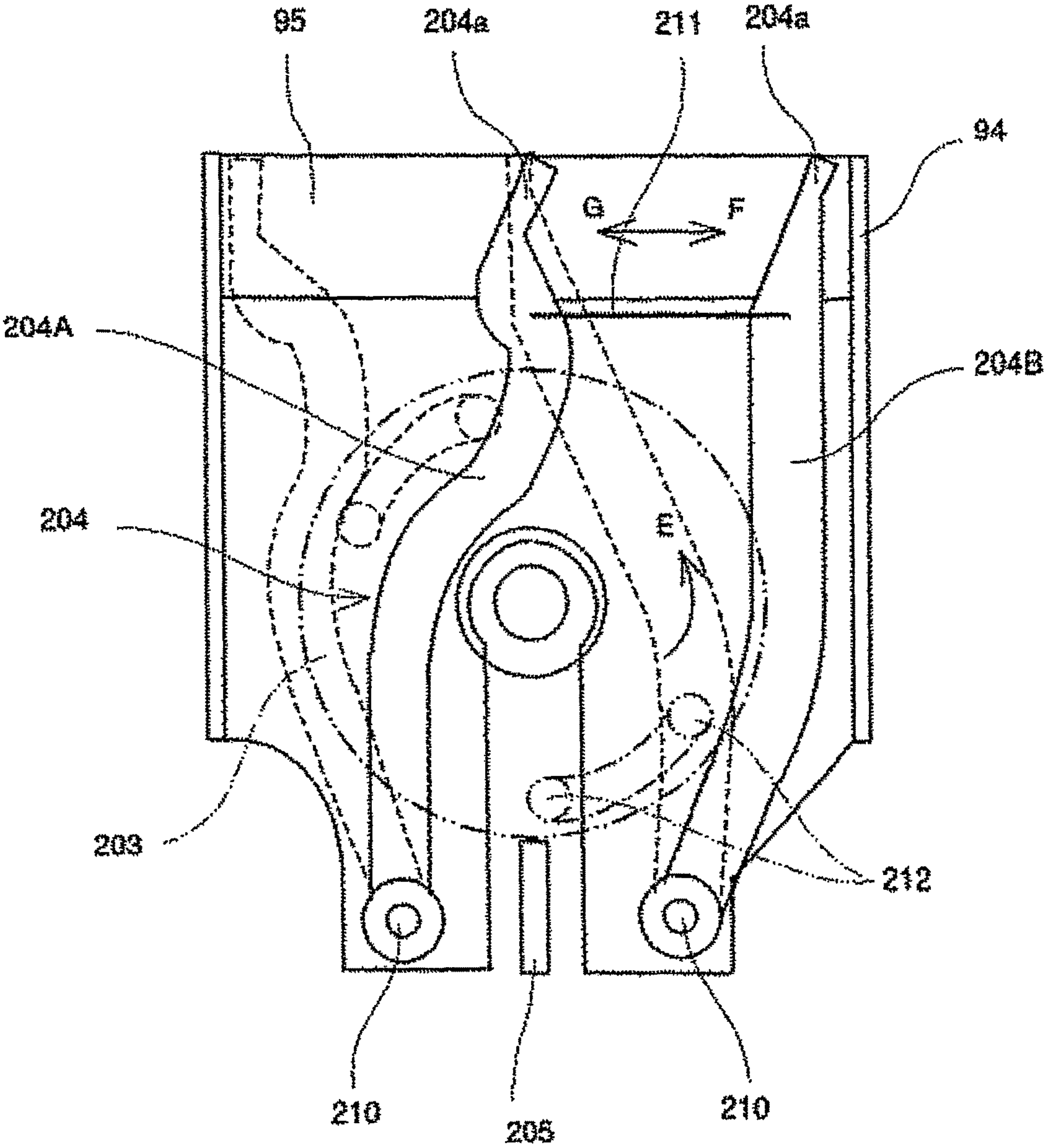

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002337449 A
- JP 2000095983 A
- JP 2007039680 A
- JP 2006348125 A
- JP 2006016412 A
- JP 2000053897 A
- JP 2001139849 A
- JP 2051734 A
- JP 61059911 A
- JP 6071882 A


### Non-patent literature cited in the description


- DSA. Japan TAPPI Journal. Shigenori Kuga, May 1994, vol. 48, 88-92